# EUROPEAN PATENT SPECIFICATION

(11) **EP 3 448 043 B1**
(45) Date of publication and mention of the grant of the patent: **30.12.2020**
(21) Application number: 17786207.5
(22) Date of filing: 21.04.2017
(51) Int. Cl.: H04N 21/2343, H04N 21/2381

(54) **BROADCAST SIGNAL TRANSMISSION/RECEPTION METHOD AND APPARATUS FOR PROVIDING HIGH-QUALITY MEDIA IN DASH-BASED SYSTEM**
RUNDFUNKSIGNALSENDE-/-EMPFANGSVERFAHREN UND -VORRICHTUNG ZUR BEREITSTELLUNG VON QUALITATIV HOCHWERTIGEN MEDIEN IN VORRICHTUNG HOCHWERTIGEN MEDIEN IN DASH-BASIERTEM SYSTEM
PROCÉDÉ ET APPAREIL D'ÉMISSION/RÉCEPTION D'UN SIGNAL DE DIFFUSION POUR FOURNIR DES MÉDIA DE HAUTE QUALITÉ DANS UN SYSTÈME BASÉ SUR DASH

(30) Priority: 22.04.2016 US 201662326022 P; 25.04.2016 US 201662327429 P; 07.02.2017 US 201762455604 P
(43) Date of publication of application: 27.02.2019
(73) Proprietor: LG Electronics Inc., Seoul 07336 (KR)
(72) Inventor: PARK, Jonghwan, Seoul 06772 (KR); SUH, Jongyeul, Seoul 06772 (KR); OH, Sejin, Seoul 06772 (KR); YOON, Joonhee, Seoul 06772 (KR); HWANG, Soojin, Seoul 06772 (KR)
(74) Representative: Plasseraud IP
(86) International application number: PCT/KR2017/004282
(87) International publication number: WO 2017/183939

(56) References cited:
- WO-A1-2014/107255
- WO-A1-2015/072754
- WO-A2-2013/025035
- KR-A- 20100 034 990
- US-A1- 2012 038 782
- "Digital Video Broadcasting (DVB); MPEG-DASH Profile for Transport of ISO BMFF Based DVB Services over IP Based Networks DVB Document A168", , 1 July 2014 (2014-07-01), XP055132828, Retrieved from the Internet: URL:https://www.dvb.org/resources/public/s tandards/a168_dvb-dash.pdf [retrieved on 2014-08-01]
- N/a: "Guidelines for Implementation: DASH-IF Interoperability Points v3.0", DASH Industry Forum, 7 April 2015 (2015-04-07), pages 1-154, XP055333561, Retrieved from the Internet: URL:http://dashif.org/w/2015/04/DASH-IF-IO P-v3.0.pdf [retrieved on 2017-01-10]
- LASSERRE S ET AL: "Modulation-based HDR video coding with SDR backward compatibility", 21. JCT-VC MEETING; 19-6-2015 - 26-6-2015; WARSAW; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-U0085, 9 June 2015 (2015-06-09), XP030117510,
- FRANCOIS EDOUARD ET AL: "High Dynamic Range and Wide Color Gamut Video Coding in HEVC: Status and Potential Future Enhancements", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 26, no. 1, 1 January 2016 (2016-01-01), pages 63-75, XP011592169, ISSN: 1051-8215, DOI: 10.1109/TCSVT.2015.2461911 [retrieved on 2016-01-05]
- RUSANOVSKYY DMYTRO ET AL: "High Dynamic Range Video Coding with Backward Compatibility", 2016 DATA COMPRESSION CONFERENCE (DCC), IEEE, 30 March 2016 (2016-03-30), pages 289-298, XP033027711, DOI: 10.1109/DCC.2016.78 [retrieved on 2016-12-15]

## Description

### [Technical Field]

The present invention relates to an apparatus for transmitting a broadcast signal, an apparatus for receiving a broadcast signal, and methods of transmitting and receiving a broadcast signal.

### [Background Art]

An ultra-high definition (UHD) high dynamic range (HDR) content service (or HDR service) may provide a greater sense of presence by representing brightness that could not be expressed in legacy high definition (HD) content. To provide such an HDR service over an Internet protocol (IP) network, a dynamic adaptive streaming over HTTP (DASH) protocol may be used to receive more adaptive and flexible content.

### [Disclosure]

### [Technical Problem]

To provide an HDR service in an MPEG DASH-based system, a new media presentation description (MPD) is needed. Upon transmitting the HDR service through one or more layers, a method of signaling a reference relationship between layers is needed.

It is necessary to define matrix coefficient (Matrix_coefficient) information and color remapping information, for color conversion in a DASH MPD.

A method of enabling even a receiver that has received a broadcast service through a legacy multichannel video program distributor (MVPD) to receive a broadcast service transmitted through a next-generation broadcast stream is required.

### [Technical Solution]

The present invention provides an HDR service by defining an MPD for the HDR service. Further, the present invention provides the HDR service by defining a reference relationship between layers configuring the HDR service in the MPD.

The present invention provides a wide color gamut (WCG) by newly defining color conversion information in a DASH MPD.

The present invention enables a legacy receiver to receive a broadcast service provided through a next-generation broadcast stream by a procedure of converting the next-generation broadcast steam into a legacy broadcast stream.

### [Advantageous Effects]

The present invention may provide an HDR service and a WCG service in a DASH-based system.

The present invention may cause a legacy receiver to receive a broadcast service provided through a next-generation broadcast stream.

### [Description of Drawings]

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram showing a protocol stack according to an embodiment of the present invention;
FIG. 2 is a diagram showing a service discovery procedure according to one embodiment of the present invention;
FIG. 3 is a diagram showing a low level signaling (LLS) table and a service list table (SLT) according to one embodiment of the present invention;
FIG. 4 is a diagram showing a USBD and an S-TSID delivered through ROUTE according to one embodiment of the present invention;
FIG. 5 is a diagram showing a USBD delivered through an MMT according to one embodiment of the present invention;
FIG. 6 is a diagram showing link layer operation according to one embodiment of the present invention;
FIG. 7 is a diagram showing a link mapping table (LMT) according to one embodiment of the present invention;
FIG. 8 is a diagram showing a structure of a broadcast signal transmission device of a next-generation broadcast service according to an embodiment of the present invention;
FIG. 9 is a writing operation of a time interleaver according to an embodiment of the present invention;
FIG. 10 is a block diagram of an interleaving address generator including a main-PRBS generator and a sub-PRBS generator according to each FFT mode, included in the frequency interleaver, according to an embodiment of the present invention;
FIG. 11 is a diagram showing a structure of a media presentation description (MPD) according to an embodiment of the present invention.
FIG. 12 is a diagram showing an MPEG DASH-based signal transmission/reception system model according to an embodiment of the present invention.
FIG. 13 is a diagram showing arrangement of adaptationsets for providing an HDR service supporting backward compatibility according to an embodiment of the present invention.
FIG. 14 is a diagram showing a structure of an MPEG DASH-based receiver according to an embodiment of the present invention.
FIG. 15 is a diagram showing a structure of an MPD and a structure of a segment file according to an embodiment of the present invention.
FIG. 16 is a diagram showing common attributes and common elements in an MPD according to an embodiment of the present invention.
FIG. 17 is a diagram showing a structure of an MPD for signaling an HDR service supporting backward compatibility according to an embodiment of the present invention.
FIG. 18 is a diagram showing a structure of an MPD for signaling an HDR service supporting backward compatibility according to another embodiment of the present invention.
FIG. 19 is a diagram showing a configuration of a representation element according to an embodiment of the present invention.
FIG. 20 is a diagram illustrating a configuration of a Contentcomponent element according to an embodiment of the present invention.
FIG. 21 is a diagram showing a configuration of a Role element according to an embodiment of the present invention.
FIG. 22 is a diagram showing a method of signaling an HDR service supporting backward compatibility using an MPD according to an embodiment of the present invention (scenario 1).
FIG. 23 is a diagram showing a method of signaling an HDR service supporting backward compatibility using an MPD according to another embodiment of the present invention (scenario 2).
FIG. 24 is a diagram showing a method of signaling an HDR service supporting backward compatibility using an MPD according to another embodiment of the present invention (scenario 31).
FIG. 25 is a diagram showing a method of signaling an HDR service supporting backward compatibility using an MPD according to another embodiment of the present invention (scenario 32).
FIG. 26 is a diagram showing a structure of an MPEG DASH-based receiver according to another embodiment of the present invention.
FIG. 27 is a diagram showing a color conversion procedure according to an embodiment of the present invention.
FIG. 28 is a diagram showing matrix coefficient information according to an embodiment of the present invention.
FIG. 29 shows matrix coefficient information defined in an MPD according to an embodiment of the present invention.
FIG. 30 is a diagram showing a color remapping procedure according to an embodiment of the present invention.
FIG. 31 illustrates color remapping information defined in an MPD according to an embodiment of the present invention.
FIG. 32 shows an embodiment configuring color remapping information (CRI)-based HDR signaling in a DASH MPD.
FIG. 33 is a diagram showing DVB DASH constraints according to an embodiment of the present invention.
FIG. 34 is a diagram showing a hybrid broadcast reception apparatus according to an embodiment of the present invention.
FIG. 35 is a block diagram of a receiver according to an embodiment of the present invention.
FIG. 36 is a diagram showing a structure of a broadcast transmission/reception system according to an embodiment of the present invention.
FIG. 37 is a diagram showing an embodiment of converting an ATSC 3.0 stream into an ATSC 1.0 stream.
FIG. 38 is a diagram showing a structure of an MPEG DASH MPD according to an embodiment of the present invention.
FIG. 39 is a diagram showing values of @schemeIdUri of an EssentialProperty descriptor for providing an HDR service according to an embodiment of the present invention.
FIG. 40 is a diagram showing a service initialization procedure in an ATSC 1.0 system or an MPEG 2 system according to an embodiment of the present invention.
FIG. 41 is a diagram showing a configuration of an HEVC descriptor according to an embodiment of the present invention.
FIG. 42 is a diagram showing a description of an HDR_WCG_idc field according to an embodiment of the present invention.
FIG. 43 is a diagram showing a broadcast signal transmission method according to an embodiment of the present invention.
FIG. 44 is a diagram showing a broadcast signal transmission method according to another embodiment of the present invention.
FIG. 45 is a diagram showing a broadcast signal reception method according to an embodiment of the present invention.
FIG. 46 is a diagram showing a configuration of a broadcast signal transmission apparatus according to an embodiment of the present invention.
FIG. 47 is a diagram showing a configuration of a broadcast signal reception apparatus according to an embodiment of the present invention.

### [Best Mode]

The present invention provides apparatuses and methods for transmitting and receiving broadcast signals for future broadcast services. Future broadcast services according to an embodiment of the present invention include a terrestrial broadcast service, a mobile broadcast service, an ultra-high definition television (UHDTV) service, etc. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

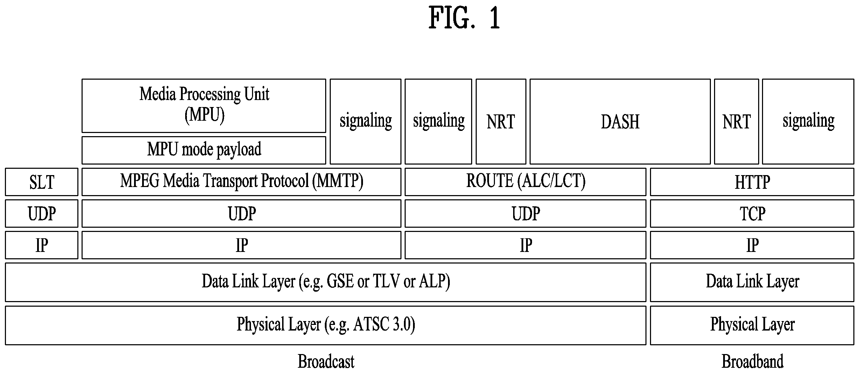

FIG. 1 is a diagram showing a protocol stack according to an embodiment of the present invention.

A service may be delivered to a receiver through a plurality of layers. First, a transmission side may generate service data. The service data may be processed for transmission at a delivery layer of the transmission side and the service data may be encoded into a broadcast signal and transmitted over a broadcast or broadband network at a physical layer.

Here, the service data may be generated in an ISO base media file format (BMFF). ISO BMFF media files may be used for broadcast/broadband network delivery, media encapsulation and/or synchronization format. Here, the service data is all data related to the service and may include service components configuring a linear service, signaling information thereof, non real time (NRT) data and other files.

The delivery layer will be described. The delivery layer may provide a function for transmitting service data. The service data may be delivered over a broadcast and/or broadband network.

Broadcast service delivery may include two methods.

As a first method, service data may be processed in media processing units (MPUs) based on MPEG media transport (MMT) and transmitted using an MMT protocol (MMTP). In this case, the service data delivered using the MMTP may include service components for a linear service and/or service signaling information thereof.

As a second method, service data may be processed into DASH segments and transmitted using real time object delivery over unidirectional transport (ROUTE), based on MPEG DASH. In this case, the service data delivered through the ROUTE protocol may include service components for a linear service, service signaling information thereof and/or NRT data. That is, the NRT data and non-timed data such as files may be delivered through ROUTE.

Data processed according to MMTP or ROUTE protocol may be processed into IP packets through a UDP/IP layer. In service data delivery over the broadcast network, a service list table (SLT) may also be delivered over the broadcast network through a UDP/IP layer. The SLT may be delivered in a low level signaling (LLS) table. The SLT and LLS table will be described later.

IP packets may be processed into link layer packets in a link layer. The link layer may encapsulate various formats of data delivered from a higher layer into link layer packets and then deliver the packets to a physical layer. The link layer will be described later.

In hybrid service delivery, at least one service element may be delivered through a broadband path. In hybrid service delivery, data delivered over broadband may include service components of a DASH format, service signaling information thereof and/or NRT data. This data may be processed through HTTP/TCP/IP and delivered to a physical layer for broadband transmission through a link layer for broadband transmission.

The physical layer may process the data received from the delivery layer (higher layer and/or link layer) and transmit the data over the broadcast or broadband network. A detailed description of the physical layer will be given later.

The service will be described. The service may be a collection of service components displayed to a user, the components may be of various media types, the service may be continuous or intermittent, the service may be real time or non real time, and a real-time service may include a sequence of TV programs.

The service may have various types. First, the service may be a linear audio/video or audio service having app based enhancement. Second, the service may be an app based service, reproduction/configuration of which is controlled by a downloaded application. Third, the service may be an ESG service for providing an electronic service guide (ESG). Fourth, the service may be an emergency alert (EA) service for providing emergency alert information.

When a linear service without app based enhancement is delivered over the broadcast network, the service component may be delivered by (1) one or more ROUTE sessions or (2) one or more MMTP sessions.

When a linear service having app based enhancement is delivered over the broadcast network, the service component may be delivered by (1) one or more ROUTE sessions or (2) zero or more MMTP sessions. In this case, data used for app based enhancement may be delivered through a ROUTE session in the form of NRT data or other files. In one embodiment of the present invention, simultaneous delivery of linear service components (streaming media components) of one service using two protocols may not be allowed.

When an app based service is delivered over the broadcast network, the service component may be delivered by one or more ROUTE sessions. In this case, the service data used for the app based service may be delivered through the ROUTE session in the form of NRT data or other files.

Some service components of such a service, some NRT data, files, etc. may be delivered through broadband (hybrid service delivery).

That is, in one embodiment of the present invention, linear service components of one service may be delivered through the MMT protocol. In another embodiment of the present invention, the linear service components of one service may be delivered through the ROUTE protocol. In another embodiment of the present invention, the linear service components of one service and NRT data (NRT service components) may be delivered through the ROUTE protocol. In another embodiment of the present invention, the linear service components of one service may be delivered through the MMT protocol and the NRT data (NRT service components) may be delivered through the ROUTE protocol. In the above-described embodiments, some service components of the service or some NRT data may be delivered through broadband. Here, the app based service and data regarding app based enhancement may be delivered over the broadcast network according to ROUTE or through broadband in the form of NRT data. NRT data may be referred to as locally cached data.

Each ROUTE session includes one or more LCT sessions for wholly or partially delivering content components configuring the service. In streaming service delivery, the LCT session may deliver individual components of a user service, such as audio, video or closed caption stream. The streaming media is formatted into a DASH segment.

Each MMTP session includes one or more MMTP packet flows for delivering all or some of content components or an MMT signaling message. The MMTP packet flow may deliver a component formatted into MPU or an MMT signaling message.

For delivery of an NRT user service or system metadata, the LCT session delivers a file based content item. Such content files may include consecutive (timed) or discrete (non-timed) media components of the NRT service or metadata such as service signaling or ESG fragments. System metadata such as service signaling or ESG fragments may be delivered through the signaling message mode of the MMTP.

A receiver may detect a broadcast signal while a tuner tunes to frequencies. The receiver may extract and send an SLT to a processing module. The SLT parser may parse the SLT and acquire and store data in a channel map. The receiver may acquire and deliver bootstrap information of the SLT to a ROUTE or MMT client. The receiver may acquire and store an SLS. USBD may be acquired and parsed by a signaling parser.

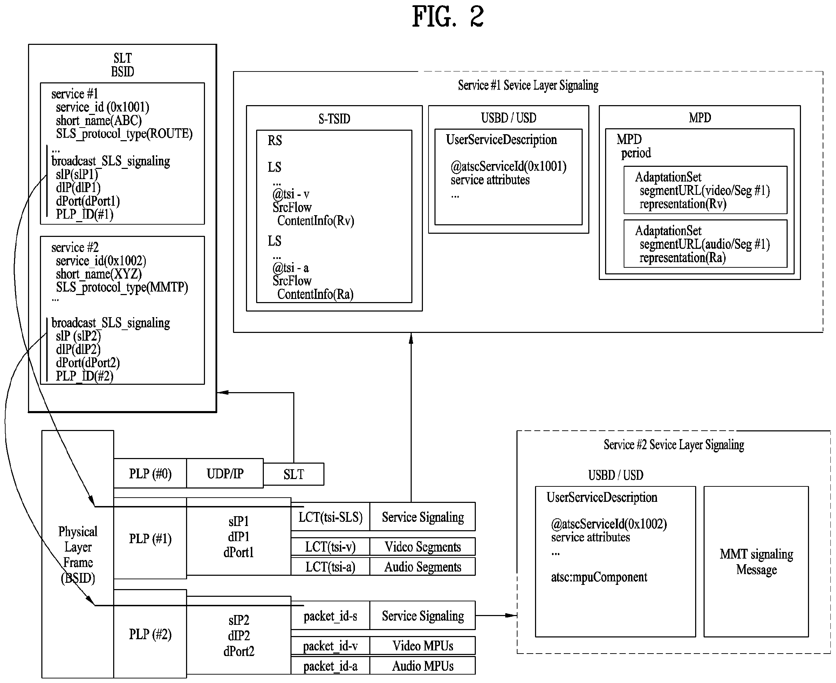

FIG. 2 is a diagram showing a service discovery procedure according to one embodiment of the present invention.

A broadcast stream delivered by a broadcast signal frame of a physical layer may carry low level signaling (LLS). LLS data may be carried through payload of IP packets delivered to a well-known IP address/port. This LLS may include an SLT according to type thereof. The LLS data may be formatted in the form of an LLS table. A first byte of every UDP/IP packet carrying the LLS data may be the start of the LLS table. Unlike the shown embodiment, an IP stream for delivering the LLS data may be delivered to a PLP along with other service data.

The SLT may enable the receiver to generate a service list through fast channel scan and provides access information for locating the SLS. The SLT includes bootstrap information. This bootstrap information may enable the receiver to acquire service layer signaling (SLS) of each service. When the SLS, that is, service signaling information, is delivered through ROUTE, the bootstrap information may include an LCT channel carrying the SLS, a destination IP address of a ROUTE session including the LCT channel and destination port information. When the SLS is delivered through the MMT, the bootstrap information may include a destination IP address of an MMTP session carrying the SLS and destination port information.

In the shown embodiment, the SLS of service #1 described in the SLT is delivered through ROUTE and the SLT may include bootstrap information sIP1, dIP1 and dPort1 of the ROUTE session including the LCT channel delivered by the SLS. The SLS of service #2 described in the SLT is delivered through MMT and the SLT may include bootstrap information sIP2, dIP2 and dPort2 of the MMTP session including the MMTP packet flow delivered by the SLS.

The SLS is signaling information describing the properties of the service and may include receiver capability information for significantly reproducing the service or providing information for acquiring the service and the service component of the service. When each service has separate service signaling, the receiver acquires appropriate SLS for a desired service without parsing all SLSs delivered within a broadcast stream.

When the SLS is delivered through the ROUTE protocol, the SLS may be delivered through a dedicated LCT channel of a ROUTE session indicated by the SLT. In some embodiments, this LCT channel may be an LCT channel identified by tsi=0. In this case, the SLS may include a user service bundle description (USBD)/user service description (USD), service-based transport session instance description (S-TSID) and/or media presentation description (MPD).

Here, USBD/USD is one of SLS fragments and may serve as a signaling hub describing detailed description information of a service. The USBD may include service identification information, device capability information, etc. The USBD may include reference information (URI reference) of other SLS fragments (S-TSID, MPD, etc.). That is, the USBD/USD may reference the S-TSID and the MPD. In addition, the USBD may further include metadata information for enabling the receiver to decide a transmission mode (broadcast/broadband network). A detailed description of the USBD/USD will be given below.

The S-TSID is one of SLS fragments and may provide overall session description information of a transport session carrying the service component of the service. The S-TSID may provide the ROUTE session through which the service component of the service is delivered and/or transport session description information for the LCT channel of the ROUTE session. The S-TSID may provide component acquisition information of service components associated with one service. The S-TSID may provide mapping between DASH representation of the MPD and the tsi of the service component. The component acquisition information of the S-TSID may be provided in the form of the identifier of the associated DASH representation and tsi and may or may not include a PLP ID in some embodiments. Through the component acquisition information, the receiver may collect audio/video components of one service and perform buffering and decoding of DASH media segments. The S-TSID may be referenced by the USBD as described above. A detailed description of the S-TSID will be given below.

The MPD is one of SLS fragments and may provide a description of DASH media presentation of the service. The MPD may provide a resource identifier of media segments and provide context information within the media presentation of the identified resources. The MPD may describe DASH representation (service component) delivered over the broadcast network and describe additional DASH presentation delivered over broadband (hybrid delivery). The MPD may be referenced by the USBD as described above.

When the SLS is delivered through the MMT protocol, the SLS may be delivered through a dedicated MMTP packet flow of the MMTP session indicated by the SLT. In some embodiments, the packet_id of the MMTP packets delivering the SLS may have a value of 00. In this case, the SLS may include a USBD/USD and/or MMT packet (MP) table.

Here, the USBD is one of SLS fragments and may describe detailed description information of a service as in ROUTE. This USBD may include reference information (URI information) of other SLS fragments. The USBD of the MMT may reference an MP table of MMT signaling. In some embodiments, the USBD of the MMT may include reference information of the S-TSID and/or the MPD. Here, the S-TSID is for NRT data delivered through the ROUTE protocol. Even when a linear service component is delivered through the MMT protocol, NRT data may be delivered via the ROUTE protocol. The MPD is for a service component delivered over broadband in hybrid service delivery. The detailed description of the USBD of the MMT will be given below.

The MP table is a signaling message of the MMT for MPU components and may provide overall session description information of an MMTP session carrying the service component of the service. In addition, the MP table may include a description of an asset delivered through the MMTP session. The MP table is streaming signaling information for MPU components and may provide a list of assets corresponding to one service and location information (component acquisition information) of these components. The detailed description of the MP table may be defined in the MMT or modified. Here, the asset is a multimedia data entity, is combined by one unique ID, and may mean a data entity used to one multimedia presentation. The asset may correspond to service components configuring one service. A streaming service component (MPU) corresponding to a desired service may be accessed using the MP table. The MP table may be referenced by the USBD as described above.

The other MMT signaling messages may be defined. Additional information associated with the service and the MMTP session may be described by such MMT signaling messages.

The ROUTE session is identified by a source IP address, a destination IP address and a destination port number. The LCT session is identified by a unique transport session identifier (TSI) within the range of a parent ROUTE session. The MMTP session is identified by a destination IP address and a destination port number. The MMTP packet flow is identified by a unique packet_id within the range of a parent MMTP session.

In case of ROUTE, the S-TSID, the USBD/USD, the MPD or the LCT session delivering the same may be referred to as a service signaling channel. In case of MMTP, the USBD/UD, the MMT signaling message or the packet flow delivering the same may be referred to as a service signaling channel.

Unlike the shown embodiment, one ROUTE or MMTP session may be delivered over a plurality of PLPs. That is, one service may be delivered through one or more PLPs. Unlike the shown embodiment, in some embodiments, components configuring one service may be delivered through different ROUTE sessions. In addition, in some embodiments, components configuring one service may be delivered through different MMTP sessions. In some embodiments, components configuring one service may be divided and delivered in a ROUTE session and an MMTP session. Although not shown, components configuring one service may be delivered through broadband (hybrid delivery).

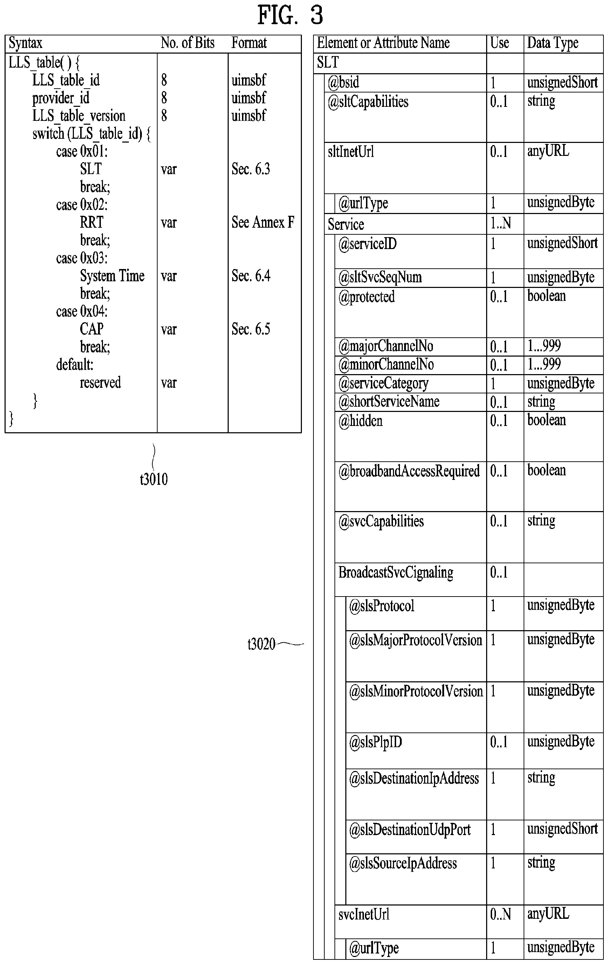

FIG. 3 is a diagram showing a low level signaling (LLS) table and a service list table (SLT) according to one embodiment of the present invention.

One embodiment t3010 of the LLS table may include information according to an LLS_table_id field, a provider_id field, an LLS_table_version field and/or an LLS_table_id field.

The LLS_table_id field may identify the type of the LLS table, and the provider_id field may identify a service provider associated with services signaled by the LLS table. Here, the service provider is a broadcaster using all or some of the broadcast streams and the provider_id field may identify one of a plurality of broadcasters which is using the broadcast streams. The LLS_table_version field may provide the version information of the LLS table.

According to the value of the LLS_table_id field, the LLS table may include one of the above-described SLT, a rating region table (RRT) including information on a content advisory rating, SystemTime information for providing information associated with a system time, a common alert protocol (CAP) message for providing information associated with emergency alert. In some embodiments, the other information may be included in the LLS table.

One embodiment t3020 of the shown SLT may include an @bsid attribute, an @sltCapabilities attribute, an sltInetUrl element and/or a Service element. Each field may be omitted according to the value of the shown Use column or a plurality of fields may be present.

The @bsid attribute may be the identifier of a broadcast stream. The @sltCapabilities attribute may provide capability information required to decode and significantly reproduce all services described in the SLT. The sltInetUrl element may provide base URL information used to obtain service signaling information and ESG for the services of the SLT over broadband. The sltInetUrl element may further include an @urlType attribute, which may indicate the type of data capable of being obtained through the URL.

The Service element may include information on services described in the SLT, and the Service element of each service may be present. The Service element may include an @serviceId attribute, an @sltSvcSeqNum attribute, an @protected attribute, an @majorChannelNo attribute, an @minorChannelNo attribute, an @serviceCategory attribute, an @shortServiceName attribute, an @hidden attribute, an @broadbandAccessRequired attribute, an @svcCapabilities attribute, a BroadcastSvcSignaling element and/or an svcInetUrl element.

The @serviceId attribute is the identifier of the service and the @sltSvcSeqNum attribute may indicate the sequence number of the SLT information of the service. The @protected attribute may indicate whether at least one service component necessary for significant reproduction of the service is protected. The @majorChannelNo attribute and the @minorChannelNo attribute may indicate the major channel number and minor channel number of the service, respectively.

The @serviceCategory attribute may indicate the category of the service. The category of the service may include a linear A/V service, a linear audio service, an app based service, an ESG service, an EAS service, etc. The @shortServiceName attribute may provide the short name of the service. The @hidden attribute may indicate whether the service is for testing or proprietary use. The @broadbandAccessRequired attribute may indicate whether broadband access is necessary for significant reproduction of the service. The @svcCapabilities attribute may provide capability information necessary for decoding and significant reproduction of the service.

The BroadcastSvcSignaling element may provide information associated with broadcast signaling of the service. This element may provide information such as location, protocol and address with respect to signaling over the broadcast network of the service. Details thereof will be described below.

The svcInetUrl element may provide URL information for accessing the signaling information of the service over broadband. The sltInetUrl element may further include an @urlType attribute, which may indicate the type of data capable of being obtained through the URL.

The above-described BroadcastSvcSignaling element may include an @slsProtocol attribute, an @slsMajorProtocolVersion attribute, an @slsMinorProtocolVersion attribute, an @slsPlpId attribute, an @slsDestinationIpAddress attribute, an @slsDestinationUdpPort attribute and/or an @slsSourceIpAddress attribute.

The @slsProtocol attribute may indicate the protocol used to deliver the SLS of the service (ROUTE, MMT, etc.). The @slsMajorProtocolVersion attribute and the @slsMinorProtocolVersion attribute may indicate the major version number and minor version number of the protocol used to deliver the SLS of the service, respectively.

The @slsPlpId attribute may provide a PLP identifier for identifying the PLP delivering the SLS of the service. In some embodiments, this field may be omitted and the PLP information delivered by the SLS may be checked using a combination of the information of the below-described LMT and the bootstrap information of the SLT.

The @slsDestinationIpAddress attribute, the @slsDestinationUdpPort attribute and the @slsSourceIpAddress attribute may indicate the destination IP address, destination UDP port and source IP address of the transport packets delivering the SLS of the service, respectively. These may identify the transport session (ROUTE session or MMTP session) delivered by the SLS. These may be included in the bootstrap information.

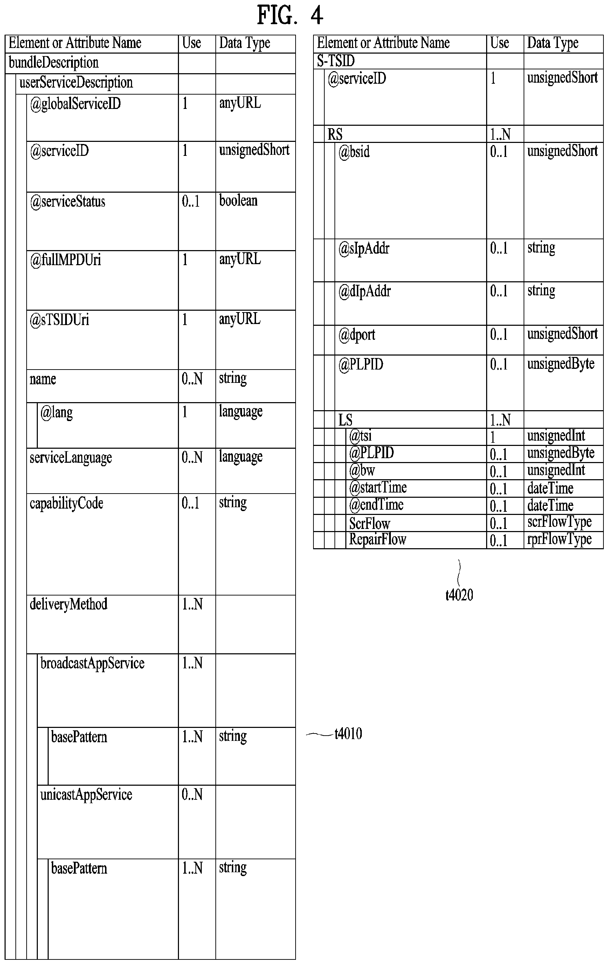

FIG. 4 is a diagram showing a USBD and an S-TSID delivered through ROUTE according to one embodiment of the present invention.

One embodiment t4010 of the shown USBD may have a bundleDescription root element. The bundleDescription root element may have a userServiceDescription element. The userServiceDescription element may be an instance of one service.

The userServiceDescription element may include an @globalServiceID attribute, an @serviceId attribute, an @serviceStatus attribute, an @fullMPDUri attribute, an @sTSIDUri attribute, a name element, a serviceLanguage element, a capabilityCode element and/or a deliveryMethod element. Each field may be omitted according to the value of the shown Use column or a plurality of fields may be present.

The @globalServiceID attribute is the globally unique identifier of the service and may be used for link with ESG data (Service@globalServiceID). The @serviceId attribute is a reference corresponding to the service entry of the SLT and may be equal to the service ID information of the SLT. The @serviceStatus attribute may indicate the status of the service. This field may indicate whether the service is active or inactive.

The @fullMPDUri attribute may reference the MPD fragment of the service. The MPD may provide a reproduction description of a service component delivered over the broadcast or broadband network as described above. The @sTSIDUri attribute may reference the S-TSID fragment of the service. The S-TSID may provide parameters associated with access to the transport session carrying the service as described above.

The name element may provide the name of the service. This element may further include an @lang attribute and this field may indicate the language of the name provided by the name element. The serviceLanguage element may indicate available languages of the service. That is, this element may arrange the languages capable of being provided by the service.

The capabilityCode element may indicate capability or capability group information of a receiver necessary to significantly reproduce the service. This information is compatible with capability information format provided in service announcement.

The deliveryMethod element may provide transmission related information with respect to content accessed over the broadcast or broadband network of the service. The deliveryMethod element may include a broadcastAppService element and/or a unicastAppService element. Each of these elements may have a basePattern element as a sub element.

The broadcastAppService element may include transmission associated information of the DASH representation delivered over the broadcast network. The DASH representation may include media components over all periods of the service presentation.

The basePattern element of this element may indicate a character pattern used for the receiver to perform matching with the segment URL. This may be used for a DASH client to request the segments of the representation. Matching may imply delivery of the media segment over the broadcast network.

The unicastAppService element may include transmission related information of the DASH representation delivered over broadband. The DASH representation may include media components over all periods of the service media presentation.

The basePattern element of this element may indicate a character pattern used for the receiver to perform matching with the segment URL. This may be used for a DASH client to request the segments of the representation. Matching may imply delivery of the media segment over broadband.

One embodiment t4020 of the shown S-TSID may have an S-TSID root element. The S-TSID root element may include an @serviceId attribute and/or an RS element. Each field may be omitted according to the value of the shown Use column or a plurality of fields may be present.

The @serviceId attribute is the identifier of the service and may reference the service of the USBD/USD. The RS element may describe information on ROUTE sessions through which the service components of the service are delivered. According to the number of ROUTE sessions, a plurality of elements may be present. The RS element may further include an @bsid attribute, an @sIpAddr attribute, an @dIpAddr attribute, an @dport attribute, an @PLPID attribute and/or an LS element.

The @bsid attribute may be the identifier of a broadcast stream in which the service components of the service are delivered. If this field is omitted, a default broadcast stream may be a broadcast stream including the PLP delivering the SLS of the service. The value of this field may be equal to that of the @bsid attribute.

The @sIpAddr attribute, the @dIpAddr attribute and the @dport attribute may indicate the source IP address, destination IP address and destination UDP port of the ROUTE session, respectively. When these fields are omitted, the default values may be the source address, destination IP address and destination UDP port values of the current ROUTE session delivering the SLS, that is, the S-TSID. This field may not be omitted in another ROUTE session delivering the service components of the service, not in the current ROUTE session.

The @PLPID attribute may indicate the PLP ID information of the ROUTE session. If this field is omitted, the default value may be the PLP ID value of the current PLP delivered by the S-TSID. In some embodiments, this field is omitted and the PLP ID information of the ROUTE session may be checked using a combination of the information of the below-described LMT and the IP address/UDP port information of the RS element.

The LS element may describe information on LCT channels through which the service components of the service are transmitted. According to the number of LCT channel, a plurality of elements may be present. The LS element may include an @tsi attribute, an @PLPID attribute, an @bw attribute, an @startTime attribute, an @endTime attribute, a SrcFlow element and/or a RepairFlow element.

The @tsi attribute may indicate the tsi information of the LCT channel. Using this, the LCT channels through which the service components of the service are delivered may be identified. The @PLPID attribute may indicate the PLP ID information of the LCT channel. In some embodiments, this field may be omitted. The @bw attribute may indicate the maximum bandwidth of the LCT channel. The @startTime attribute may indicate the start time of the LCT session and the @endTime attribute may indicate the end time of the LCT channel.

The SrcFlow element may describe the source flow of ROUTE. The source protocol of ROUTE is used to transmit a delivery object and at least one source flow may be established within one ROUTE session. The source flow may deliver associated objects as an object flow.

The RepairFlow element may describe the repair flow of ROUTE. Delivery objects delivered according to the source protocol may be protected according to forward error correction (FEC) and the repair protocol may define an FEC framework enabling FEC protection.

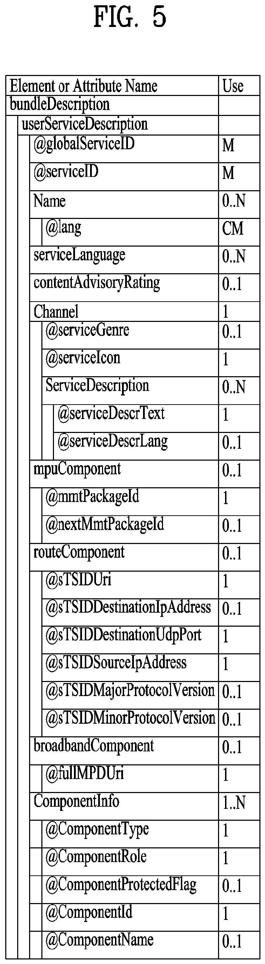

FIG. 5 is a diagram showing a USBD delivered through MMT according to one embodiment of the present invention.

One embodiment of the shown USBD may have a bundleDescription root element. The bundleDescription root element may have a userServiceDescription element. The userServiceDescription element may be an instance of one service.

The userServiceDescription element may include an @globalServiceID attribute, an @serviceId attribute, a Name element, a serviceLanguage element, a contentAdvisoryRating element, a Channel element, a mpuComponent element, a routeComponent element, a broadbandComponent element and/or a ComponentInfo element. Each field may be omitted according to the value of the shown Use column or a plurality of fields may be present.

The @globalServiceID attribute, the @serviceId attribute, the Name element and/or the serviceLanguage element may be equal to the fields of the USBD delivered through ROUTE. The contentAdvisoryRating element may indicate the content advisory rating of the service. This information is compatible with content advisory rating information format provided in service announcement. The Channel element may include information associated with the service. A detailed description of this element will be given below.

The mpuComponent element may provide a description of service components delivered as the MPU of the service. This element may further include an @mmtPackageId attribute and/or an @nextMmtPackageId attribute. The @mmtPackageId attribute may reference the MMT package of the service components delivered as the MPU of the service. The @nextMmtPackageId attribute may reference an MMT package to be used after the MMT package referenced by the @mmtPackageId attribute in terms of time. Through the information of this element, the MP table may be referenced.

The routeComponent element may include a description of the service components of the service. Even when linear service components are delivered through the MMT protocol, NRT data may be delivered according to the ROUTE protocol as described above. This element may describe information on such NRT data. A detailed description of this element will be given below.

The broadbandComponent element may include the description of the service components of the service delivered over broadband. In hybrid service delivery, some service components of one service or other files may be delivered over broadband. This element may describe information on such data. This element may further an @fullMPDUri attribute. This attribute may reference the MPD describing the service component delivered over broadband. In addition to hybrid service delivery, the broadcast signal may be weakened due to traveling in a tunnel and thus this element may be necessary to support handoff between broadband and broadband. When the broadcast signal is weak, the service component is acquired over broadband and, when the broadcast signal becomes strong, the service component is acquired over the broadcast network to secure service continuity.

The ComponentInfo element may include information on the service components of the service. According to the number of service components of the service, a plurality of elements may be present. This element may describe the type, role, name, identifier or protection of each service component. Detailed information of this element will be described below.

The above-described Channel element may further include an @serviceGenre attribute, an @serviceIcon attribute and/or a ServiceDescription element. The @serviceGenre attribute may indicate the genre of the service and the @serviceIcon attribute may include the URL information of the representative icon of the service. The ServiceDescription element may provide the service description of the service and this element may further include an @serviceDescrText attribute and/or an @serviceDescrLang attribute. These attributes may indicate the text of the service description and the language used in the text.

The above-described routeComponent element may further include an @sTSIDUri attribute, an @sTSIDDestinationIpAddress attribute, an @sTSIDDestinationUdpPort attribute, an @sTSIDSourceIpAddress attribute, an @sTSIDMajorProtocolVersion attribute and/or an @sTSIDMinorProtocolVersion attribute.

The @sTSIDUri attribute may reference an S-TSID fragment. This field may be equal to the field of the USBD delivered through ROUTE. This S-TSID may provide access related information of the service components delivered through ROUTE. This S-TSID may be present for NRT data delivered according to the ROUTE protocol in a state of delivering linear service component according to the MMT protocol.

The @sTSIDDestinationIpAddress attribute, the @sTSIDDestinationUdpPort attribute and the @sTSIDSourceIpAddress attribute may indicate the destination IP address, destination UDP port and source IP address of the transport packets carrying the above-described S-TSID. That is, these fields may identify the transport session (MMTP session or the ROUTE session) carrying the above-described S-TSID.

The @sTSIDMajorProtocolVersion attribute and the @sTSIDMinorProtocolVersion attribute may indicate the major version number and minor version number of the transport protocol used to deliver the above-described S-TSID, respectively.

The above-described ComponentInfo element may further include an @componentType attribute, an @componentRole attribute, an @componentProtectedFlag attribute, an @componentId attribute and/or an @componentName attribute.

The @componentType attribute may indicate the type of the component. For example, this attribute may indicate whether the component is an audio, video or closed caption component. The @componentRole attribute may indicate the role of the component. For example, this attribute may indicate main audio, music, commentary, etc. if the component is an audio component. This attribute may indicate primary video if the component is a video component. This attribute may indicate a normal caption or an easy reader type if the component is a closed caption component.

The @componentProtectedFlag attribute may indicate whether the service component is protected, for example, encrypted. The @componentId attribute may indicate the identifier of the service component. The value of this attribute may be the asset_id (asset ID) of the MP table corresponding to this service component. The @componentName attribute may indicate the name of the service component.

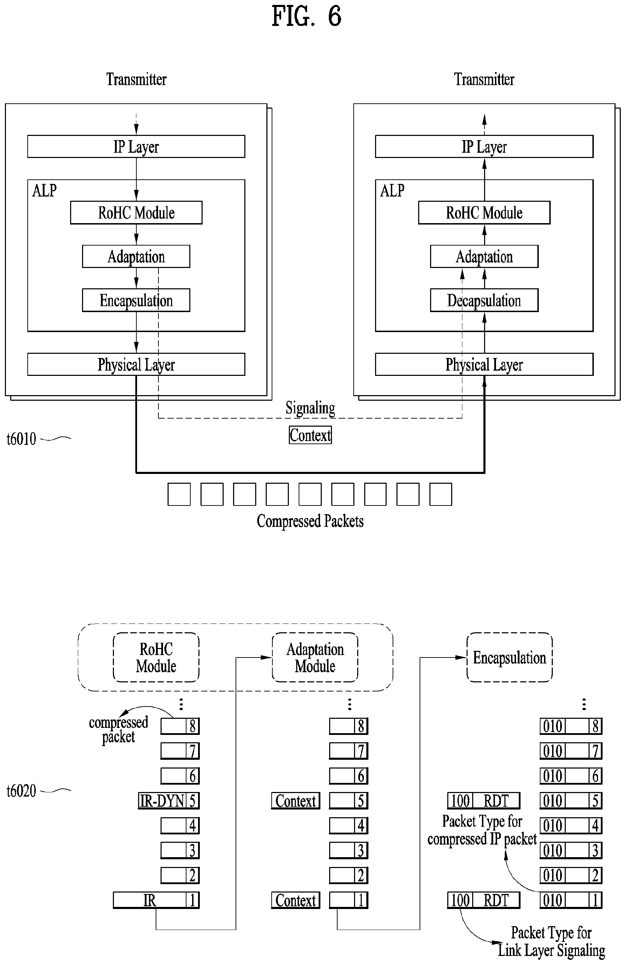

FIG. 6 is a diagram showing link layer operation according to one embodiment of the present invention.

The link layer may be a layer between a physical layer and a network layer. A transmission side may transmit data from the network layer to the physical layer and a reception side may transmit data from the physical layer to the network layer (t6010). The purpose of the link layer is to compress (abstract) all input packet types into one format for processing by the physical layer and to secure flexibility and expandability of an input packet type which is not defined yet. In addition, the link layer may provide option for compressing (abstracting) unnecessary information of the header of input packets to efficiently transmit input data. Operation such as overhead reduction, encapsulation, etc. of the link layer is referred to as a link layer protocol and packets generated using this protocol may be referred to as link layer packets. The link layer may perform functions such as packet encapsulation, overhead reduction and/or signaling transmission.

At the transmission side, the link layer (ALP) may perform an overhead reduction procedure with respect to input packets and then encapsulate the input packets into link layer packets. In addition, in some embodiments, the link layer may perform encapsulation into the link layer packets without performing the overhead reduction procedure. Due to use of the link layer protocol, data transmission overhead on the physical layer may be significantly reduced and the link layer protocol according to the present invention may provide IP overhead reduction and/or MPEG-2 TS overhead reduction.

When the shown IP packets are input as input packets (t6010), the link layer may sequentially perform IP header compression, adaptation and/or encapsulation. In some embodiments, some processes may be omitted. For example, the RoHC module may perform IP packet header compression to reduce unnecessary overhead. Context information may be extracted through the adaptation procedure and transmitted out of band. The IP header compression and adaption procedure may be collectively referred to as IP header compression. Thereafter, the IP packets may be encapsulated into link layer packets through the encapsulation procedure.

When MPEG 2 TS packets are input as input packets, the link layer may sequentially perform overhead reduction and/or an encapsulation procedure with respect to the TS packets. In some embodiments, some procedures may be omitted. In overhead reduction, the link layer may provide sync byte removal, null packet deletion and/or common header removal (compression). Through sync byte removal, overhead reduction of 1 byte may be provided per TS packet. Null packet deletion may be performed in a manner in which reinsertion is possible at the reception side. In addition, deletion (compression) may be performed in a manner in which common information between consecutive headers may be restored at the reception side. Some of the overhead reduction procedures may be omitted. Thereafter, through the encapsulation procedure, the TS packets may be encapsulated into link layer packets. The link layer packet structure for encapsulation of the TS packets may be different from that of the other types of packets.

First, IP header compression will be described.

The IP packets may have a fixed header format but some information necessary for a communication environment may be unnecessary for a broadcast environment. The link layer protocol may compress the header of the IP packet to provide a mechanism for reducing broadcast overhead.

IP header compression may include a header compressor/decompressor and/or an adaptation module. The IP header compressor (RoHC compressor) may reduce the size of each IP packet based on a RoHC method. Then, adaptation module may extract context information and generate signaling information from each packet stream. A receiver may parse signaling information related to a corresponding packet stream and attach the context information to the packet stream. The RoHC decompressor may recover a packet header to reconfigure an original IP packet. Hereinafter, IP header compression may refer to only IP header compressor via header compressor and may be a concept that combines IP header compression and the adaptation procedure by the adaptation module. This may be the same as in decompressing.

Hereinafter, adaptation will be described.

In transmission of a single-direction link, when the receiver does not have context information, the decompressor cannot restore the received packet header until complete context is received. This may lead to channel change delay and turn-on delay. Accordingly, through the adaptation function, configuration parameters and context information between the compressor and the decompressor may be transmitted out of band. The adaptation function may construct link layer signaling using context information and/or configuration parameters. The adaptation function may periodically transmit link layer signaling through each physical frame using a previous configuration parameter and/or context information.

Context information is extracted from the compressed IP packets and various methods may be used according to adaptation mode.

Mode #1 refers to a mode in which no operation is performed with respect to the compressed packet stream and an adaptation module operates as a buffer.

Mode #2 refers to a mode in which an IR packet is detected from a compressed packet stream to extract context information (static chain). After extraction, the IR packet is converted into an IR-DYN packet and the IR-DYN packet may be transmitted in the same order within the packet stream in place of an original IR packet.

Mode #3 (t6020) refers to a mode in which IR and IR-DYN packets are detected from a compressed packet stream to extract context information. A static chain and a dynamic chain may be extracted from the IR packet and a dynamic chain may be extracted from the IR-DYN packet. After extraction, the IR and IR-DYN packets are converted into normal compression packets. The converted packets may be transmitted in the same order within the packet stream in place of original IR and IR-DYN packets.

In each mode, the context information is extracted and the remaining packets may be encapsulated and transmitted according to the link layer packet structure for the compressed IP packets. The context information may be encapsulated and transmitted according to the link layer packet structure for signaling information, as link layer signaling.

The extracted context information may be included in a RoHC-U description table (RDT) and may be transmitted separately from the RoHC packet flow. Context information may be transmitted through a specific physical data path along with other signaling information. The specific physical data path may mean one of normal PLPs, a PLP in which low level signaling (LLS) is delivered, a dedicated PLP or an L1 signaling path. Here, the RDT may be context information (static chain and/or dynamic chain) and/or signaling information including information associated with header compression. In some embodiments, the RDT may be transmitted whenever context information is changed. In some embodiments, the RDT may be transmitted in every physical frame. To transmit the RDT in every physical frame, a previous RDT may be re-used.

The receiver may select a first PLP and first acquire signaling information of the SLT, the RDT, etc., prior to acquisition of a packet stream. Upon acquring the signaling information, the receiver may combine the information to acquire mapping of service - IP information - context information - PLP. That is, the receiver may recognize IP streams through which a service is transmitted, IP streams transmitted through a PLP, and so on and acquire corresponding context information of the PLPs. The receiver may select a PLP for delivery of a specific packet stream and decode the PLP. The adaptation module may parse the context information and combine the context information with the compressed packets. Thereby, the packet stream may be recovered and transmitted to the RoHC de compressor. Then, decompression may be started. In this case, the receiver may detect an IR packet and start decompression from a first received IR packet according to an adaptation mode (mode 1), may detect an IR-DYN packet and start decompression from a first received IR-DYN packet (mode 2), or may start decompression from any general compressed packet (mode 3).

Hereinafter, packet encapsulation will be described.

The link layer protocol may encapsulate all types of input packets such as IP packets, TS packets, etc. into link layer packets. To this end, the physical layer processes only one packet format independently of the protocol type of the network layer (here, an MPEG-2 TS packet is considered as a network layer packet). Each network layer packet or input packet is modified into the payload of a generic link layer packet.

In the packet encapsulation procedure, segmentation may be used. If the network layer packet is too large to be processed in the physical layer, the network layer packet may be segmented into two or more segments. The link layer packet header may include fields for segmentation of the transmission side and recombination of the reception side. Each segment may be encapsulated into the link layer packet in the same order as the original location.

In the packet encapsulation procedure, concatenation may also be used. If the network layer packet is sufficiently small such that the payload of the link layer packet includes several network layer packets, concatenation may be performed. The link layer packet header may include fields for performing concatenation. In concatenation, the input packets may be encapsulated into the payload of the link layer packet in the same order as the original input order.

The link layer packet may include a header and a payload. The header may include a base header, an additional header and/or an optional header. The additional header may be further added according to situation such as concatenation or segmentation and the additional header may include fields suitable for situations. In addition, for delivery of the additional information, the optional header may be further included. Each header structure may be pre-defined. As described above, if the input packets are TS packets, a link layer header having packets different from the other packets may be used.

Hereinafter, link layer signaling will be described.

Link layer signaling may operate at a level lower than that of the IP layer. The reception side may acquire link layer signaling faster than IP level signaling of the LLS, the SLT, the SLS, etc. Accordingly, link layer signaling may be acquired before session establishment.

Link layer signaling may include internal link layer signaling and external link layer signaling. Internal link layer signaling may be signaling information generated at the link layer. This includes the above-described RDT or the below-described LMT. External link layer signaling may be signaling information received from an external module, an external protocol or a higher layer. The link layer may encapsulate link layer signaling into a link layer packet and deliver the link layer packet. A link layer packet structure (header structure) for link layer signaling may be defined and link layer signaling information may be encapsulated according to this structure.

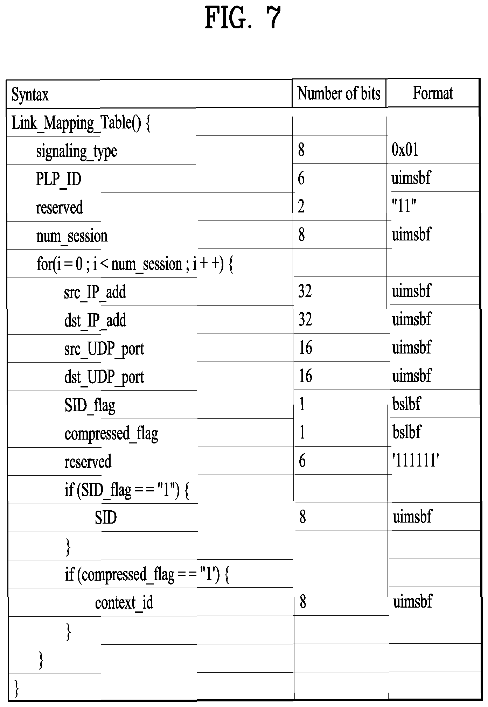

FIG. 7 is a diagram showing a link mapping table (LMT) according to one embodiment of the present invention.

The LMT may provide a list of higher layer sessions carried through the PLP. In addition, the LMT may provide additional information for processing link layer packets carrying the higher layer sessions. Here, the higher layer session may be referred to as multicast. Information on IP streams or transport sessions transmitted through one PLP may be acquired through the LMT. In contrast, information on through which PLP a specific transport session is delivered may be acquired.

The LMT may be transmitted through any PLP identified to deliver the LLS. Here, the PLP for delivering the LLS may be identified by an LLS flag of L1 detail signaling information of a physical layer. The LLS flag may be a flag field indicating whether the LLS is transmitted through a corresponding PLP with respect to each PLP. Here, the L1 detail signaling information may be correspond to PLS2 data which will be described later.

That is, the LMT may also be transmitted through the same PLP along with the LLS. Each LMT may describe mapping between PLPs and IP address/port as described above. As described above, the LLS may include an SLT and, in this regard, the IP address/ports described by the LMT may be any IP address/ports related to any service, described by the SLT transmitted through the PLP such as a corresponding LMT.

In some embodiments, the PLP identifier information in the above-described SLT, SLS, etc. may be used to confirm information indicating through which PLP a specific transport session indicated by the SLT or SLS is transmitted may be confirmed.

In another embodiment, the PLP identifier information in the above-described SLT, SLS, etc. will be omitted and PLP information of the specific transport session indicated by the SLT or SLS may be confirmed by referring to the information in the LMT. In this case, the receiver may combine the LMT and other IP level signaling information to identify the PLP. Even in this embodiment, the PLP information in the SLT, SLS, etc. is not omitted and may remain in the SLT, SLS, etc.

The LMT according to the shown embodiment may include a signaling_type field, a PLP_ID field, a num_session field and/or information on each session. Although the LMT of the shown embodiment describes IP streams transmitted through one PLP, a PLP loop may be added to the LMT to describe information on a plurality of PLPs in some embodiments. In this case, as described above, the LMT may describe PLPs of all IP addresses/ports related to all service described by the SLT transmitted together using a PLP loop.

The signaling_type field may indicate the type of signaling information delivered by the table. The value of signaling_type field for the LMT may be set to 0x01. The signaling_type field may signaling_type field may be omitted. The PLP_ID field may identify a target PLP to be described. When the PLP loop is used, each PLP_ID field may identify each target PLP. Fields from the PLP_ID field may be included in the PLP loop. Here, the below-described PLP_ID field may be an identifier of one PLP of the PLP loop and the following fields may be fields corresponding to the corresponding PLP.

The num_session field may indicate the number of higher layer sessions delivered through the PLP identified by the PLP_ID field. According to the number indicated by the num_session field, information on each session may be included. This information may include a src_IP_add field, a dst_IP_add field, a src_UDP_port field, a dst_UDP_port field, an SID_flag field, a compressed_flag field, an SID field, and/or a context_id field.

The src_IP_add field, the dst_IP_add field, the src_UDP_port field, and the dst_UDP_port field may indicate the source IP address, the destination IP address, the source UDP port and the destination UDP port of the transport session among the higher layer sessions delivered through the PLP identified by the PLP_ID field.

The SID_flag field may indicate whether the link layer packet delivering the transport session has an SID field in the optional header. The link layer packet delivering the higher layer session may have an SID field in the optional header and the SID field value may be equal to that of the SID field in the LMT.

The compressed_flag field may indicate whether header compression is applied to the data of the link layer packet delivering the transport session. In addition, presence/absence of the below-described context_id field may be determined according to the value of this field. When header compression is applied (compressed_flag = 1), the RDT may be present and the PLP ID field of the RDT may have the same value as the corresponding PLP_ID field related to the present compressed_flag field.

The SID field may indicate a sub stream ID (SID) of link layer packets for delivering a corresponding transfer session. The link layer packets may include the SID having the same value as the present SID field in the optional header. Thereby, the receiver may filter link layer packets using information of the LMT and SID information of a link layer packet header without parsing of all link layer packets.

The context_id field may provide a reference for a context id (CID) in the RDT. The CID information of the RDT may indicate the context ID of the compression IP packet stream. The RDT may provide context information of the compression IP packet stream. Through this field, the RDT and the LMT may be associated.

In the above-described embodiments of the signaling information/table of the present invention, the fields, elements or attributes may be omitted or may be replaced with other fields. In some embodiments, additional fields, elements or attributes may be added.

In one embodiment of the present invention, service components of one service may be delivered through a plurality of ROUTE sessions. In this case, an SLS may be acquired through bootstrap information of an SLT. An S-TSID and an MPD may be referenced through the USBD of the SLS. The S-TSID may describe not only the ROUTE session delivered by the SLS but also transport session description information of another ROUTE session carried by the service components. To this end, the service components delivered through the plurality of ROUTE sessions may all be collected. This is similarly applicable to the case in which the service components of one service are delivered through a plurality of MMTP sessions. For reference, one service component may be simultaneously used by the plurality of services.

In another embodiment of the present invention, bootstrapping of an ESG service may be performed by a broadcast or broadband network. By acquiring the ESG over broadband, URL information of the SLT may be used. ESG information may be requested using this URL.

In another embodiment of the present invention, one service component of one service may be delivered over the broadcast network and the other service component may be delivered over broadband (hybrid). The S-TSID may describe components delivered over the broadcast network such that the ROUTE client acquires desired service components. In addition, the USBD may have base pattern information to describe which segments (which components) are delivered through which path. Accordingly, the receiver can confirm a segment to be requested from the broadband service and a segment to be detected in a broadcast stream.

In another embodiment of the present invention, scalable coding of a service may be performed. The USBD may have all capability information necessary to render the service. For example, when one service is provided in HD or UHD, the capability information of the USBD may have a value of "HD or UHD". The receiver may check which component is reproduced in order to render the UHD or HD service using the MPD.

In another embodiment of the present invention, through a TOI field of the LCT packets delivered through the LCT channel delivering the SLS, which SLS fragment is delivered using the LCT packets (USBD, S-TSID, MPD, etc.) may be identified.

In another embodiment of the present invention, app components to be used for app based enhancement/an app based service may be delivered over the broadcast network as NRT components or may be delivered over broadband. In addition, app signaling for app based enhancement may be performed by an application signaling table (AST) delivered along with the SLS. In addition, an event which is signaling for operation to be performed by the app may be delivered in the form of an event message table (EMT) along with the SLS, may be signaled in the MPD or may be in-band signaled in the form of a box within DASH representation. The AST, the EMT, etc. may be delivered over broadband. App based enhancement, etc. may be provided using the collected app components and such signaling information.

In another embodiment of the present invention, a CAP message may be included and provided in the above-described LLS table for emergency alert. Rich media content for emergency alert may also be provided. Rich media may be signaled by a CAP message and, if rich media is present, the rich media may be provided as an EAS service signaled by the SLT.

In another embodiment of the present invention, linear service components may be delivered over the broadcast network according to the MMT protocol. In this case, NRT data (e.g., app components) of the service may be delivered over the broadcast network according to the ROUTE protocol. In addition, the data of the service may be delivered over broadband. The receiver may access the MMTP session delivering the SLS using the bootstrap information of the SLT. The USBD of the SLS according to the MMT may reference the MP table such that the receiver acquires linear service components formatted into the MPU delivered according to the MMT protocol. In addition, the USBD may further reference the S-TSID such that the receiver acquires NRT data delivered according to the ROUTE protocol. In addition, the USBD may further reference the MPD to provide a reproduction description of data delivered over broadband.

In another embodiment of the present invention, the receiver may deliver location URL information capable of acquiring a file content item (file, etc.) and/or a streaming component to a companion device through a web socket method. The application of the companion device may acquire components, data, etc. through a request through HTTP GET using this URL. In addition, the receiver may deliver information such as system time information, emergency alert information, etc. to the companion device.

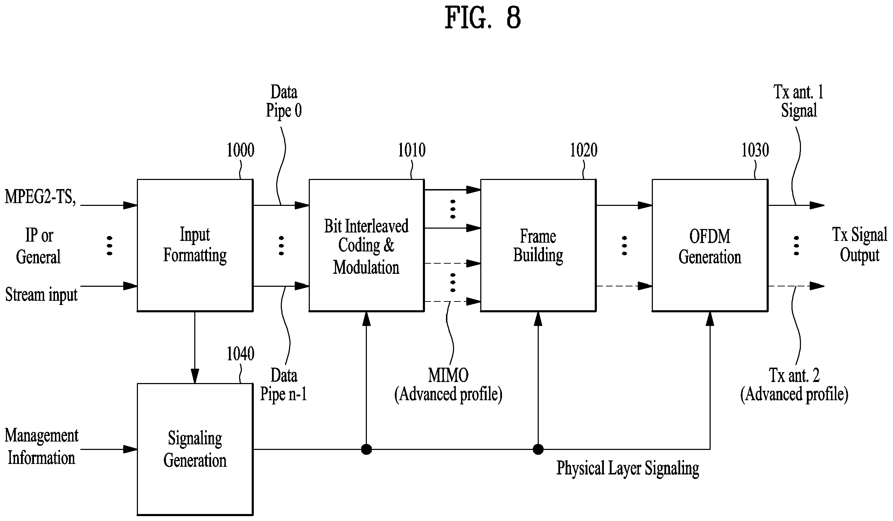

FIG. 8 is a diagram showing a structure of a broadcast signal transmission device of a next-generation broadcast service according to an embodiment of the present invention.

The broadcast signal transmission device of the next-generation broadcast service according to an embodiment of the present invention may include an input format block 1000, a bit interleaved coding & modulation (BICM) block 1010, a frame building block 1020, an orthogonal frequency division multiplexing (OFDM) generation block 1030, and a signaling generation block 1040. An operation of each block of the broadcast signal transmission device will be described.

According to an embodiment of the present invention, input data may use IP stream/packet and MPEG2-TS as main input format and other stream types may be handled as a general stream.

The input format block 1000 may demultiplex each input stream using one or more data pipes to which independent coding and modulation are applied. The data pipe may be a basic unit for robustness control and may affect quality of service (QoS). One or more services or service components may affect one data pipe. The data pipe may be a logical channel in a physical layer for delivering service data or metadata for delivering one or more services or service components.

Since QoS is dependent upon the characteristics of a service provided by the broadcast signal transmission device of the next-generation broadcast service according to an embodiment of the present invention, data corresponding to each service needs to be processed via different methods.

The BICM block 1010 may include a processing block applied to a profile (or system) to which MIMO is not applied and/or a processing block of a profile (or system) to which MIMO is applied and may include a plurality of processing blocks for processing each data pipe.

The processing block of the BICM block to which MIMO is not applied may include a data FEC encoder, a bit interleaver, a constellation mapper, a signal space diversity (SSD) encoding block, and a time interleaver. The processing block of the BICM block to which MIMO is applied is different from the processing block of the BICM to which MIMO is not applied in that a cell word demultiplexer and an MIMO encoding block are further included.

The data FEC encoder may perform FEC encoding on an input BBF to generate a FECBLOCK procedure using external coding (BCH) and internal coding (LDPC). The external coding (BCH) may be a selective coding method. The bit interleaver may interleave output of the data FEC encoder to achieve optimized performance using a combination of the LDPC code and a modulation method. The constellation mapper may modulate cell word from a bit interleaver or a cell word demultiplexer using QPSK, QAM-16, irregular QAM (NUQ-64, NUQ-256, NUQ-1024), or irregular constellation (NUC-16, NUC-64, NUC-256, NUC-1024) and provide a power-normalized constellation point. NUQ has an arbitrary type but QAM-16 and NUQ have a square shape. All of the NUQ and the NUC may be particularly defined with respect to each code rate and signaled by parameter DP_MOD of PLS2 data. The time interleaver may be operated at a data pipe level. A parameter of the time interleaving may be differently set with respect to each data pipe.

The time interleaver according to the present invention may be positioned between the BICM chain and the frame builder. In this case, the time interlever according to the present invention may selectively use a convolution interleaver (CI) and a block interleaver (BI) according to a physical layer pipe (PLP) mode or may use all. The PLP according to an embodiment of the present invention may be a physical path used using the same concept as the aforementioned DP and its term may be changed according to designer intention. The PLP mode according to an embodiment of the present invention may include a single PLP mode or a multiple PLP mode according to the number of PLPs processed by the broadcast signal transmitter or the broadcast signal transmission device. Time interleaving using different time interleaving methods according to a PLP mode may be referred to as hybrid time interleaving.

A hybrid time interleaver may include a block interleaver (BI) and a convolution interleaver (CI). In the case of PLP_NUM=1, the BI may not be applied (BI off) and only the CI may be applied. In the case of PLP_NUM>1, both the BI and the CI may be applied (BI on). The structure and operation of the CI applied in the case of PLP_NUM>1 may be different from those of the CI applied in the case of PLP_NUM=1. The hybrid time interleaver may perform an operation corresponding to a reverse operation of the aforementioned hybrid time interleaver.

The cell word demultiplexer may be used to divide a single cell word stream into a dual cell word stream for MIMO processing. The MIMO encoding block may process output of the cell word demultiplexer using a MIMO encoding method. The MIMO encoding method according to the present invention may be defined as full-rate spatial multiplexing (FR-SM) for providing increase in capacity via relatively low increase in complexity at a receiver side. MIMO processing may be applied at a data pipe level. When a pair of constellation mapper outputs, NUQ e_{1,i} and e_{2,i} is input to a MIMO encoder, a pair of MIMO encoder outputs, g1,i and g2,i may be transmitted by the same carrier k and OFDM symbol 1 of each transmission antenna.

The frame building block 1020 may map a data cell of an input data pipe in one frame to an OFDM symbol and perform frequency interleaving for frequency domain diversity.

According to an embodiment of the present invention, a frame may be divided into a preamble, one or more frame signaling symbols (FSS), and a normal data symbol. The preamble may be a special symbol for providing a combination of basic transmission parameters for effective transmission and reception of a signal. The preamble may signal a basic transmission parameter and a transmission type of a frame. In particular, the preamble may indicate whether an emergency alert service (EAS) is currently provided in a current frame. The objective of the FSS may be to transmit PLS data. For rapid synchronization and channel estimation and rapid decoding of PLS data, the FSS may have a pipe pattern with higher density than a normal data symbol.

The frame building block may include a delay compensation block for adjusting timing between a data pipe and corresponding PLS data to ensure co-time between a data pipe and corresponding PLS data at a transmitting side, a cell mapper for mapping a PLS, a data pipe, an auxiliary stream, a dummy stream, and so on to an active carrier of an OFDM symbol in a frame, and a frequency interleaver.

The frequency interleaver may randomly interleave a data cell received from the cell mapper to provide frequency diversity. The frequency interleaver may operate with respect to data corresponding to an OFDM symbol pair including two sequential OFDM symbols or data corresponding to one OFDM symbol using different interleaving seed orders in order to acquire maximum interleaving gain in a single frame.

The OFDM generation block 1030 may modulate an OFDM carrier by the cell generated by the frame building block, insert a pilot, and generate a time domain signal for transmission. The corresponding block may sequentially insert guard intervals and may apply PAPR reduction processing to generate a last RF signal.

The signaling generation block 1040 may generate physical layer signaling information used in an operation of each functional block. The signaling information according to an embodiment of the present invention may include PLS data. The PLS may provide an element for connecting a receiver to a physical layer data pipe. The PLS data may include PLS 1 data and PLS2 data.

The PLS1 data may be a first combination of PLS data transmitted to FSS in a frame with fixed size, coding, and modulation for transmitting basic information on a system as well as a parameter required to data PLS2 data. The PLS1 data may provide a basic transmission parameter including a parameter required to receive and decode PLS2 data. The PLS2 data may be a second combination of PLP data transmitted to FSS for transmitting more detailed PLS data of a data pipe and a system. PLS2 signaling may further include two types of parameters of PLS2 static data (PLS2-STAT data) and PLS2 dynamic data (PLS2-DYN data). The PLS2 static data may be PLS2 data that is static during duration of a frame group and the PLS2 dynamic data may be PLS2 data that is dynamically changed every frame.

The PLS2 data may include FIC_FLAG information. A fast information channel (FIC) may be a dedicated channel for transmitting cross-layer information for enabling fast service acquisition and channel scanning. The FIC_FLAG information may indicate whether a fast information channel (FIC) is used in a current frame group via a 1-bit field. When a value of the corresponding field is set to 1, the FIC may be provided in the current frame. When a value of the corresponding field is set to 0, the FIC may not be transmitted in the current frame. The BICM block 1010 may include a BICM block for protecting PLS data. The BICM block for protecting the PLS data may include a PLS FEC encoder, a bit interleaver, and a constellation mapper.

The PLS FEC encoder may include a scrambler for scrambling PLS 1 data and PLS2 data, a BCH encoding/zero inserting block for performing external encoding on the scrambled PLS 1 and 2 data using a BCH code shortened for PLS protection and inserting a zero bit after BCH encoding, a LDPC encoding block for performing encoding using an LDPC code, and an LDPC parity puncturing block. Only the PLS 1 data may be permutated before an output bit of zero insertion is LDPC-encoded. The bit interleaver may interleave each of the shortened and punctured PLS 1 data and PLS2 data, and the constellation mapper may map the bit-interleaved PLS1 data and PLS2 data to constellation.

A broadcast signal reception device of a next-generation broadcast service according to an embodiment of the present invention may perform a reverse operation of the broadcast signal transmission device of the next-generation broadcast service that has been described with reference to FIG. 8.

The broadcast signal reception device of a next-generation broadcast service according to an embodiment of the present invention may include a synchronization & demodulation module for performing demodulation corresponding to a reverse operation performed by the broadcast signal transmission device, a frame parsing module for parsing an input signal frame to extract data transmitted by a service selected by a user, a demapping & decoding module for converting an input signal into bit region data, deinterleaving bit region data as necessary, performing demapping on mapping applied for transmission efficiency, and correcting error that occurs in a transmission channel for decoding, an output processor for performing a reverse operation of various compression/signal processing procedures applied by the broadcast signal transmission device, and a signaling decoding module for acquiring and processing PLS information from the signal demodulated by the synchronization & demodulation module. The frame parsing module, the demapping & decoding module, and the output processor may perform the functions using the PLS data output from the signaling decoding module.

Hereinafter, the timer interleaver will be described. A time interleaving group according to an embodiment of the present invention may be directly mapped to one frame or may be spread over P_{I} frames. In addition, each time interleaving group may be divided into one or more (N_{TI}) time interleaving blocks. Here, each time interleaving block may correspond to one use of a time interleaver memory. A time interleaving block in the time interleaving group may include different numbers of XFECBLOCK. In general, the time interleaver may also function as a buffer with respect to data pipe data prior to a frame generation procedure.

The time interleaver according to an embodiment of the present invention may be a twisted row-column block interleaver. The twisted row-column block interleaver according to an embodiment of the present invention may write a first XFECBLOCK in a first column of the time interleaving memory, write a second XFECBLOCK in a next column, and write the remaining XFECBLOCKs in the time interleaving block in the same manner. In an interleaving array, a cell may be read in a diagonal direction to a last row from a first row (a leftmost column as a start column is read along a row in a right direction). In this case, to achieve single memory deinterleaving at a receiver side irrespective of the number of XFECBLOCK in the time interleaving block, the interleaving array for the twisted row-column block interleaver may insert a virtual XFECBLOCK into the time interleaving memory. In this case, to achieve single memory deinterleaving at a receiver side, the virtual XFECBLOCK needs to be inserted into another frontmost XFECBLOCK.

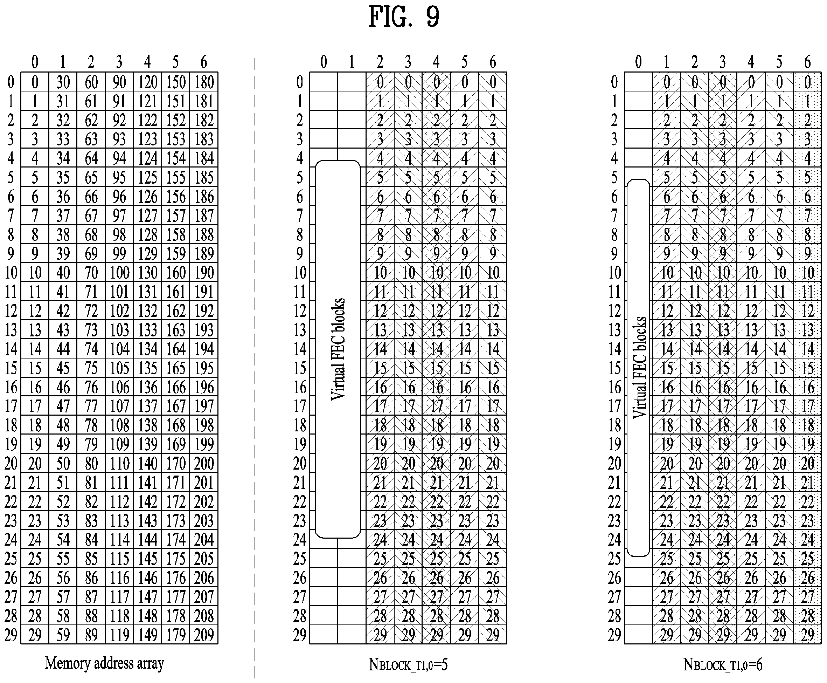

FIG. 9 is a writing operation of a time interleaver according to an embodiment of the present invention.

A block shown in a left portion of the drawing shows a TI memory address array and a block shown in a right portion of the drawing shows a writing operation when two or one virtual FEC blocks are inserted into a frontmost group of TI groups with respect to two consecutive TI groups.

The frequency interleaver according to an embodiment of the present invention may include an interleaving address generator for generating an interleaving address to be applied to data corresponding to a symbol pair.

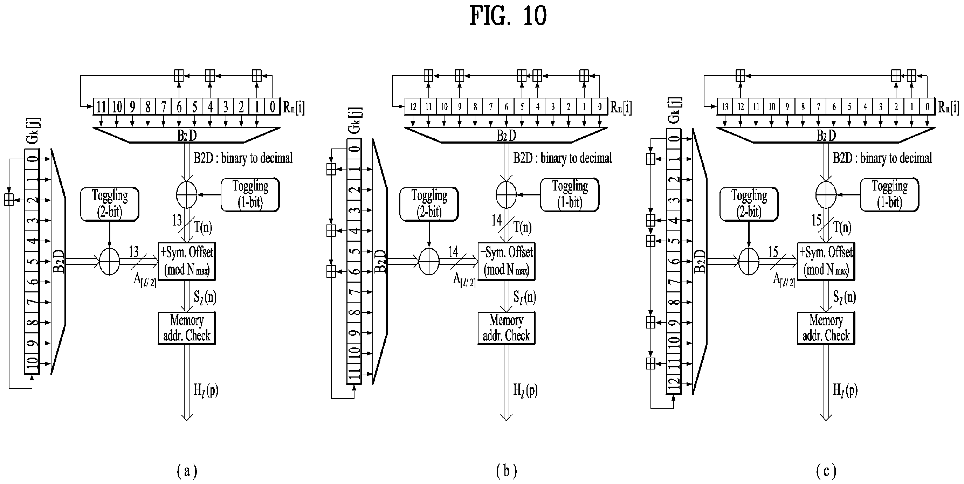

FIG. 10 is a block diagram of an interleaving address generator including a main-PRBS generator and a sub-PRBS generator according to each FFT mode, included in the frequency interleaver, according to an embodiment of the present invention.

(a) is a block diagram of an interleaving address generator with respect to a 8K FFT mode, (b) is a block diagram of an interleaving address generator with respect to a 16K FFT mode, and (c) is a block diagram of an interleaving address generator with respect to a 32K FFT mode.

An interleaving procedure with respect to an OFDM symbol pair may use one interleaving sequence and will be described below. First, an available data cell (output cell from a cell mapper) to be interleaved in one OFDM symbol O_{m,l} may be defined as O_{m,l} =[x_{m,l,0},...,x_{m,l,p},...,x_{m,l,Ndata-1}] with respect to *l* = 0, ..., N_{sym}-1. In this case, x_{m,l,p} may be a p *^{th}* cell of a *l^{th}* OFDM symbol in a *m^{th}* frame and N_{data} may be the number of data cells. In the case of a frame signaling symbol, N_{data} = C_{FSS}, in the case of normal data, N_{data} = C_{data}, and in the case of a frame edge symbol, N_{data} = C_{FES}. In addition, the interleaving data cell may be defined as P_{m,l} =[v_{m,l,0},...,v_{m,l,Ndata-1}] with respect to *l* = 0, ..., N_{sym}-1.

With respect to an OFDM symbol pair, an interleaved OFDM symbol pair may be given according to v_{m,l,Hi(p)} = x_{m,l,p}, p=0,...,N_{data}-1 for a first OFDM symbol of each pair and given according to v_{m,l,p} = x_{m,l,Hi(p)}, p=0,...,N_{data}-1 for a second OFDM symbol of each pair. In this case, Hₗ(p) may be an interleaving address generated based on a cyclic shift value (symbol offset) of a PRBS generator and a sub-PRBS generator.

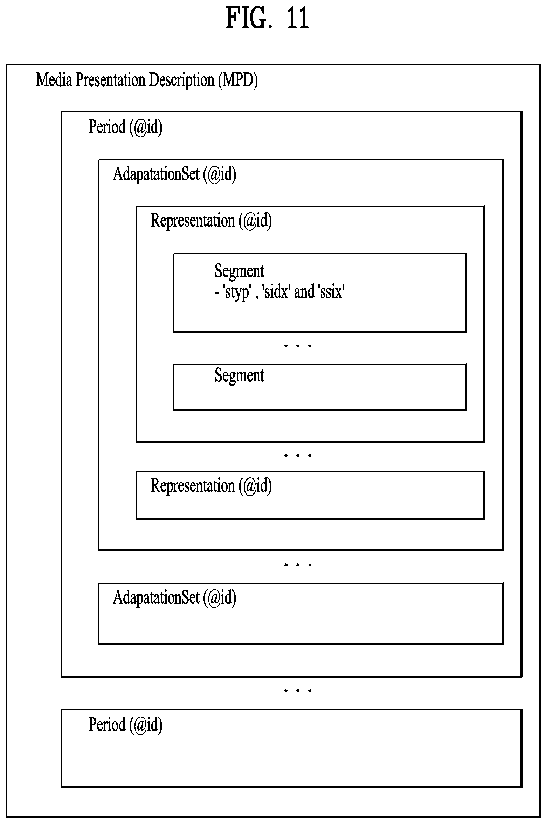

FIG. 11 is a diagram showing a structure of a media presentation description (MPD) according to an embodiment of the present invention.

An embodiment of the present invention proposes a method and apparatus for transmitting and receiving a broadcast signal to provide high-quality media in an MPEG dynamic adaptive streaming over HTTP (DASH)-based system. An embodiment of the present invention proposes exemplary MPDs in various transmission scenarios to support a high dynamic range (HDR) service in an MPEG DASH environment. A broadcast system according to an embodiment of the present invention defines an MPD of MPEG DASH for transmitting a plurality of streams configuring the HDR service. A reception apparatus according to an embodiment of the present invention may provide the HDR service by selecting a segment that transmits a desired URL using the MPD.

According to an embodiment of the present invention, two layers may be transmitted to provide an HDR service supporting backward compatibility based on MPEG DASH. An embodiment of the present invention may provide the HDR service supporting backward compatibility by defining dependency and reference relationships between two representations, when the layers use different codecs so that the layers are separated into different representations. For example, when a base layer and an enhancement layer of Dolby vision, which are encoded with different codecs, are transmitted through a DASH protocol, a receiver may receive the HDR service without any problem during Internet protocol (IP) streaming by using the above-described embodiment of the present invention. An embodiment of the present invention is applicable to all systems that need to support backward compatibility, such as multicast (DVB ABR) and broadcast (ATSC 3.0) using DASH as well as MPEG.

This figure illustrates a hierarchical MPD model for supporting an MPEG DASH system. According to an embodiment of the present invention, a minimum unit defining a codec of MPEG DASH is a representation or a sub-representation. When a stream using heterogeneous codecs is transmitted to support backward compatibility of the receiver, separation between minimum representations or sub-representations should be performed. That is, the base layer and the enhancement layer, which are streams using different codecs, should have respective representations. In this case, the MPD needs to define the contents of dependency between two representations and a role of a representation indicating the enhancement layer. For reference, plural layers used in scalable high efficiency video coding (SHVC) are generated by the same codec, which are different from plural layers generated by heterogeneous codecs to provide the HDR service proposed in an embodiment of the present invention.

An embodiment of the present invention defines information indicating a reference relationship between dual streams and information for configuring the HDR service at a system level, when dual streams are transmitted to support the HDR service in an MPEG DASH environment.

An embodiment of the present invention proposes an MPEG DASH transmission/reception model, a hierarchical structure of an MPEG DASH MPD, a method of transmitting dual layers, an MPEG DASH MPD structure for transmitting the dual layers, a method of defining information indicating a reference relationship between the dual layers for the HDR service, and/or a method of defining information for configuring the HDR service.

According to an embodiment of the present invention, components using different codecs are distinguished by adaptationsets and a dependency stream and a role of an enhancement layer may be newly defined (scenario 1).

According to another embodiment of the present invention, dependency is defined using an AssociationID and a reference type may be defined using an Association type (scenario 2).

According to still another embodiment of the present invention, components using different codecs are distinguished by representations, a reference relationship between representations is defined using dependencyID of an essential descriptor or a supplementary descriptor, and information for configuring the HDR service may be defined using profiles (scenario 3).

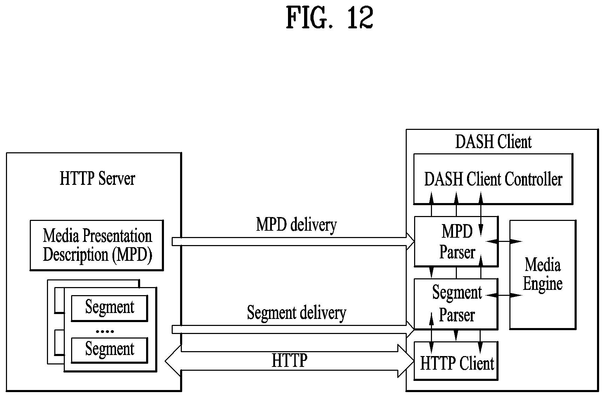

FIG. 12 is a diagram showing an MPEG DASH-based signal transmission/reception system model according to an embodiment of the present invention.

MPEG DASH is technology specifying a format of an adaptive streaming transmission method during IP delivery of media data. This figure shows a possible deployment structure capable of using a format defined in DASH. In this figure, illustrated boxes denote modules for performing processes defined in DASH. DASH specifies an MPD for providing additional information about media for the purpose of providing a streaming service and specifies hierarchical logic units (adaptationset, representation, etc.) for representing media data through the MPD.

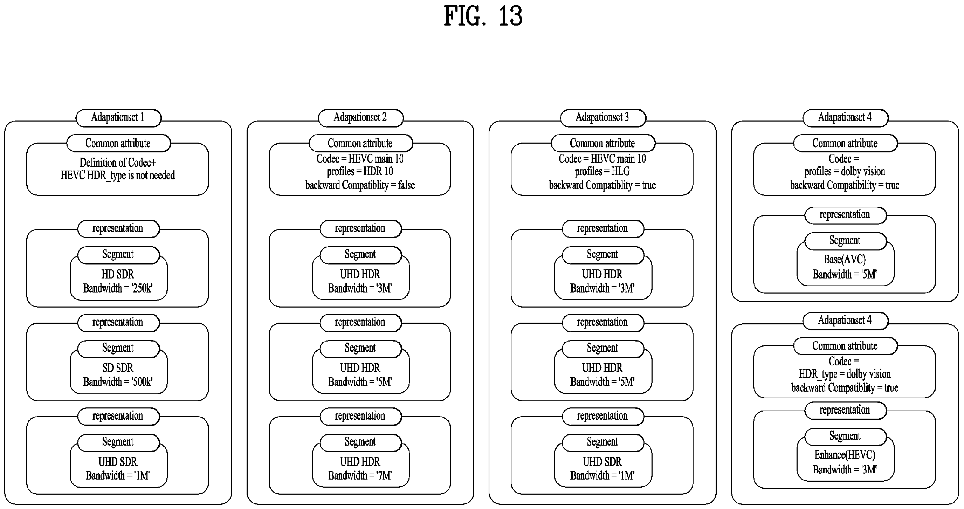

FIG. 13 is a diagram showing arrangement of adaptationsets for providing an HDR service supporting backward compatibility according to an embodiment of the present invention.

An embodiment of the present invention may distinguish between adaptationsets according to HDR technology. In this figure, Adaptationset1 represents a standard dynamic range (SDR) service, Adaptationset2 represents an HDR service encoded using HDR 10, and Adaptationset3 represents an HDR service encoded using hybrid log gamma (HLG) technology proposed by BBC. To solve a problem of generating hue shift in a BT.709 device when the HLG technology is applied, an embodiment of the present invention may include a representation indicating the SDR service in the adaptationset indicating the HDR service using the HLG technology. In this figure, Adaptationset4 denotes an HDR service supporting backward compatibility. A base layer encoded using advanced video coding (AVC) and an enhancement layer encoded using high efficiency video coding (HEVC) are defined in different representations within Adaptationset4. According to an embodiment of the present invention, information indicating a reference relationship between two representations and information for configuring the HDR service may be additionally defined. Further, an embodiment of the present invention may newly define dependency and a role between adaptationsets or representations in order to provide the HDR service in an environment in which dual layers are transmitted according to various scenarios.

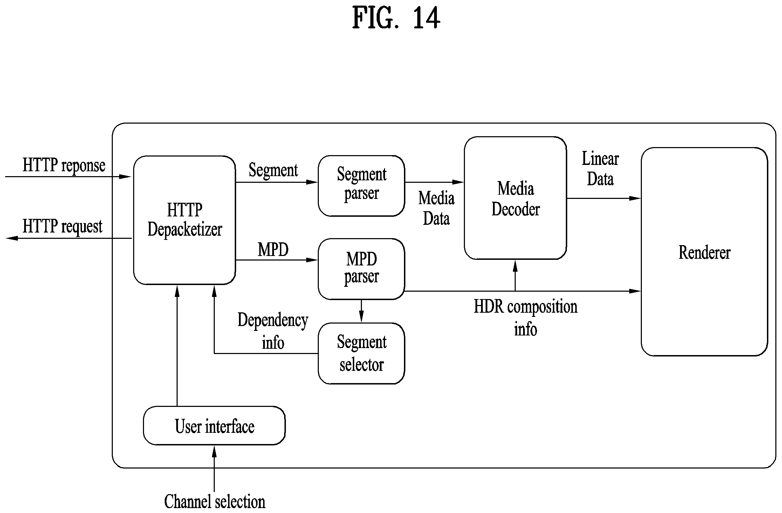

FIG. 14 is a diagram showing a structure of an MPEG DASH-based receiver according to an embodiment of the present invention.

The receiver according to an embodiment of the present invention receives an MPD that describes media data and then requests a segment in consideration of reception capability of the receiver and a network situation. The receiver parses and interprets service list information described in the MPD and information for segment selection and then requests and receives a proper segment of a proper service. A DASH client in the receiver acquires URL information of a segment and receives a desired segment file from a server by requesting the desired segment file using the acquired URL information. Upon receiving the segment file through multicast and broadcast, the receiver selects a stream that can be rendered from among received streams and performs buffering. The segment file transmitted to the receiver is parsed by a segment parser and a parsed video stream is rendered through a decoder.

The receiver according to an embodiment of the present invention selects and acquires the desired segment file using dependency information included in the MPD, decodes media data included in the segment file using HDR composition information included in the MPD, and renders the decoded media data.

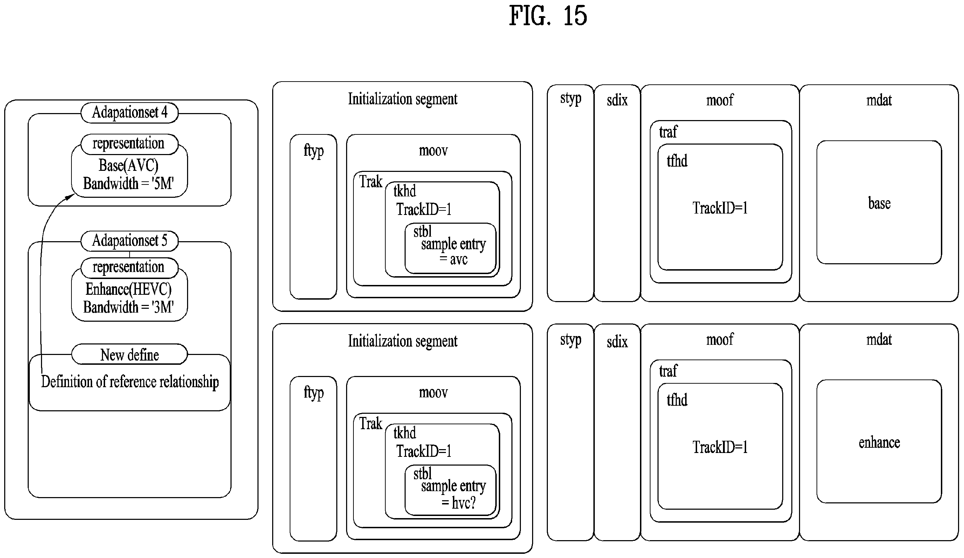

FIG. 15 is a diagram showing a structure of an MPD and a structure of a segment file according to an embodiment of the present invention.

This figure shows the structure of the MPD and the structure of the segment file used when a base layer and an enhancement layer that are encoded by different codecs are transmitted based on DASH according to an embodiment of the present invention.

According to an embodiment of the present invention, if an attribute or an element is defined by a higher level of the MPD, since the defined attribute or element cannot be changed by a lower level, an attribute of a codec applied to each layer according to an embodiment of the present invention may be defined at a representation level describing each layer.

According to an embodiment of the present invention, since layers configuring an HDR service supporting backward compatibility use different codecs, the layers may be expressed as respective adaptationsets or representations. In a current MPD, although dependency is present between the two adaptationsets or two representations, attributes indicating such dependency are not present. An embodiment of the present invention may define, in the MPD, information indicating dependency between the two adaptationsets or two representations and information for configuring an HDR service. For reference, during transmission of dual streams such as current 3D or SHVC dual streams, there is a method of defining the relationship between two streams but a compatible stream and a non-compatible stream for an HDR need to be separately defined because the streams are applications different from scalability. Specifically, in the case of SHVC, a coding independent code points (CICP) string value capable of defining the relationship between two streams is determined in @codec called an SHVC codec, whereas, in dual layers of the HDR, it is difficult to indicate a composition relationship of the HDR through codec information of respective bitstreams. In addition, in 3D, since an attribute of a stereoscopic view or a multiview has already been defined, a 3D composition may be performed through the above information along with the codec. Dual streams for HDR composition according to an embodiment of the present invention may initialize an HDR decoding operation by defining a reference relationship of each piece of information.

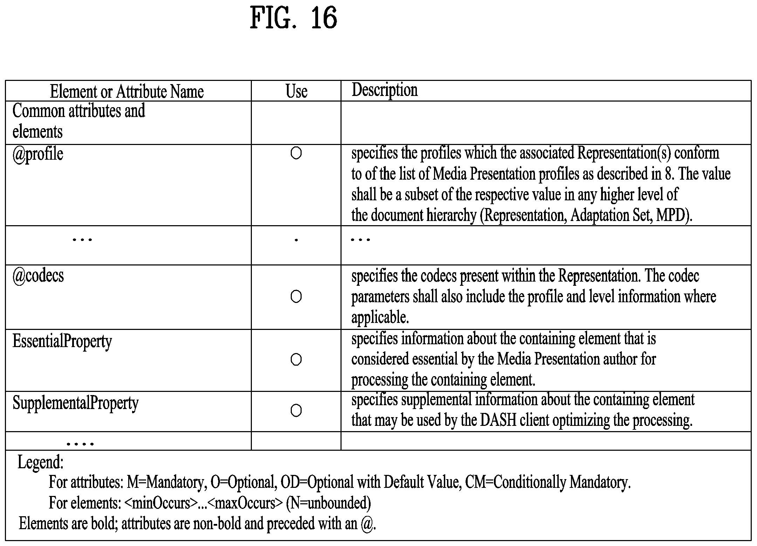

FIG. 16 is a diagram showing common attributes and common elements in an MPD according to an embodiment of the present invention.

The common attributes according to an embodiment of the present invention include @profile indicating profiles of an associated adaptationset, representation, and/or sub-representation and/or @codecs indicating codecs of the associated adaptationset, representation, and/or sub-representation.

The common elements according to an embodiment of the present invention include an EssentialProperty element describing essential information for media presentation and/or a SupplementalProperty element describing supplementary information for media presentation.

The common attributes or common elements according to an embodiment of the present invention may be included in an adaptationset element, a representation element, and/or a sub-representation element in the MPD.

According to an embodiment of the present invention, when dual streams configuring an HDR service supporting backward compatibility are present and dependency is present between the dual streams, information about a supplementary role between the dual streams may be defined using the common attributes or the common elements.

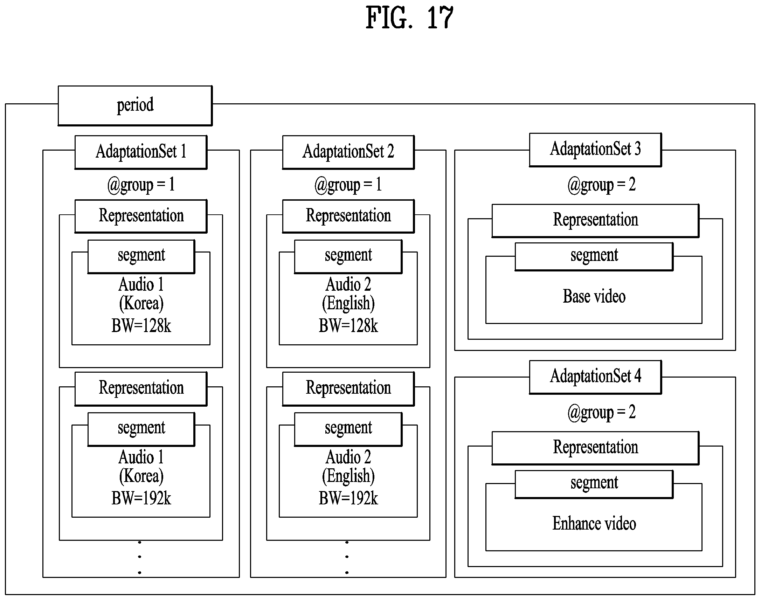

FIG. 17 is a diagram showing a structure of an MPD for signaling an HDR service supporting backward compatibility according to an embodiment of the present invention.

An embodiment of the present invention may distinguish between components using different codecs by adaptationsets and newly define a dependency stream and a role of an enhancement layer in order to configure an HDR service including an AVC (Adaptationset3: base video) stream and an HEVC (Adaptationset4: enhancement video) stream (scenario 1)

Another embodiment of the present invention may define dependency using AssociationID and define a reference type using an Association type (scenario 2).

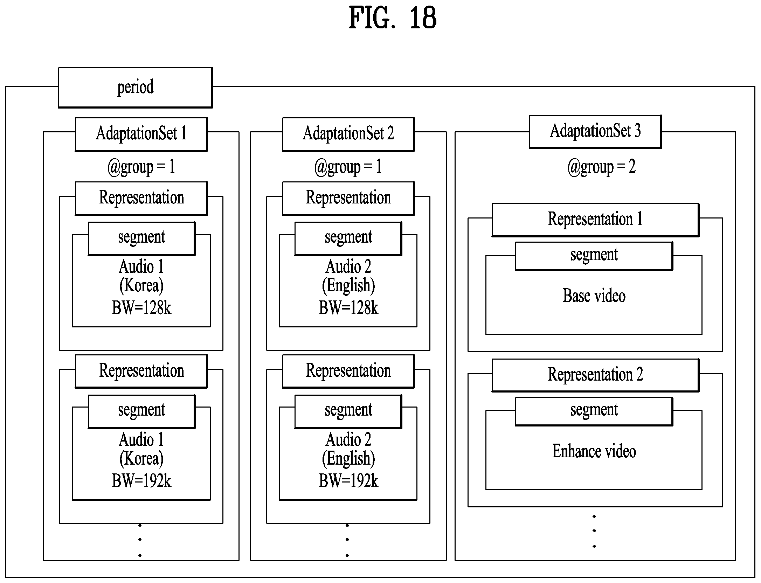

FIG. 18 is a diagram showing a structure of an MPD for signaling an HDR service supporting backward compatibility according to another embodiment of the present invention.

Another embodiment of the present invention may distinguish between components using different codecs by representations, define a reference relationship between representations by dependencyID using an essential descriptor or a supplementary descriptor, and define information about a configuration of the HDR service using profiles, in order to configure then HDR service including an AVC (Adaptationset3: base video) stream and an HEVC (Adaptationset4: enhancement video) stream (scenario 3).

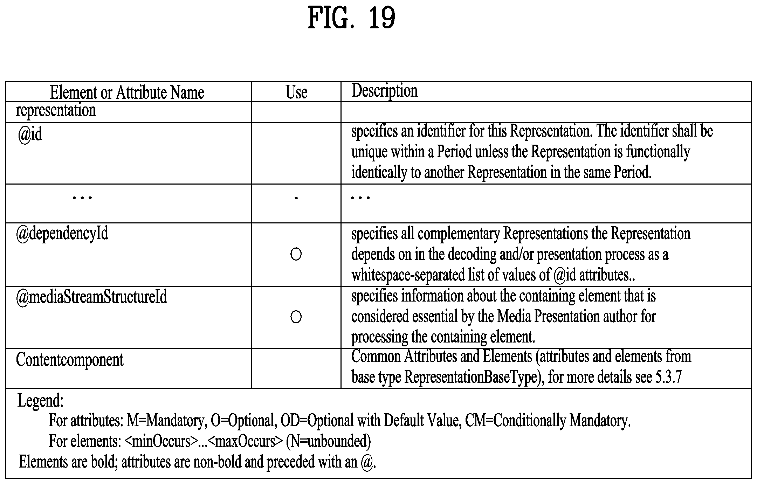

FIG. 19 is a diagram showing a configuration of a representation element according to an embodiment of the present invention.

The representation element of an MPD according to an embodiment of the present invention includes @dependencyID and/or a Contentcomponent element. According to an embodiment of the present invention, @dependencyID is used to refer to different representations. That is, a reference relationship between two representations may be represented using @dependencyID. A detailed description of the Contentcomponent element will be described with reference to the next figure.

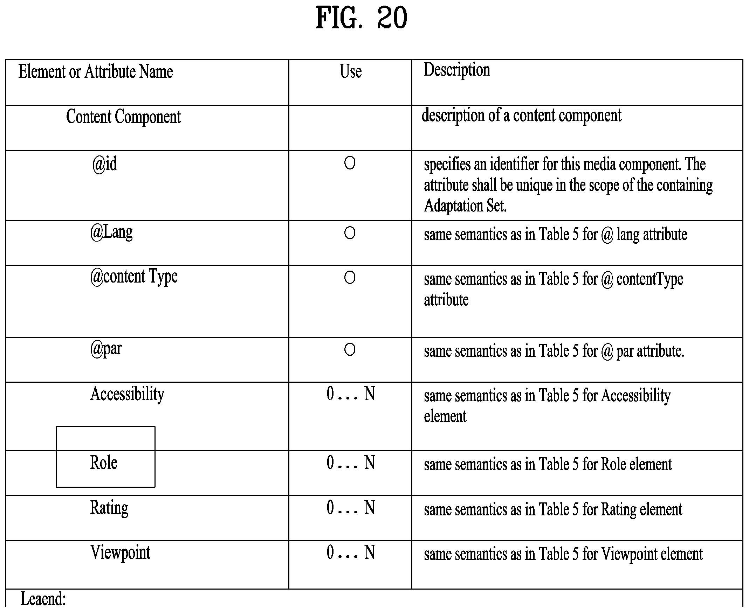

FIG. 20 is a diagram illustrating a configuration of a Contentcomponent element according to an embodiment of the present invention.

The Contentcomponent element according to an embodiment of the present invention is an element describing a content component. The Contentcomponent element includes @id for identifying a media component that this element describes and/or a Role element indicating a structural function and characteristic of the media component. A detailed description of the Role element will be described with reference to the next figure.

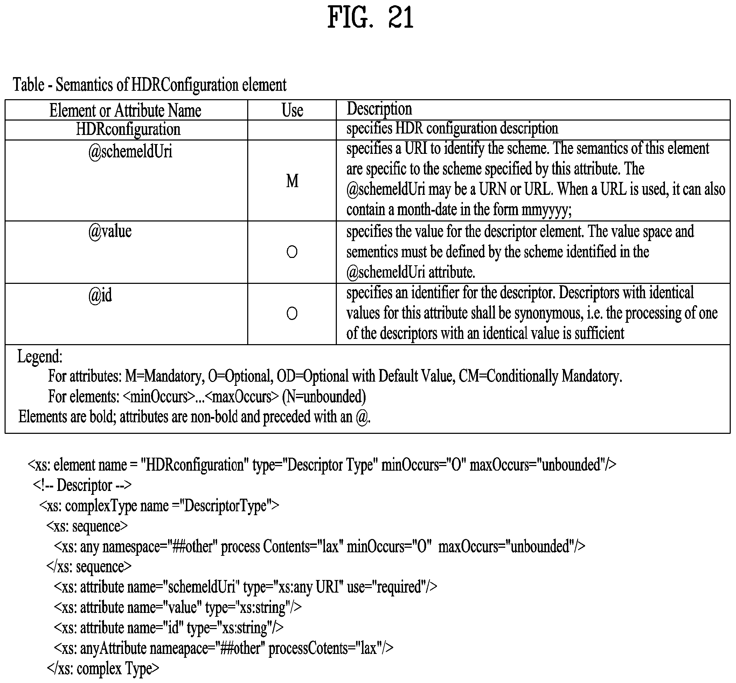

FIG. 21 is a diagram showing a configuration of a Role element according to an embodiment of the present invention.

The Role element according to an embodiment of the present invention may be referred to as an HDRConfiguration element.

The Role element includes @schemeIdUri, @value, and/or @id. @schemeIdUri identifies a schema corresponding to semantics of this element. According to an embodiment of the present invention, the Role element may have "urn:mpeg:dash:role:2011" as the value of @schemeIdUri and indicates the function of a corresponding media component by the value of @value.

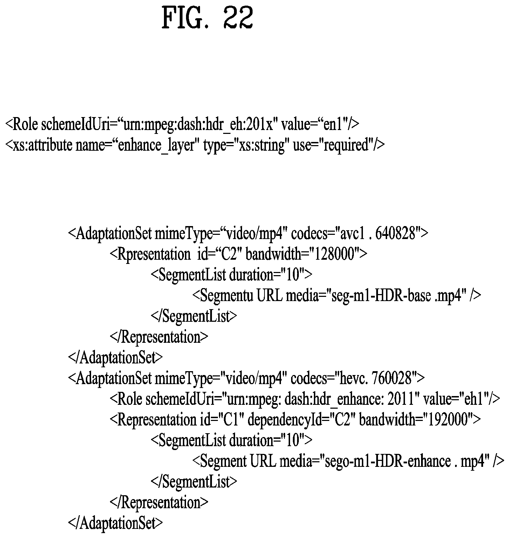

FIG. 22 is a diagram showing a method of signaling an HDR service supporting backward compatibility using an MPD according to an embodiment of the present invention (scenario 1).

An embodiment of the present invention may distinguish between components using different codecs by adaptationsets, signal that there is a dependency relationship between the components using @dependencyId of a representation element in an adaptationset element of the MPD, and signal which dependency relationship is present between components using a Role element in a Contentcomponent element (scenario 1).

An embodiment of the present invention may identify a representation having a dependency relationship with a representation that the representation element describes by defining @dependencyId in the representation element of the MPD.

An embodiment of the present invention may signal that a corresponding adaptationset or representation relates to an HDR enhancement layer by defining the Role element in the Contentcomponent element within the representation element of the MPD and signal layer related technology of the HDR enhancement layer using the value of @value in the Role element.

Referring to an upper part of this figure, a Role element for a representation corresponding to an HDR enhancement layer may have "urn:mpeg:dash:hdr_eh:201x" as the value of @schemeIdUri and "en1" as the value of @value to signal that the representation is associated with the HDR enhancement layer.

A lower part of this figure shows an adaptationset schema according to scenario 1. Referring to the lower part of this figure, a base video encoded using a codec "avc1.640828" and an enhancement video encoded using a codec "hevc.760028" are distinguished by different adaptationsets.

An adaptationset element describing an adaptationset corresponding to the base video encoded using the codec "avc1.640828" includes a representation element. The representation element may have "C2" as the value of @id and a segment transmitting the base video encoded using the codec "avc1.640828" corresponding to this representation may be acquired from "segm1HDRbase.mp4".

An adaptationset element describing an adaptationset corresponding to the enhancement video encoded using the codec "hevc.760028" includes the Role element. In this case, the Role element may have "urn:mpeg:dash:hdr_enhance:2011" as the value of @schemeIdUri and have "eh1" as the value of @value to signal that the adaptationset corresponds to an enhancement video component. The adaptationset element includes the representation element. The representation element may have "C1" as the value of @id and have "C2" as the value of @dependencyId to signal that a representation that this representation element describes has a dependency relationship with a representation having "C2" as the value of @id. Further, a segment transmitting the enhancement video encoded using the codec "hevc.760028" corresponding to this representation may be acquired from "segm1HDRenhance.mp4".

According to another embodiment of the present invention, the above-described Role element may be included in a lower level of the adaptationset element and in a lower level of the representation element.

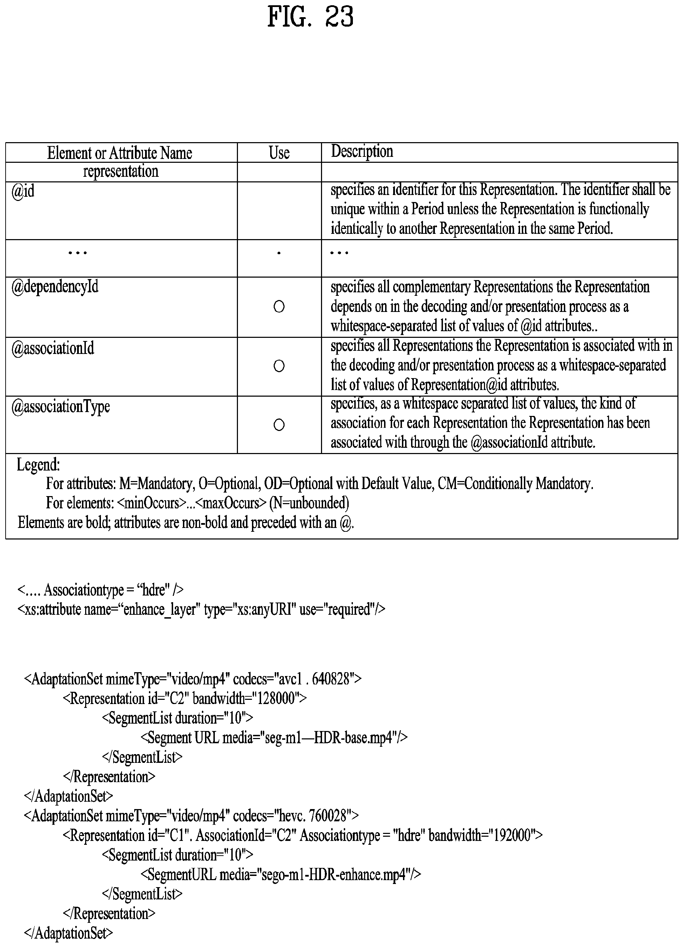

FIG. 23 is a diagram showing a method of signaling an HDR service supporting backward compatibility using an MPD according to another embodiment of the present invention (scenario 2).

An embodiment of the present invention may distinguish between components using different codecs by adaptationsets, signal that there is a reference relationship between comments using @associationId of a representation element within an adaptationset element of the MPD, and signal which dependency relationship is present between components using @associationoType (scenario 2).

Referring to an upper part of this figure, a representation element according to an embodiment of the present invention includes @id, @dependencyId, @associationId, and/or @associationType. @id identifies a corresponding representation and @dependencyId indicates an ID of a representation having a (supplementary) dependency relationship with the corresponding representation. @associationId indicates an ID of a representation having a reference relationship of another option for decoding and/or presentation rather than a simply supplementary relationship with the corresponding representation. In addition, @associationId may indicate an ID of a representation of another adaptationset having a reference relationship with the corresponding representation. @associationType indicates which type of reference relationship the corresponding representation has with a representation that @associationId identifies. According to an embodiment of the present invention, the type of the reference relationship indicated by @associationType may be denoted by a 4-digit character code.

Referring to a lower part of this figure, according to an embodiment of the present invention, a representation element has "hdre" as the value of @associationtype to signal that a representation having a reference relationship with the representation is a representation corresponding to an enhancement layer for the HDR service.

The lower part of this figure shows an adaptationset schema according to scenario 2. Referring to the lower part of this figure, a base video encoded using a codec "avc1.640828" and an enhancement video encoded using a codec "hevc.760028" are distinguished by different adaptationsets.

An adaptationset element describing an adaptationset corresponding to the base video encoded using the codec "avc1.640828" includes a representation element. The representation element may have "C2" as the value of @id and a segment transmitting the base video encoded using the codec "avc1.640828" corresponding to this representation may be acquired from "segm1HDRbase.mp4".

An adaptationset element describing an adaptationset corresponding to the enhancement video encoded using the codec "hevc.760028" includes a representation element. The representation element may have "C1" as the value of @id and have "C2" as the value of @associationId to signal that a representation that this representation element describes has a reference relationship with a representation having "C2" as the value of @id. In addition, the representation element may have "hdre" as the value of @associationType to signal that a representation that this representation element describes corresponds to the HDR enhancement layer in a relationship with the representation having "C2" as the value of @id. Further, a segment transmitting the enhancement video encoded using the codec "hevc.760028" corresponding to this representation may be acquired from "segm1HDRenhance.mp4".

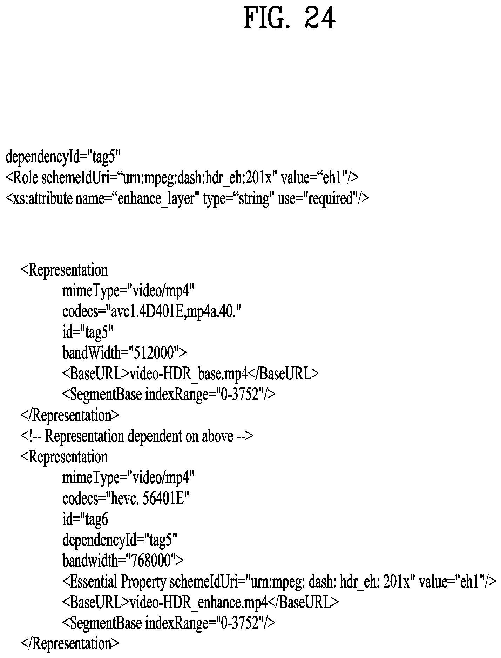

FIG. 24 is a diagram showing a method of signaling an HDR service supporting backward compatibility using an MPD according to another embodiment of the present invention (scenario 31).

Another embodiment of the present invention may distinguish between components using different codecs by representations, signal that there is a dependency relationship between the components using @dependencyId of a representation element of the MPD, and signal which dependency relationship is present between components using @EssentialProperty or @SupplementalProperty in the representation element (scenario 31).

Referring to an upper part of this figure, a representation element may have "tag5" as the value of @dependencyId to signal that a corresponding representation has a dependency relationship with a representation having "tag5" as the value of @id. In addition, an embodiment of the present invention may have "urn:mpeg:dash:hdr_eh:201x" as the value of @schemeIdUri and "eh1" as the value of @value in @EssentialProperty or @SupplementalProperty within the representation element to indicate that the corresponding representation corresponds to an HDR enhancement layer in a dependency relationship with the representation having "tag5" as the value of @id.

A lower part of this figure shows a representation element schema according to scenario 31. Referring to the lower part of this figure, a base video encoded using a codec "avc1.4D401E,mp4a.40" and an enhancement video encoded using a codec "hevc.56401E" are distinguished by different representations.

A representation element describing a representation corresponding to the base video encoded using the codec "avc1.4D401E,mp4a.40" may have "tag5" as the value of @id and a segment transmitting the base video corresponding to this representation may be acquired from "videoHDR_base.mp4".

A representation element corresponding to an enhancement video encoded using the codec "hevc.56401E" may have "tag6" as the value of @id and "tag5" as the value of @dependencyId to signal that a representation that this representation element describes has a dependency relationship with the representation having "tag5" as the value of @id. In addition, @EssentialProperty or @SupplementalProperty in the representation element may have "urn:mpeg:dash:hdr_eh:201x" as the value of @schemeIdUri and "eh1" as the value of @value to indicate that the corresponding representation corresponds to an HDR enhancement layer in a dependency relationship with the representation having "tag5" as the value of @id. Further, a segment transmitting the enhancement video corresponding to the representation may be acquired from "videopHDR_enhance.mp4".

According to another embodiment of the present invention, @EssentialProperty or @SupplementalProperty described above may correspond to an attribute or an element.

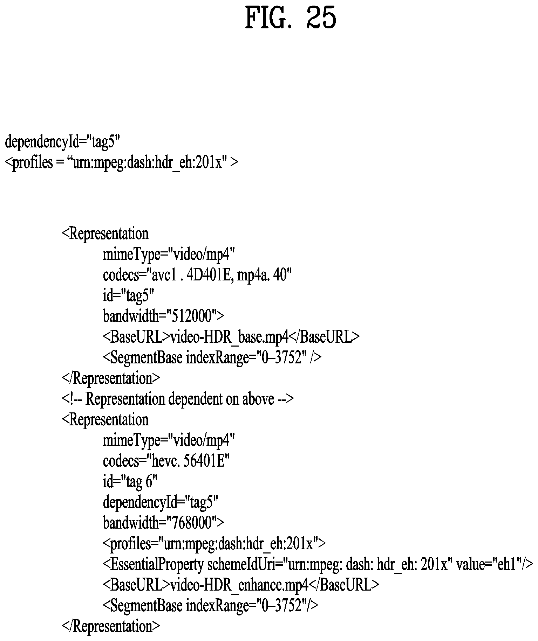

FIG. 25 is a diagram showing a method of signaling an HDR service supporting backward compatibility using an MPD according to another embodiment of the present invention (scenario 32).

Another embodiment of the present invention may distinguish between components using different codecs by representations, signal that there is a dependency relationship between the components using @dependencyId of a representation element of the MPD, and signal which dependency relationship is present between components @profiles in the representation element (scenario 32).

Referring to an upper part of this figure, a representation element according to an embodiment of the present invention may have "tag5" as the value of @dependencyId to indicate a corresponding representation has a dependency relationship with a representation having "tag5" as the value of @id. In addition, an embodiment of the present invention may have "urn:mpeg:dash:hdr_eh:201x" as the value of @profiles in the representation element to indicate that the corresponding representation corresponds to an HDR enhancement layer in a dependency relationship with the representation having "tag5" as the value of @id.

A lower part of this figure shows a representation element schema according to scenario 32. Referring to the lower part of this figure, a base video encoded using a codec "avc1.4D401E,mp4a.40" and an enhancement video encoded using codec "hevc.56401E" are distinguished by different representations.

A presentation element corresponding to the base video encoded using the codec "avc1.4D401E,mp4a.40" may have "tag5" as the value of @id and a segment transmitting the base video corresponding to this representation may be acquired from "videoHDR_base.mp4".

A representation element corresponding to the enhancement video encoded using the codec "hevc.56401E" may have "tag6" as the value of @id and "tag5" as the value of @dependencyId to signal that a representation that this representation element describes has a dependency relationship with a representation having "tag5" as the value of @id. In addition, @profiles in the representation element may have "urn:mpeg:dash:hdr_eh:201x" to indicate that a corresponding representation corresponds to an HDR enhancement layer in a dependency relationship with the representation having "tag5" as the value of @id. In addition, the representation element may include @EssentialProperty or @SupplementalProperty which has been described above.

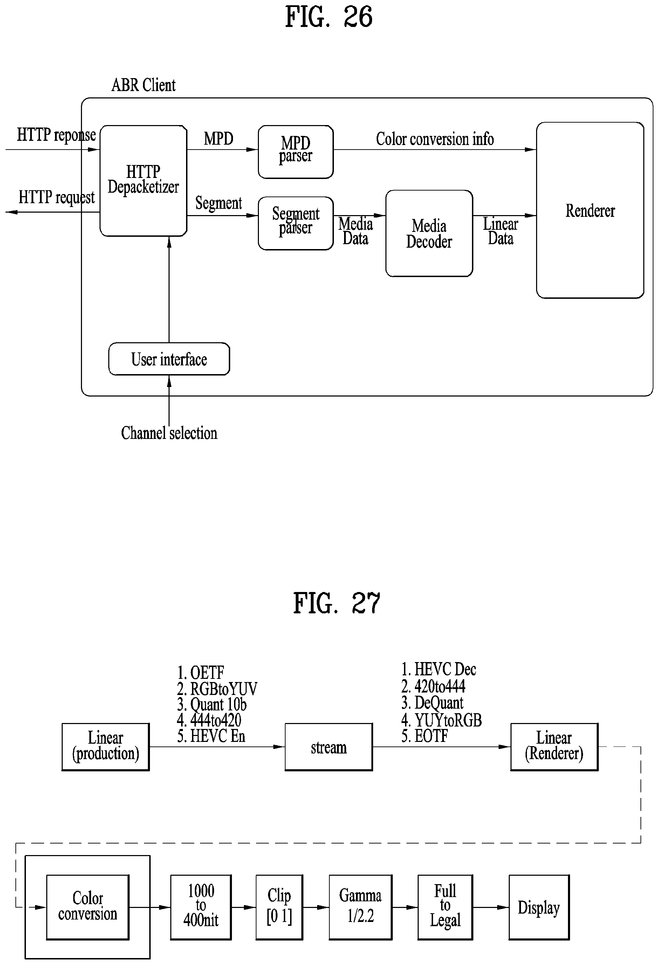

FIG. 26 is a diagram showing a structure of an MPEG DASH-based receiver according to another embodiment of the present invention.

An embodiment of the present invention defines color conversion information in a DASH MPD to implement a wide color gamut (WCG). The color conversion information includes matrix coefficient (Matrix_coefficient) information and color remapping information. An embodiment of the present invention defines the color conversion information within common attributes and/or common elements. The color remapping information may be used for color space conversion. According to an embodiment of the present invention, improved color reproduction may be achieved using the color conversion information, a service announcement as to whether improved color reproduction can be achieved may be provided to a user using the color conversion information, and the buffer and framework of a decoder and a renderer may be initialized through the color conversion information.

An embodiment of the present invention defines DASH MPD constraints to provide a digital video broadcasting (DVB) adaptive bit rate (ABR) unicast/multicast service. The DASH MPD constraints may include MPD labeling, adaptationset profiling, and the like.

Referring to this figure, the receiver according to an embodiment of the present invention requests and receives an MPD and selects and acquires a segment URL in consideration of reception capabilities of a device, a network condition, and/or user selection, based on a description of the received MPD. In a unicast environment, the receiver may receive the selected segment URL by transmitting a request for the segment URL to a content delivery network (CDN) server. In a multicast or broadcast environment, the receiver may receive a receivable segment URL. The receiver classifies the received segment according to a hierarchical unit described in the MPD and stores the classified segment in a buffer. The receiver decodes and renders media data according to the color conversion information of the MPD. The color conversion information, which has been parsed by an MPD parser, may be transmitted to a media decoder and/or a renderer to initialize the decoder and/or the renderer.

An embodiment of the present invention may initialize the buffer and modules during post-processing after decoding and provide service announcement as to whether realistic content can be provided, by describing a profile for HDR and/or WCG, which is an improved realistic service technology, in the MPD.

The Matrix_coefficient information according to an embodiment of the present invention represents information for converting a luma signal and a chroma signal, converted from RGB through a specific coefficient matrix, into arrangement of X and Y or X, Y, and Z primaries. The Matrix_coefficient information is transmitted to the receiver through a specific table which will be described later.

The color remapping information according to an embodiment of the present invention represents information needed to reconstruct a color gamut of an input video to a color gamut suitable for performance of a display. The color remapping information enables more optimized color conversion and may indicate whether more optimized color conversion is possible. The receiver according to an embodiment of the present invention may convert, using the color remapping information, a chroma component and a luma component of data into values optimized for the display by performing procedures using a pre 1-dimensional (ID) lookup table (LUT), a matrix, and/or a post 1D LUT with respect to linear data (e.g., BT.2020 -> BT.709).

The DVB DASH constraints according to an embodiment of the present invention are defined by DVB DASH in an MPD attribute of MPEG DASH and are needed to provide UHD1 phase 2 technology.

FIG. 27 is a diagram showing a color conversion procedure according to an embodiment of the present invention.

A receiver according to an embodiment of the present invention performs the color conversion procedure using color conversion information in an MPD after initializing a decoder and a renderer.

The receiver according to an embodiment of the present invention may convert, using matrix coefficient information, a chroma component and a luma component of linear data after a rendering procedure into X and Y (2-dimension) or X, Y, and Z (3-dimension) coordinates and designate a base color gamut for defining a color space through matrix information.

According to an embodiment of the present invention, the color conversion information including the matrix coefficient information is defined at a system level so that initialization of a receiver operation for color conversion and an expression range of color may be announced at the system level.

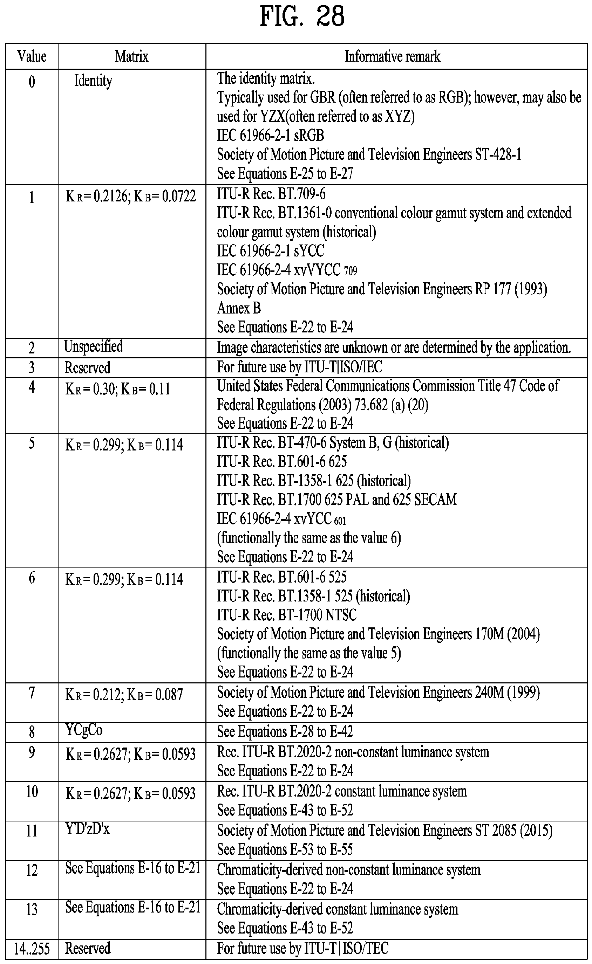

FIG. 28 is a diagram showing matrix coefficient information according to an embodiment of the present invention.

The matrix coefficient information according to an embodiment of the present invention may have values of 0 to 13 as illustrated in this figure.

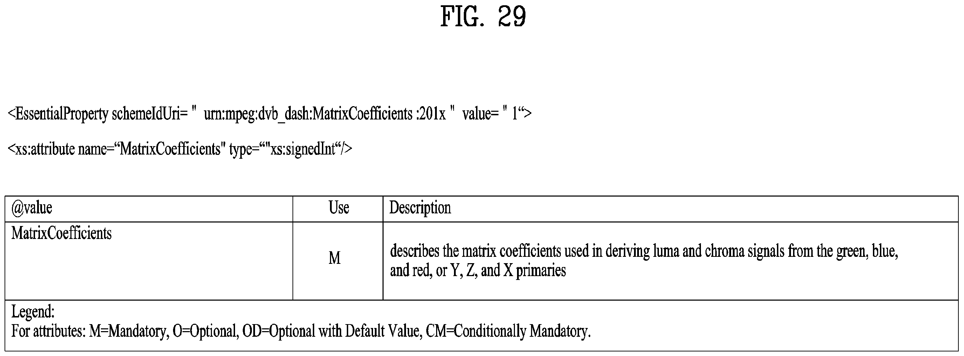

FIG. 29 shows matrix coefficient information defined in an MPD according to an embodiment of the present invention.

The matrix coefficient information according to an embodiment of the present invention may be signaled through an EssentialProperty descriptor or a SupplementaryProperty descriptor. In this case, the EssentialProperty descriptor or the SupplementaryProperty descriptor may correspond to an element or attribute of XML.

According to an embodiment of the present invention, the EssentialProperty descriptor or SupplementaryProperty descriptor including the matrix coefficient information may be included in an adaptationset element when all representations within an adaptationset provide the matrix coefficient information. When all representations within the adaptationset do not provide the matrix coefficient information, the EssentialProperty descriptor or SupplementaryProperty descriptor including the matrix coefficient information may be included in each representation element or each sub-representation element.

According to an embodiment of the present invention, the EssentialProperty descriptor or SupplementaryProperty descriptor including the matrix coefficient information may have "urn:mpeg:dvb_dash:MatrixCoefficients :201x" as the value of @schemeIdUri and have values of 0 to 13 indicating the above-described matrix coefficient information in the previous figure as the value of @value.

Referring to an upper part of this figure, the EssentialProperty descriptor including the matrix coefficient information may have "urn:mpeg:dvb_dash:MatrixCoefficients :201x" as the value of @schemeIdUri and "1" as the value of @value.

Referring to a lower part of this figure, the matrix coefficient information expressed as the value of @value of the EssentialProperty descriptor or SupplementaryProperty descriptor describes matrix coefficients used to derive luma and chroma signals from RGB or XYZ primaries (3 primary colors).

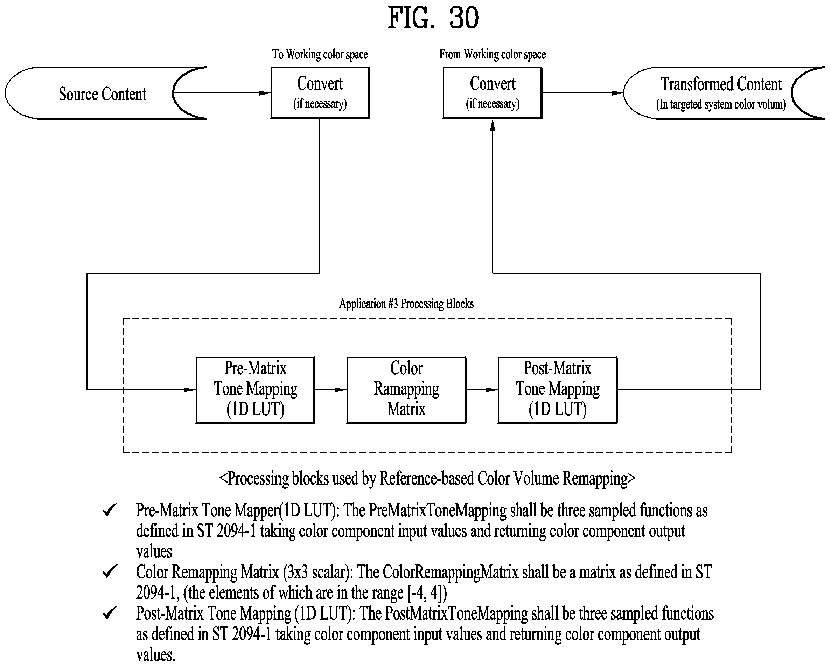

FIG. 30 is a diagram showing a color remapping procedure according to an embodiment of the present invention.

A receiver according to an embodiment of the present invention may initialize a decoder and a renderer using color conversion information of an MPD and then perform the color remapping procedure using color conversion information including color remapping information.

The receiver according to an embodiment of the present invention may convert a color gamut of a video into a color gamut proper for the receiver and display the converted video by performing the color remapping procedure if the receiver does not support a container color gamut when a multicast or broadcast service is provided.

Referring to this figure, according to an embodiment of the present invention, the color remapping procedure, which is a procedure of converting the container color gamut into a color gamut that can be supported by a display device, includes three procedures. The container color gamut represents a color gamut of a container carrying content. That is, in order to transmit content, the color gamut of content should be converted into a color gamut of a transport format. In this case, the color gamut of the transport format indicates the color gamut of the container. The color remapping procedure according to an embodiment of the present invention includes a pre-matrix tone mapping procedure, a color remapping matrix procedure, and/or a post-matrix tone mapping procedure. The pre-matrix tone mapping procedure is performed using three sampled functions defined in standard (e.g. ST20941). In this case, these functions receive a color component value and output a color component value. The pre-matrix tone mapping procedure may use a 1D LUT. The color remapping matrix procedure is performed using a matrix defined in standard (e.g., ST20941). In this case, an element used in this matrix may have values from -4 to 4. The post-matrix tone mapping procedure is performed using three sampled functions defined in standard (e.g., ST20941). In this case, these functions receive a color component value and outputs a color component value. The pre-matrix tone mapping procedure may use the 1D LUT.

An embodiment of the present invention may perform a color conversion procedure which is more efficient and minimizes loss through the three procedures. A broadcast system according to an embodiment of the present invention may define the color remapping information used in the color remapping procedure at a system level to signal a description of the color remapping procedure, application/non-application of the color remapping procedure, a full range/legal range (bits for representing a dynamic range of a TV are allocated. In this case, whether a luma range according to the bits is to use a full range or a legal range so that color does not bleed due to saturation of the TV may be determined based on selection of the TV or characteristic of a stream), a matrix for the color remapping procedure, a transfer characteristic, color primaries, and the like. The receiver according to an embodiment of the present invention may perform the color conversion procedure so that a device requiring color remapping may represent improved colors using the color remapping information including the above-described information. The broadcast system according to an embodiment of the present invention may announce, at a system level, a color expression range of the display device by defining the color remapping information in the MPD and initialize an operation of a decoder and a renderer. Specifically, when the color remapping information (CRI) is present, an SDR TV may initialize the decoder and the renderer that can be seen in an SDR through the CRI included in video supplemental enhancement information (SEI) and an HDR TV may perform decoding and rendering initialization according to information of a stream of an HDR.

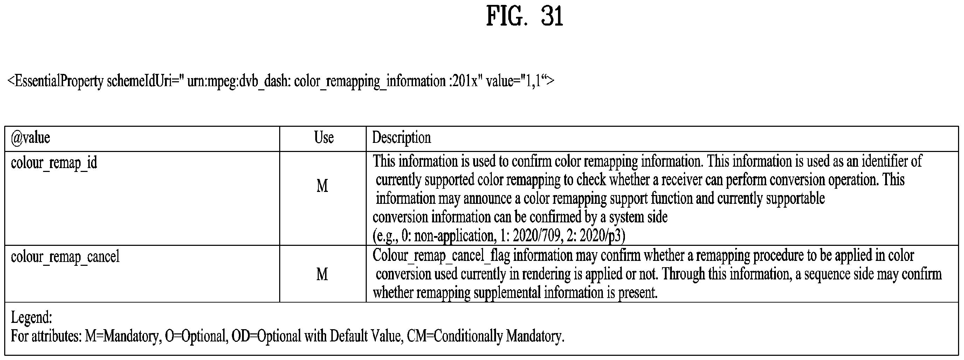

FIG. 31 illustrates color remapping information defined in an MPD according to an embodiment of the present invention.

The color remapping information according to an embodiment of the present invention may be signaled through an EssentialProperty descriptor or a SupplementaryProperty descriptor. Herein, the EssentialProperty descriptor or the SupplementaryProperty descriptor may correspond to an element or an attribute of XML.

According to an embodiment of the present invention, the EssentialProperty descriptor or the SupplementaryProperty descriptor including the color remapping information may be included in an adaptationset element when all representations within an adaptationset provide the color remapping information. When all representations within the adaptationset do not provide the color remapping information, the EssentialProperty descriptor or SupplementaryProperty descriptor including the color remapping information may be included in each representation element or each sub-representation element.

According to an embodiment of the present invention, the EssentialProperty descriptor or SupplementaryProperty descriptor including the color remapping information may have "urn:mpeg:dvb_dash:Matrixcolor remapping info :201x" as the value of @schemeIdUri and represent color remapping ID information and color remapping flag information using the value of @value.

Referring to an upper part of this figure, the EssentialProperty descriptor including the color remapping information may have "urn:mpeg:dvb_dash:color_remapping_informaiton :201x" as the value of @schemeIdUri and "1,1" as the value of @value.

Referring to a lower part of this figure, the color remapping information expressed as the value of @value of the EssentialProperty descriptor or SupplementaryProperty descriptor includes color remapping ID information (colour_remap_id) and/or color remapping flag information (colour_remap_cancel). The color remapping ID information is used to confirm the color remapping information. The color remapping ID information may be used as information for identifying a color remapping procedure. The receiver may confirm whether the receiver is capable of performing the color remapping procedure using the color remapping ID information. The color remapping ID information identifies the color remapping procedure that is supportable by the receiver. The color remapping ID information identifies the color remapping information necessary for the color remapping procedure that is supportable by the receiver. The broadcast system according to an embodiment of the present invention may announce that the color remapping procedure can be provided through the color remapping ID information. Since the color remapping ID information is defined in the MPD which is the system level, the receiver may confirm supportable color remapping information at the system level. According to an embodiment of the present invention, a value 0 indicated by the color remapping ID information indicates that the color remapping procedure is not applied to the receiver, a value 1 indicates that the receiver supports the color remapping information according to BT.2020 or BT.709, and a value 2 indicates that the receiver supports the color remapping information according to BT.2020 or p3. According to an embodiment of the present invention, the color remapping flag information may confirm whether a remapping procedure to be applied in color conversion used currently in rendering is applied or not through the colour_remap_cancel_flag information. Through this information, a sequence side may confirm whether remapping supplementary information is present. That is, an embodiment of the present invention may define the color remapping information within a representation element of the MPD. Thus, the color remapping information is applicable to all SDR/HDR devices.

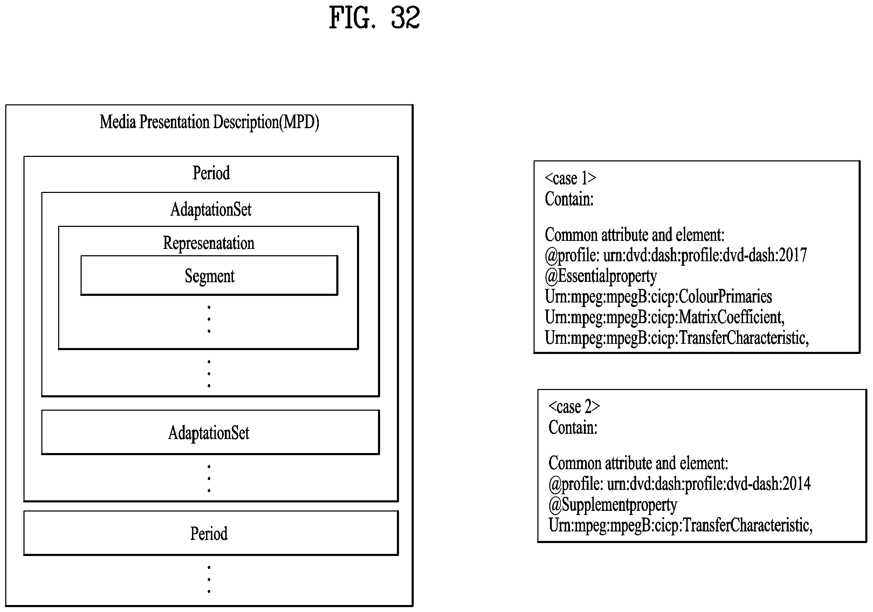

FIG. 32 shows an embodiment for configuring color remapping information (CRI)-based HDR signaling in a DASH MPD.

Current HLG enables backward compatibility of BT2020 (DVB UHD phase1), whereas the CRI may represent a range of up to 709 colors. That is, HLG covers a wider color range.

According to an embodiment of the present invention, a bitstream of an SDR may be converted into a stream of an HDR through the CRI including metadata capable of configuring the HDR in the bitstream. Therefore, a bitstream including the CRI is compatible with all receiver decoders.

Referring to this figure, an HDR receiver having a profile of 2017 as in Case 1 enables decoding of the HDR by signaling the HDR through an essential property element and an SDR (709) receiver having a profile of 2014 as in Case 2 may secure backward compatibility through a supplemental property element. Since the receiver having the profile of 2014 cannot receive HDR signaling of the essential property element, the receiver may acquire information as to whether the CRI is included through the supplemental property element.

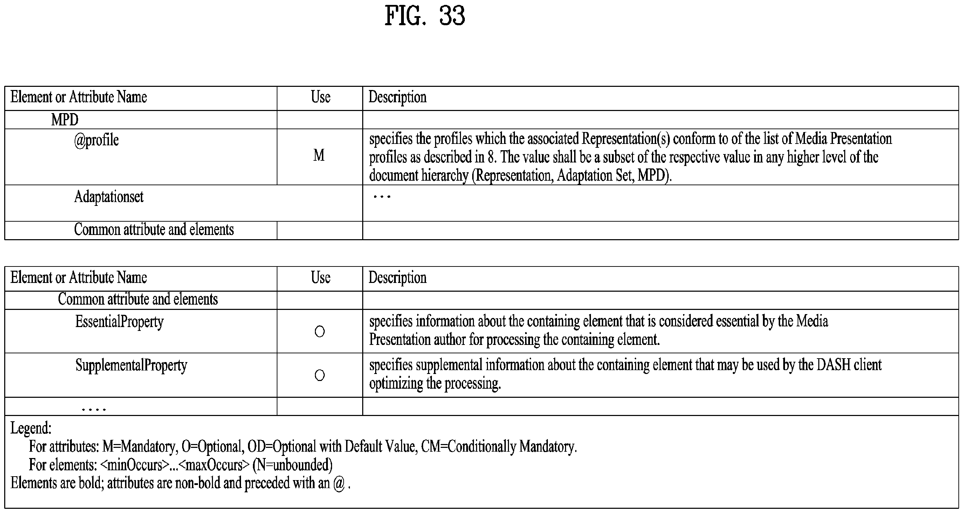

FIG. 33 is a diagram showing DVB DASH constraints according to an embodiment of the present invention.

An MPD according to an embodiment of the present invention includes @profile, an adaptationset element, and/or common attributes and elements. According to an embodiment of the present invention, services such as SD, HD, DVB Phase1, and DVB Phase2 may be signaled through labeling of the MPD and a corresponding service may be signaled through labeling of the MPD. According to an embodiment of the present invention, an existing DASH service may be signaled by determining the value of @profile in the MPD to be "urn:dvb:dash:profile:dvbdash" and the DVB Phase1 service may be signaled by determining the value of @profile to be "urn:dvb:dash:profile:dvbphasel". In addition, the DVB Phase2 service may be signaled by determining the value of @profile to be "urn:dvb:dash:profile:dvbphase2".

The adaptationset element according to an embodiment of the present invention includes the common attributes and elements. The common attributes and elements include an EssentialProperty descriptor and/or a SuplementalProperty descriptor. Herein, the descriptor may correspond to an element or attribute of XML. The common attributes and elements included in the adaptationset element of the MPD include @profile, @framerate, and/or @codec. According to an embodiment of the present invention, a technology category, a codec, a frame rate, and a MIME type of the HDR may be defined using the common attributes and elements and a corresponding service may be acquired. According to an embodiment of the present invention, the value of @profile defined in the adaptationset element is determined to be "urn:dvb:dash:profile:dvbdash#HDR_tech" to signal that a corresponding adaptationset corresponds to HDR technology and the value of @framerate is defined to signal a high frame rate (HFR) indicated by the adaptationset. The value of @codec is defined to signal a codec supported by a video indicated by the adaptationset.

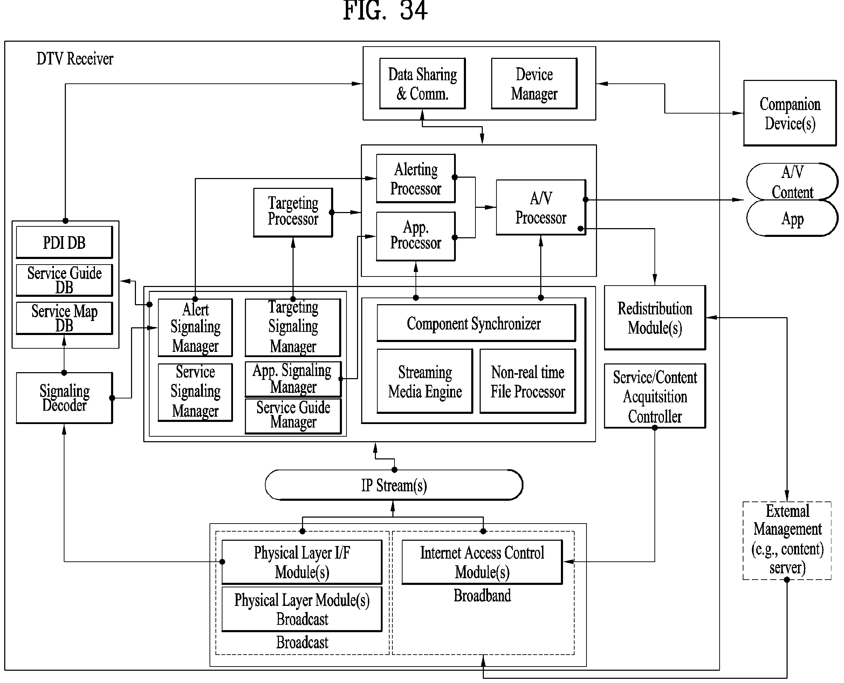

FIG. 34 is a diagram showing a hybrid broadcast reception apparatus according to an embodiment of the present invention.

A hybrid broadcast system may transmit broadcast signals in connection with terrestrial broadcast networks and the Internet. The hybrid broadcast reception apparatus may receive broadcast signals through terrestrial broadcast networks (broadcast networks) and the Internet (broadband). The hybrid broadcast reception apparatus may include physical layer module(s), physical layer I/F module(s), a service/content acquisition controller, Internet access control module(s), a signaling decoder, a service signaling manager, a service guide manager, an application signaling manager, an alert signal manager, an alert signaling parser, a targeting signaling parser, a streaming media engine, a non-real-time file processor, a component synchronizer, a targeting processor, an application processor, an audio/video (A/V) processor, a device manager, a data sharing and communication unit, redistribution module(s), companion device(s), and/or an external management module.

The physical layer module(s) may receive a broadcast related signal through a terrestrial broadcast channel, process the received signal, convert the processed signal into an appropriate format, and deliver the signal to the physical layer I/F module(s).

The physical layer I/F module(s) may acquire an IP datagram from information obtained from the physical layer module(s). In addition, the physical layer I/F module(s) may convert the acquired IP datagram into a specific frame (e.g., RS frame, GSE, etc.).

The service/content acquisition controller may perform a control operation for acquisition of services, content, and signaling data related thereto through broadcast channels and/or broadband channels.

The Internet access control module(s) can control receiver operations for acquiring services, content, etc. through the broadband channels.

The signaling decoder may decode signaling information acquired through the broadcast channels.

The service signaling manager may extract, parse, and manage signaling information related to service scan and services/content from the IP datagram.

The service guide manager may extract announcement information from the IP datagram, manage a service guide (SG) database, and provide a service guide.

The application signaling manager may extract, parse, and manage signaling information related to application acquisition from the IP datagram.

The alert signaling parser may extract, parse, and manage signaling information related to alerting from the IP datagram.

The targeting signaling parser may extract, parse, and manage signaling information related to service/content personalization or targeting from the IP datagram. In addition, the targeting signaling parser may deliver the parsed signaling information to the targeting processor.

The streaming media engine may extract and decode A/V data for A/V streaming from the IP datagram.

The non-real-time file processor may extract, decode, and manage NRT data and file type data such as applications from the IP datagram.

The component synchronizer may synchronize content and services such as streaming A/V data and NRT data.

The targeting processor may process operations related to services/content personalization based on the targeting signaling data received from the targeting signaling parser.

The application processor may process application related information and downloaded application state, and display parameters.

The A/V processor may perform A/V rendering related operations based on decoded A/V data and application data.

The device manager may perform connection and data exchange with external devices. In addition, the device manager may perform operations of managing external devices connectable thereto, such as addition/deletion/update of the external devices.

The data sharing and communication unit may process information related to data transmission and exchange between a hybrid broadcast receiver and external devices. Herein, data that can be transmitted and exchanged between the hybrid broadcast receiver and external devices may be signaling data, A/V data, etc.

The redistribution module(s) may acquire information related to future broadcast services and content when the broadcast receiver cannot directly receive terrestrial broadcast signals. In addition, the redistribution module may support acquisition of future broadcast services and content by future broadcast systems when the broadcast receiver cannot directly receive terrestrial broadcast signals.

The companion device(s) may share audio, video, or signaling data by being connected to the broadcast receiver according to the present invention. The companion device may be an external device connected to the broadcast receiver.

The external management module may refer to a module for providing broadcast services/content. For example, the external management module may be a future broadcast services/content server. The external management module may be an external device connected to the broadcast receiver.

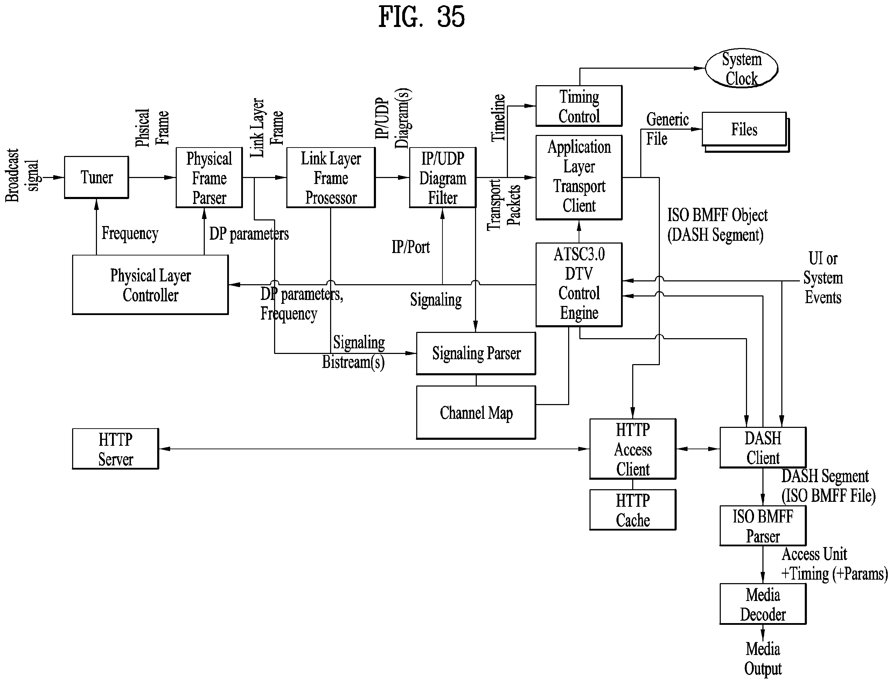

FIG. 35 is a block diagram of a receiver according to an embodiment of the present invention.

The receiver according to the illustrated embodiment may include a tuner, a physical layer controller, a physical frame parser, a link layer frame processor, an IP/UDP datagram filter, a DTV control engine, a ROUTE client, a segment buffer control, an MMT client, an MPU reconstruction, a media processor, a signaling parser, a DASH client, an ISO BMFF parser, a media decoder, and/or an HTTP access client. Each detailed block of the receiver may be a hardware processor.

The tuner may receive and process a broadcast signal through a terrestrial broadcast channel to tune the broadcast signal in a proper form (physical frame, etc.). The physical layer controller may control operations of the tuner, the physical frame parser, etc. using RF information, etc. of a broadcast channel to be received. The physical frame parser may parse the received physical frame and acquire a link layer frame, etc. via processing related to the physical frame.

The link layer frame processor may acquire link layer signaling, etc. from the link layer frame or acquire an IP/UDP datagram and perform related calculation. The IP/UDP datagram filter may filter a specific IP/UDP datagram from the received IP/UDP datagram. The DTV control engine may mange an interface between components and control each operation via transmission of a parameter, etc.

The ROUTE client may process a real-time object delivery over unidirectional transport (ROUTE) packet for supporting real-time object transmission and collect and process a plurality of packets to generate one or more ISO base media file format (ISO BMFF) objects. The segment buffer control may control a buffer related to segment transmission between the route client and the dash client.

The MMT client may process an MPEG media transport (MMT) transport protocol packet for supporting real-time object transmission and collect and process a plurality of packets. The MPU reconstruction may reconfigure a media processing unit (MPU) from the MMTP packet. The media processor may collect and process the reconfigured MPU.

The signaling parser may acquire and parse DTV broadcast service related signaling (link layer/service layer signaling) and generate and/or manage a channel map, etc. based thereon. This component may process low level signaling and service level signaling.

The DASH client may perform real-time streaming or adaptive streaming related calculation and process an acquired DASH segment, etc. The ISO BMFF parser may extract audio/video data, a related parameter, etc. from the ISO BMFF object. The media decoder may process decoding and/or presentation of the received audio and video data. The HTTP access client may make a request for specific information to the HTTP server and process a response to the request.

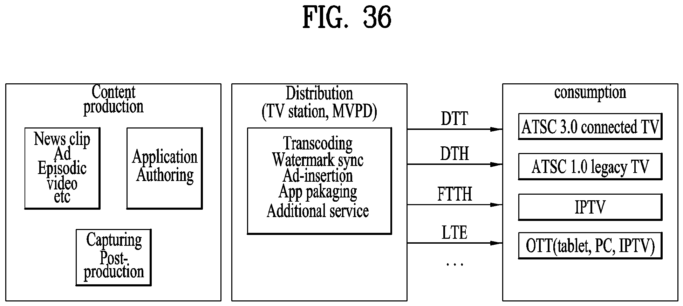

FIG. 36 is a diagram showing a structure of a broadcast transmission/reception system according to an embodiment of the present invention.

According to an embodiment of the present invention, content production and content transmission are separated. A terrestrial broadcast station transmits broadcast services through a broadcast base station of each region. In the case of paid broadcast, a multichannel video program distributor (MVPD) transmits broadcast services. Currently, the MVPD has increasingly grown to provide over-the-top (OTT) and IPTV services as well as a retransmission service of terrestrial content as a transmission operator occupying most broadcast services. The MVPD inserts a watermark or advertisements into content received through a content operator or performs transcoding or repackaging such as application packaging to transmit content to a target device.

When an ATSC 3.0 service is transmitted through the MVPD, content is converted into a receivable stream through specific processing and then is transmitted. Since an ATSC 3.0 stream does not consider backward compatibility, an ATSC 3.0 receiver may receive the ATSC 3.0 stream with no problem. However, a legacy TV (ATSC 1.0) cannot receive the ATSC 3.0 stream. The MVPD may convert the ATSC 3.0 stream so that the legacy TV may receive the ATSC 3.0 stream.

At present, an ATSC 3.0 MVPD related standardization group is discussing technology for converting the ATSC 3.0 stream that does not support backward compatibility into a stream that the legacy TV can receive. According to an embodiment of the present invention, a legacy receiver may render UHD content by converting attributes for the UHD content of the ATSC 3.0 stream into information in the ATSC 1.0 stream. According to an embodiment of the present invention, an essential field or attribute is designated for easy conversion in a procedure of converting the ATSC 3.0 stream into the ATSC 1.0 stream. According to an embodiment of the present invention, even the MVPD may provide an ATSC 3.0 broadcast service by converting the ATSC 3.0 stream through accurate transcoding determined by standardization using a method of converting the ATSC 3.0 stream into the ATSC 1.0 stream. Furthermore, an apparatus for performing transcoding may be provided.

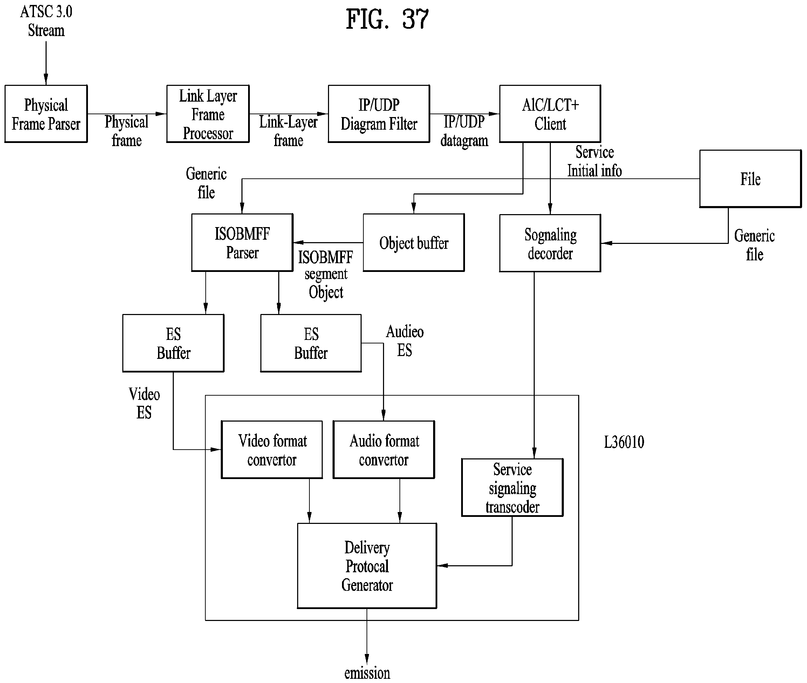

FIG. 37 is a diagram showing an embodiment of converting an ATSC 3.0 stream into an ATSC 1.0 stream.

Referring to this figure, an MVPD according to an embodiment of the present invention may receive the ATSC 3.0 stream and convert the ATSC 3.0 stream into the ATSC 1.0 stream.

According to an embodiment of the present invention, a physical frame parser receives the ATSC 3.0 stream to process a physical frame included in the ATSC 3.0 stream and parses a link layer frame. A link layer frame processor processes the link layer frame to parse an IP/UDP datagram. An IP/UDP diagram filter processes the IP/UDP datagram to parse an asynchronous layered coding (ALC)/layered coding transport (LCT) packet including desired data. An ALC/LCT client processes the ALC/LCT packet to parse object and/or signaling information. A signaling decoder parses, from the signaling information, a USBD including information for identifying an ATSC 3.0 service, an STSID describing transmission information of the ATSC 3.0 service, and/or a DASH MPD defining a content component of the ATSC 3.0 service. An object buffer stores the parsed object and transmits the stored object to an ISOBMFF parser. The ISOBMFF parser parses a video elementary stream (ES) and an audio ES from the object and transmits the parsed ESs to an ES buffer.

According to another embodiment of the present invention, content may be received and processed in a file format. If content of the file format is received, the ISOBMFF parser and the signaling decoder process the content of the file format and signaling information.

The MVPD according to an embodiment of the present invention includes a stream conversion processor L36010. The stream conversion processor L36010 includes a video format converter, an audio format converter, a service signaling transcoder, and/or a delivery protocol generator. The service signaling transcoder according to an embodiment of the present invention transcodes the signaling information received from the signaling decoder with reference to service information and/or essential signaling information (service information) describing content information. The video format converter converts a video format and the audio format converter converts an audio format. The converted video, audio, and/or signaling information are input to the delivery protocol generator. The delivery protocol generator converts a transmission protocol of the input video, audio, and/or signaling information into an IPTV, OTT, or DTT format according to a target transmission format.

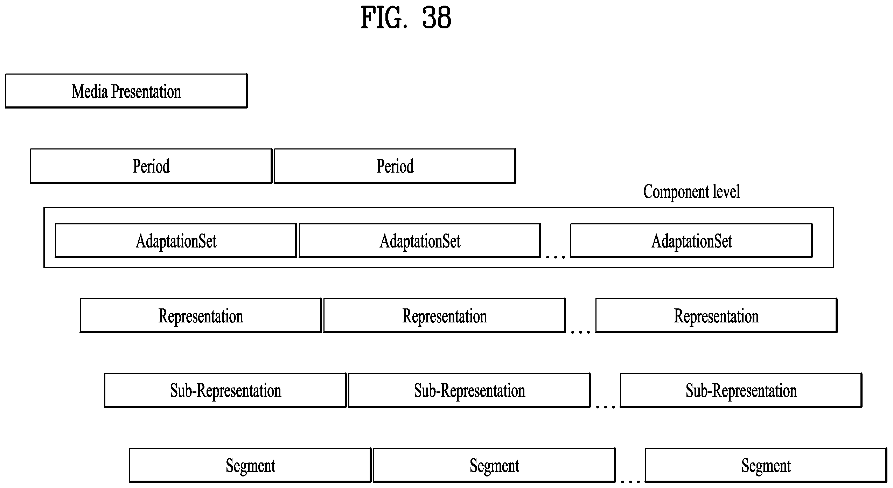

FIG. 38 is a diagram showing a structure of an MPEG DASH MPD according to an embodiment of the present invention.

According to an embodiment of the present invention, in order to ideally display UHD HDR content, RGB should be processed to render the content by a combination of an optical chroma component and an optimal luminance (luma) component. To this end, a transmission side may define chromaticity information of the content. The chromaticity information includes colour_primaries, transfer_characteristics, and/or matrix_coefficients. Herein, chromaticity is a concept including color and saturation.

Referring to this figure, in an ATSC 3.0 system, an attribute of a content component may be defined in an adaptationset element within a manifest file of the MPD.

According to an embodiment of the present invention, HDR technology is defined to configure an HDR having a higher image level than an image level of a current SDR TV. This HDR technology includes perceptual quantizer (PQ) technology and a hybrid log gamma (HLG) technology. According to an embodiment of the present invention, an attribute of the PQ technology and/or the HLG technology may be described in the adaptationset element in the MPD so that a receiver capable of receiving and displaying HDR content may receive a DASH segment that transmits a video component of the HDR content.

According to an embodiment of the present invention, an EssentialProperty descriptor and a SupplementalProperty descriptor are defined as the values of @schemeUri and @value. @schemeUri and @value may be described in the form of an identification character string and codec independent code points (CICP).

According to an embodiment of the present invention, the range of color primaries of UHD HDR video may be described through colour_primaries information. Herein, the range of the color primaries has the same meaning as a color gamut. According to an embodiment of the present invention, matrix coefficients may be described through matrix_coefficients information to represent colors of the UHD HDR video. According to an embodiment of the present invention, an opto-electronic transfer function (OETF) or an electro-optical transfer function (EOTF) applied to the UHD HDR video may be described through transfer_characteristics information. A reception side may perform decoding and rendering considering a rendering purpose of the transmission side through the transfer_characteristics information. According to an embodiment of the present invention, the colour_primaries information, transfer_characteristics information, and/or matrix_coefficients information may be defined within the adaptation element of the MPD. The receiver may identify whether content described by this information can be decoded and/or rendered and may consume the content when the content can be decoded and/or rendered.

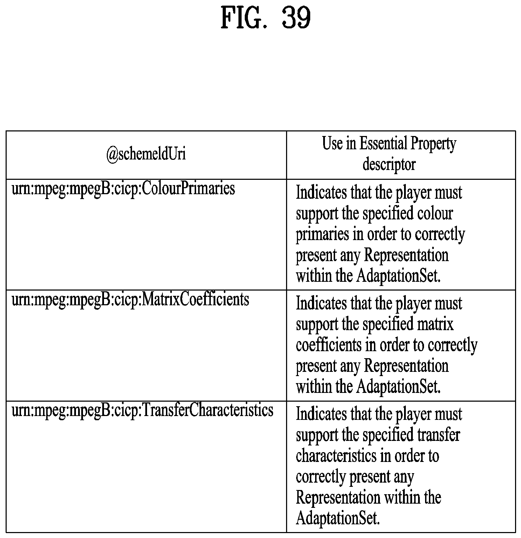

FIG. 39 is a diagram showing values of @schemeIdUri of an EssentialProperty descriptor for providing an HDR service according to an embodiment of the present invention.

According to an embodiment of the present invention, a color gamut of an HDR video may be signaled through an EssentialProperty descriptor having "urn:mpeg:mpegB:cicp:ColourPrimaries" as the value of @schemeIdUri and this descriptor indicates that a player should support the color gamut described in this descriptor in order to correctly present a representation within a corresponding adaptationset. Matrix coefficient information expressing the colors of the HDR video may be signaled through the EssentialProperty descriptor having "urn:mpeg:mpegB:cicp:MatrixCoefficients" as the value of @schemeIdUri and this descriptor indicates that the player should support matrix coefficients described in this descriptor in order to correctly present a representation within a corresponding adaptationset. Information about OETF or EOTF applied to the HDR video may be signaled through the EssentialProperty descriptor having "urn:mpeg:mpegB:cicp:TransferCharacteristics" as the value of @schemeIdUri and this descriptor indicates that the player should support the information about EOTF or OETF described in this descriptor in order to correctly present a representation within a corresponding adaptationset.

According to an embodiment of the present invention, a broadcast system may identify an HDR video to which PQ technology is applied by defining an EssentialProperty descriptor having "urn:mpeg:mpegB:cicp:ColourPrimaries" as the value of @schemeUri and having @value="9" (this means a BT.2020 color gamut), an EssentialProperty descriptor having "urn:mpeg:mpegB:cicp:MatrixCoefficients" as the value of @schemeUri and having @value="9", and an EssentialProperty descriptor having "urn:mpeg:mpegB:cicp:TransferCharacteristics" as the value of @schemeUri and having @value="16" (this means PQ EOTF) within the adaptationset element of the MPD.

According to another embodiment of the present invention, a broadcast system may identify an HDR video to which HLG technology is applied by defining an EssentialProperty descriptor having "urn:mpeg:mpegB:cicp:ColourPrimaries" as the value of @schemeUri and having @value="9" (this means a BT.2020 color gamut), an EssentialProperty descriptor having "urn:mpeg:mpegB:cicp:MatrixCoefficients" as the value of @schemeUri and having @value="9", an EssentialProperty descriptor having "urn:mpeg:mpegB:cicp:TransferCharacteristics" as the value of @schemeUri and having @value="14" (this means BT.2020 OETF), and a SupplementalProperty descriptor having "urn:mpeg:mpegB:cicp:TransferCharacteristics" as the value of @schemeUri and having @value="18" (preferred transfer characteristics, this means BT.2100 HLG system, and is the same as alternative SEI) within the adaptationset element of the MPD. HLG technology represents technology capable of maintaining backward compatibility even in an SDR (100 nits) device by newly defining OETF. Since the HDR video to which HLG technology is applied may express up to SDR, an SDR TV having a BT.2020 color gamut range through technology maintaining backward compatibility may display the HDR video. According to an embodiment of the present invention, a stream compatible with SDR may be signaled through the EssentialProperty descriptor and a stream for HDR rendering may be signaled through the SupplementalProperty descriptor. That is, an SDR receiver may use the EssentialProperty descriptor to display the HDR video through an SDR display. An HDR receiver may use the SupplementalProperty descriptor as well as the EssentialProperty descriptor to display the HDR video.

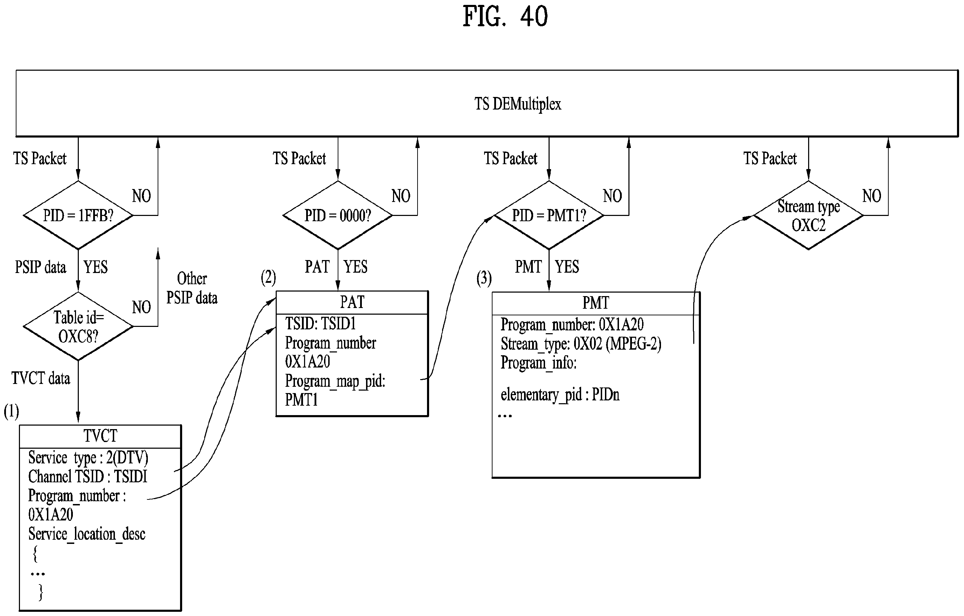

FIG. 40 is a diagram showing a service initialization procedure in an ATSC 1.0 system or an MPEG 2 system according to an embodiment of the present invention.

According to an embodiment of the present invention, an ATSC 1.0 receiver initializes a service and configures an electronic program guide (EPG) based on MPEG2 system-based program and system information protocol (PSIP) information.

Referring to (1) of this figure, the receiver may identify a service and a stream ID through a TSID of a channel and a service type defined in an ATSC PSIP terrestrial virtual channel table (TVCT) and identify a video stream and an audio stream using stream_type and a PID of a stream transmitted in a corresponding channel through a service location descriptor (service_location_desc) within the TVCT. According to an embodiment of the present invention, stream_type corresponding to an UHD SDR and HLG may be defined as 0x24 (HEVC). Since an UHD HDR (PQ) cannot support compatibility in a legacy SDR TV, a new Stream_type value may be defined. A broadcast system according to an embodiment of the present invention may signal HDR technology through an HEVC descriptor.

Referring to (2) and (3) of this figure, the receiver may initialize a program association table (PAT) and a program map table (PMT) of the MPEG 2 system and identify video and audio through stream_type and a PID. The receiver may identify an attribute of an ES through elementary information of the PMT. In the elementary information of the PMT, stream_type of the UHD SDR and HLG may be defined as 0x24 (HEVC). Since the legacy SDR TV cannot support compatibility with the UHD HDR (PQ), a new Stream_type value may be defined. For example, the broadcast system may identify a corresponding stream by defining the value of stream_type of a UHD HDR (PQ) video stream as 0x25. The broadcast system according to an embodiment of the present invention may signal HDR technology through an HEVC descriptor.

The HEVC descriptor according to an embodiment of the present invention may be included in TVCT, PMT, etc.

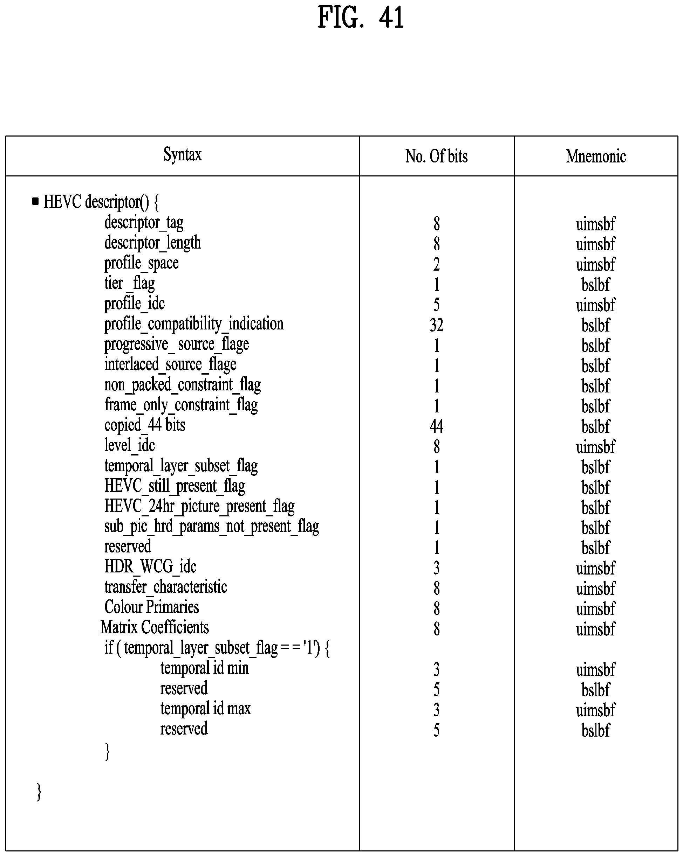

FIG. 41 is a diagram showing a configuration of an HEVC descriptor according to an embodiment of the present invention.

The HEVC descriptor according to an embodiment of the present invention represents a descriptor for delivering an attribute of HEVC video. HEVC may provide scalable frames per second (fps) through reproduction of a temporal layer to a layer configured at a video level.

The HEVC descriptor according to an embodiment of the present invention includes a profile_space field for interpreting profile_idc and profile_compatibility_indication, a tier_flag field for distinguishing between a main tier and a high tier, a profile_idc field representing profiles (e.g., main profile and main10 profile) defined in an HEVC video specification, a profile_compatibility_indication field indicating compatibility with a video profile of an HEVC video stream, a progressive_source_flag field and an interlaced_source_flagfield indicating a scanning scheme of a screen, a non_packed_constraint_flag field indicating whether arrangement SEI messages are included in a coded video sequence (CVS), a frame_only_constraint_flag field indicating whether field_seq_flag is present, a level_idc field indicating a video level (level 5 or level 5.1) defined in an HEVC specification, a temporal_layer_subset_flag field indicating whether a stream capable of reproducing a temporal layer is included, an HEVC_still_present_flag field indicating whether a still image is present in an HEVC video, an HEVC_24hr_picture_present_flag field indicating whether a 24-hour picture is included in an HEVC video stream, a temporal_id_min field for defining a minimum value of a temporal ID value, and/or a temporal_id_max field for defining a maximum value of the temporal ID value.

The HEVC descriptor according to an embodiment of the present invention further includes an HDR_WCG_idc field, a transfer_characteristic field, a ColourPrimaries field, and/or a MatrixCoefficients field. A detailed description of the above fields will be given with reference to the next figure.

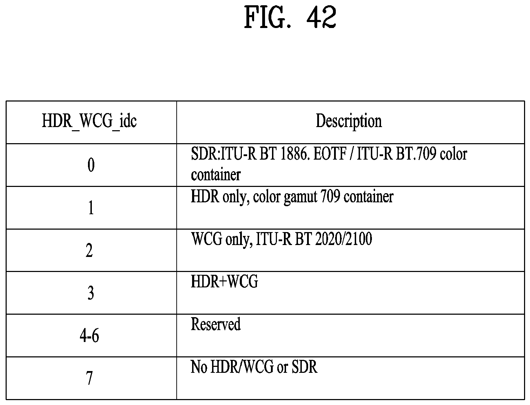

FIG. 42 is a diagram showing a description of an HDR_WCG_idc field according to an embodiment of the present invention.

A broadcast system according to an embodiment of the present invention may signal detailed encoding information of a UHD HDR stream by defining the HDR_WCG_idc field, the transfer_characteristic field, the ColourPrimaries field, and/or the MatrixCoefficients field in the HEVC descriptor. A receiver may pre-discern information described in the fields defined at a system level and identify whether a corresponding stream can be reproduced. Upon receiving scalable HEVC or layered HEVC, the receiver may identify realistic content of HDR/WCG using the descriptor. The receiver may identify and render an HDR/WCG stream using the descriptor when an HDR/WCG service is transmitted (based on simulcast) together with a PID of an MPEG2 video or AVC stream supporting backward compatibility. Simulcast means that the same program is broadcast through respective streams.

The HDR_WCG_idc field according to an embodiment of the present invention describes an HDR characteristic and/or WCG characteristic of a corresponding video. If the value of this field is 0, this indicates that the video is an SDR video according to BT.1886 and is a video having a color gamut container according to BT.709. If the value of the field is 1, this indicates that the video is an HDR video having a color gamut container according to BT.709. If the value of the field is 2, this indicates that the video is a WCG video having a color gamut container according to BT.2020/2100. If the value of the field is 3, this indicates that the video is an HDR video and a WCG video. If the value of the field is 4 to 6, this indicates the field is reserved. If the value of the field is 7, this indicates that the video is not an HDR video and a WCG video but is an SDR video.

According to an embodiment of the present invention, the value of the HDR_WCG_idc field may be 2 and the value of the transfer_characteristic field may be 18 in order to signal HLG technology. According to an embodiment of the present invention, content having a container color gamut according to BT. 2020 and an SDR is rendered within the SDR through a combination of the HDR_WCG_idc field and the transfer_characteristic field and content supporting HLG may be reproduced according to brightness of HDR content. According to an embodiment of the present invention, the ColourPrimaries field and the MatrixCoefficients field may also have a value (=9) indicating a container color gamut according to BT. 2020.

According to another embodiment of the present invention, the value of the HDR_WCG_idc field may be 3 and the value of the transfer characteristic field may be 16 in order to signal PQ technology.

An MVPD according to an embodiment of the present invention may receive an ATSC 3.0 stream, identify a UHD HDR stream using DASH MPD information, segment initialization information, and/or video high level information in the ATSC 3.0 stream, convert the ATSC 3.0 stream into an ATSC 1.0 stream, and then transmit the ATSC 1.0 stream to a reception side.

According to an embodiment of the present invention, semantics of the HDR_WCG_idc field may be distinguished by allocating only relationship of an SDR, an HDR, and a WCG using a bit value. Detailed technology code values of the HDR/SDR may be signaled through three HDR metadata following this field. According to an embodiment of the present invention, a technology group such as PQ10 and HLG10 is distinguished through this field and HDR metadata following this field so that whether the stream is capable of being received by a system may be distinguished.

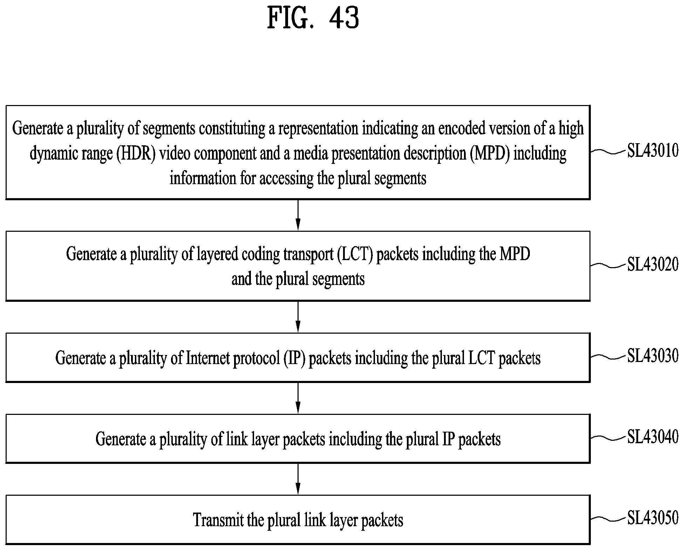

FIG. 43 is a diagram showing a broadcast signal transmission method according to an embodiment of the present invention.

The broadcast signal transmission method according to an embodiment of the present invention includes generating a plurality of segments constituting a representation indicating an encoded version of an HDR video component and an MPD including information for accessing the plural segments (SL43010), generating a plurality of LCT packets including the MPD and the plural segments (SL43020), generating a plurality of IP packets including the plural LCT packets (SL43030), generating a plurality of link layer packets including the plural IP packets (SL43040), and/or transmitting the plural link layer packets (SL43050). The MPD may include an adaptationset element describing an adaptationset indicating a set of interchangeable encoded versions of the HDR video component. The adaptationset element may include a representation element describing the representation and an essential property element describing essential information for processing the adaptationset. The essential property element may include matrix coefficient information used to derive a luma signal and a chroma signal from an RGB color gamut or an XYZ color gamut of the HDR video component.

According to another embodiment of the present invention, the adaptationset element may include another essential property element including color remapping information needed to remap a color sample of the HDR video component to a color gamut different from a color gamut of the HDR video component.

According to another embodiment of the present invention, the color remapping information may include information for identifying the color remapping information to be applied to the HDR video component and information indicating whether to apply the color remapping information to the HDR video component.

According to another embodiment of the present invention, the broadcast signal transmission method may further include generating a plurality of SDR segments constituting an SDR representation indicating an encoded version of an SDR video component. The MPD may include information for accessing the plural SDR segments and include an SDR adaptationset element describing an SDR adaptationset indicating a set of interchangeable encoded versions of the SDR video component. The adaptationset element may include a role element indicating that the adaptationset is an enhancement layer for providing an HDR service. The representation element may include information indicating that the representation has a dependency relationship with the SDR representation. The plural LCT packets may include the plural SDR segments.

According to another embodiment of the present invention, the broadcast signal transmission method may further include generating a plurality of SDR segments constituting an SDR representation indicating an encoded version of an SDR video component. The MPD may include information for accessing the plural SDR segments and include an SDR adaptationset element describing an SDR adaptationset indicating a set of interchangeable encoded versions of the SDR video component. The representation element may include information indicating that the representation has a reference relationship with the SDR representation and include information indicating that the reference relationship is a relationship that the representation refers to the SDR representation as an enhancement layer for providing an HDR service. The plural LCT packets may include the plural SDR segments.

According to another embodiment of the present invention, the broadcast signal transmission method may further include generating a plurality of SDR segments constituting an SDR representation indicating an encoded version of an SDR video component. The MPD may include information for accessing the plural SDR segments. The adaptationset element may include an SDR representation element describing the SDR representation. The representation element may include information indicating that the representation has a dependency relationship with the SDR representation and include another essential property element indicating that the representation is an enhancement layer for providing an HDR service. The plural LCT packets may include the plural SDR segments.

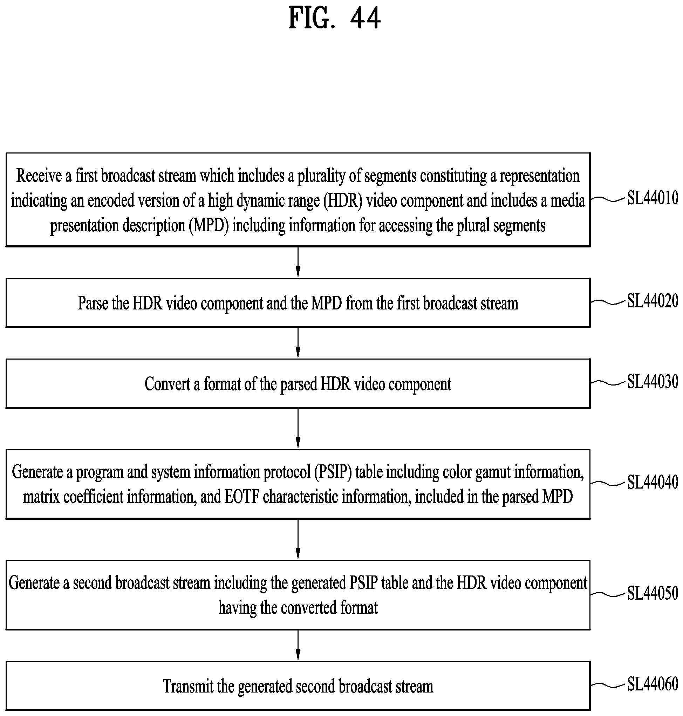

FIG. 44 is a diagram showing a broadcast signal transmission method according to another embodiment of the present invention.

The broadcast signal transmission method according to an embodiment of the present invention includes receiving a first broadcast stream which includes a plurality of segments constituting a representation indicating an encoded version of an HDR video component and includes an MPD including information for accessing the plural segments (SL44010), parsing the HDR video component and the MPD from the first broadcast stream (SL44020), converting a format of the parsed HDR video component (SL44030), generating a program and system information protocol (PSIP) table including color gamut information, matrix coefficient information, and EOTF characteristic information, included in the parsed MPD (SL44040), generating a second broadcast stream including the generated PSIP table and the HDR video component having the converted format (SL44050), and/or transmitting the generated second broadcast stream (SL44060). The MPD may include the color gamut information indicating a color gamut of the HDR video component, the matrix coefficient information used to derive a luma signal and a chroma signal from the color gamut of the HDR video component, and the EOTF characteristic information applied to the HDR video component. The second broadcast stream may be generated according to a transport protocol different from the first broadcast stream.

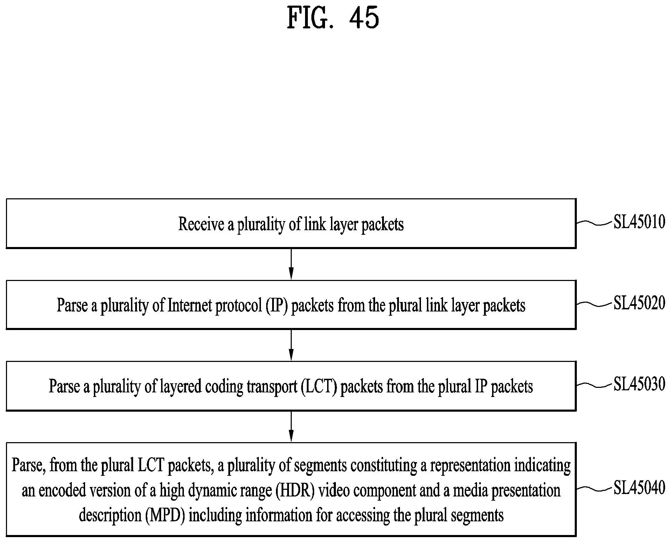

FIG. 45 is a diagram showing a broadcast signal reception method according to an embodiment of the present invention.

The broadcast signal reception method according to an embodiment of the present invention may include receiving a plurality of link layer packets (SL45010), parsing a plurality of IP packets from the plural link layer packets (SL45020), parsing a plurality of LCT packets from the plural IP packets (SL45030), and/or parsing, from the plural LCT packets, a plurality of segments constituting a representation indicating an encoded version of an HDR video component and an MPD including information for accessing the plural segments (SL45040). The MPD may include an adaptationset element describing an adaptationset indicating a set of interchangeable encoded versions of the HDR video component. The adaptationset element may include a representation element describing the representation and an essential property element describing essential information for processing the adaptationset. The essential property element may include matrix coefficient information used to derive a luma signal and a chroma signal from an RGB color gamut or an XYZ color gamut of the HDR video component.

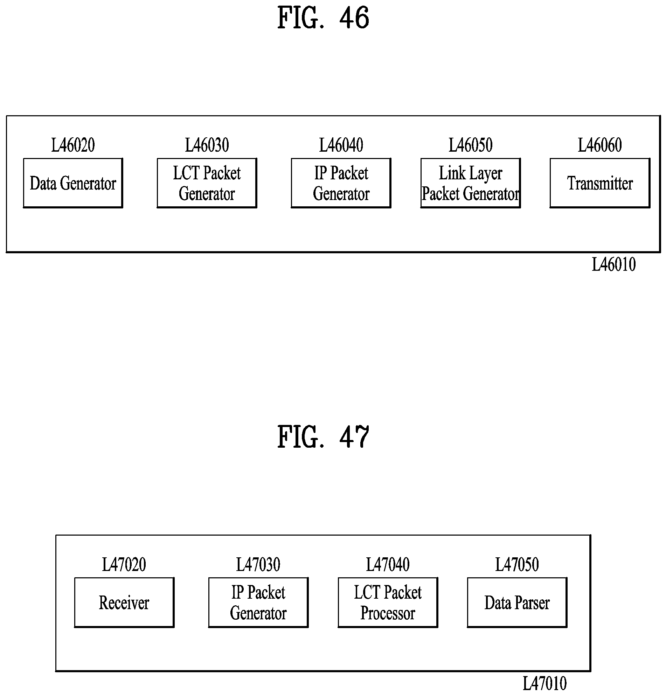

FIG. 46 is a diagram showing the configuration of a broadcast signal transmission apparatus according to an embodiment of the present invention.

A broadcast signal transmission apparatus L46010 according to an embodiment of the present invention may include a data generator L46020 for generating a plurality of segments constituting a representation indicating an encoded version of an HDR video component and an MPD including information for accessing the plural segments, a LCT packet generator L46030 for generating a plurality of LCT packets including the MPD and the plural segments, an IP packet generator L46040 for generating a plurality of IP packets including the plural LCT packets, a link layer packet generator L46050 for generating a plurality of link layer packets including the plural IP packets, and/or a transmitter for transmitting the plural link layer packets. The MPD may include an adaptationset element describing an adaptationset indicating a set of interchangeable encoded versions of the HDR video component. The adaptationset element may include a representation element describing the representation and an essential property element describing essential information for processing the adaptationset. The essential property element may include matrix coefficient information used to derive a luma signal and a chroma signal from an RGB color gamut or an XYZ color gamut of the HDR video component.

FIG. 47 is a diagram showing a configuration of a broadcast signal reception apparatus according to an embodiment of the present invention.

A broadcast signal reception apparatus L47010 according to an embodiment of the present invention may include a receiver L47020 for receiving a plurality of link layer packets, an IP packet processor L47030 for parsing a plurality of IP packets from the plural link layer packets, a LCT packet processor L47040 for parsing a plurality of LCT packets from the plural IP packets, and/or a data parser L47050 for parsing, from the plural LCT packets, a plurality of segments constituting a representation indicating an encoded version of an HDR video component and an MPD including information for accessing the plural segments. The MPD may include an adaptationset element describing an adaptationset indicating a set of interchangeable encoded versions of the HDR video component. The adaptationset element may include a representation element describing the representation and an essential property element describing essential information for processing the adaptationset, The essential property element may include matrix coefficient information used to derive a luma signal and a chroma signal from an RGB color gamut or an XYZ color gamut of the HDR video component.

Modules or units may be processors executing consecutive processes stored in a memory (or a storage unit). The steps described in the aforementioned embodiments can be performed by hardware/processors. Modules/blocks/units described in the above embodiments can operate as hardware/processors. The methods proposed by the present invention can be executed as code. Such code can be written on a processor-readable storage medium and thus can be read by a processor provided by an apparatus.

While the embodiments have been described with reference to respective drawings for convenience, embodiments may be combined to implement a new embodiment. In addition, designing computer-readable recording media storing programs for implementing the aforementioned embodiments is within the scope of the present invention.

The apparatus and method according to the present invention are not limited to the configurations and methods of the above-described embodiments and all or some of the embodiments may be selectively combined to obtain various modifications.

The methods proposed by the present invention may be implemented as processor-readable code stored in a processor-readable recording medium included in a network device. The processor-readable recording medium includes all kinds of recording media storing data readable by a processor. Examples of the processor-readable recording medium include a ROM, a RAM, a CD-ROM, a magnetic tape, a floppy disk, an optical data storage device and the like, and implementation as carrier waves such as transmission over the Internet. In addition, the processor-readable recording medium may be distributed to computer systems connected through a network, stored and executed as code readable in a distributed manner.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Such modifications should not be individually understood from the technical spirit or prospect of the present invention.

Both apparatus and method inventions are mentioned in this specification and descriptions of both the apparatus and method inventions may be complementarily applied to each other.

In the specification, both the apparatus invention and the method invention are mentioned and description of both the apparatus invention and the method invention can be applied complementarily.

### [Mode for Invention]

Various embodiments have been described in the best mode for carrying out the invention.

### [Industrial Applicability]

The present invention is applied to broadcast signal providing fields.

## Claims

1. A method of transmitting a media content, the method comprising:
generating segments including a high dynamic range, HDR, video component and a media presentation description, MPD, including information for accessing the segments,
wherein the MPD includes an adaptation set element describing an adaptation set indicating a set of interchangeable encoded versions of the HDR video component,
wherein the adaptation set element includes a representation element describing a representation including the segments and an essential property element describing essential information for processing the adaptation set, and
wherein the essential property element includes matrix coefficient information used to derive a luma signal and a chroma signal from an RGB color gamut or an XYZ color gamut of the HDR video component; and
transmitting the segments and the MPD.

2. The method according to claim 1, wherein the adaptation set element includes another essential property element including color remapping information needed to remap a color sample of the HDR video component to a color gamut different from a color gamut of the HDR video component.

3. The method according to claim 2, wherein the color remapping information includes information for identifying the color remapping information to be applied to the HDR video component and information indicating whether to apply the color remapping information to the HDR video component.

4. The method according to claim 1, wherein the segments correspond to standard dynamic range, SDR, segments constituting an SDR representation indicating an encoded version of an SDR video component,
wherein the MPD includes information for accessing the SDR segments and includes an SDR adaptation set element describing an SDR adaptation set indicating a set of interchangeable encoded versions of the SDR video component,
wherein the adaptation set element includes a role element indicating that the adaptation set is an enhancement layer for providing an HDR service, and
wherein the representation element includes information indicating that the representation has a dependency relationship with the SDR representation.

5. The method according to claim 1, wherein the segments correspond to standard dynamic range, SDR, segments constituting an SDR representation indicating an encoded version of an SDR video component,
wherein the MPD includes information for accessing the SDR segments and includes an SDR adaptation set element describing an SDR adaptation set indicating a set of interchangeable encoded versions of the SDR video component, and
wherein the representation element includes information indicating that the representation has a reference relationship with the SDR representation and includes information indicating that the reference relationship is a relationship that the representation refers to the SDR representation as an enhancement layer for providing an HDR service.

6. The method according to claim 1,
wherein the segments correspond to standard dynamic range, SDR, segments constituting an SDR representation indicating an encoded version of an SDR video component,
wherein the MPD includes information for accessing the SDR segments and the adaptation set element includes an SDR representation element describing the SDR representation, and
wherein the representation element includes information indicating that the representation has a dependency relationship with the SDR representation and includes another essential property element indicating that the representation is an enhancement layer for providing an HDR service.

7. A method of receiving a media content, the method comprising:
receiving segments including a high dynamic range, HDR, video component and a media presentation description, MPD, including information for accessing the segments; and
parsing the MPD and the segments,
wherein the MPD includes an adaptation set element describing an adaptation set indicating a set of interchangeable encoded versions of the HDR video component,
wherein the adaptation set element includes a representation element describing a representation including the segments and an essential property element describing essential information for processing the adaptation set, and
wherein the essential property element includes matrix coefficient information used to derive a luma signal and a chroma signal from an RGB color gamut or an XYZ color gamut of the HDR video component.

8. The method according to claim 7, wherein the adaptation set element includes another essential property element including color remapping information needed to remap a color sample of the HDR video component to a color gamut different from a color gamut of the HDR video component.

9. The method according to claim 8, wherein the color remapping information includes information for identifying the color remapping information to be applied to the HDR video component and information indicating whether to apply the color remapping information to the HDR video component.

10. The method according to claim 7, wherein
the segments correspond to standard dynamic range, SDR, segments constituting an SDR representation indicating an encoded version of an SDR video component,
the MPD includes information for accessing the SDR segments and includes an SDR adaptation set element describing an SDR adaptation set indicating a set of interchangeable encoded versions of the SDR video component,
the adaptation set element includes a role element indicating that the adaptation set is an enhancement layer for providing an HDR service, and
the representation element includes information indicating that the representation has a dependency relationship with the SDR representation, and

11. The method according to claim 7, wherein
the segments correspond to standard dynamic range, SDR, segments constituting an SDR representation indicating an encoded version of an SDR video component,
the MPD includes information for accessing the SDR segments and includes an SDR adaptation set element describing an SDR adaptation set indicating a set of interchangeable encoded versions of the SDR video component, and
the representation element includes information indicating that the representation has a reference relationship with the SDR representation and includes information indicating that the reference relationship is a relationship that the representation refers to the SDR representation as an enhancement layer for providing an HDR service, and

12. The method according to claim 7, wherein
the segments correspond to standard dynamic range, SDR, segments constituting an SDR representation indicating an encoded version of an SDR video component,
the MPD includes information for accessing the SDR segments and the adaptation set element includes an SDR representation element describing the SDR representation, and
the representation element includes information indicating that the representation has a dependency relationship with the SDR representation and includes another essential property element indicating that the representation is an enhancement layer for providing an HDR service.

13. An apparatus for transmitting a media content, the apparatus comprising:
a processor configured to generate segments including a high dynamic range, HDR, video component and a media presentation description, MPD, including information for accessing the segments,
wherein the MPD includes an adaptation set element describing an adaptation set indicating a set of interchangeable encoded versions of the HDR video component,
wherein the adaptation set element includes a representation element describing a representation including the segments and an essential property element describing essential information for processing the adaptation set, and
wherein the essential property element includes matrix coefficient information used to derive a luma signal and a chroma signal from an RGB color gamut or an XYZ color gamut of the HDR video component; and
a network interface configured to transmit the segments and the MPD.

14. An apparatus for receiving a media content, the apparatus comprising:
a network interface configured to receive segments including a high dynamic range, HDR, video component and a media presentation description, MPD, including information for accessing the segments; and
a processor configured to parse the MPD and the segments,
wherein the MPD includes an adaptation set element describing an adaptation set indicating a set of interchangeable encoded versions of the HDR video component,
wherein the adaptation set element includes a representation element describing a representation including the segments and an essential property element describing essential information for processing the adaptation set, and
wherein the essential property element includes matrix coefficient information used to derive a luma signal and a chroma signal from an RGB color gamut or an XYZ color gamut of the HDR video component.

## Patentansprüche

1. Verfahren zum Übertragen eines Medieninhalts, wobei das Verfahren aufweist:
Erzeugen von Segmenten, die eine Videokomponente mit hohem Dynamikbereich, HDR, und eine Mediendarstellungsbeschreibung, MPD, die Informationen zum Zugreifen auf die Segmente enthält, umfasst,
wobei die MPD ein Anpassungssatzelement umfasst, das einen Anpassungssatz beschreibt, der einen Satz von austauschbaren kodierten Versionen der HDR-Videokomponente anzeigt,
wobei das Anpassungssatzelement ein Darstellungselement umfasst, das eine Darstellung beschreibt, welche die Segmente und ein wesentliches Eigenschaftselement umfasst, das wesentliche Informationen zur Verarbeitung des Anpassungssatzes beschreibt, und
wobei das wesentliche Eigenschaftselement Matrixkoeffizienteninformationen umfasst, die verwendet werden um ein Luma-Signal und ein Chroma-Signal aus einer RGB-Farbskala der einer XYZ-Farbskala der HDR-Videokomponente abzuleiten; und
Übertragen der Segmente und der MPD.

2. Verfahren nach Anspruch 1, wobei das Anpassungssatzelement ein anderes wesentliches Eigenschaftselement umfasst, das Farbneuabbildungsinformationen umfasst, die benötigt werden, um eine Farbprobe der HDR-Videokomponente auf eine Farbskala abzubilden, die sich von einer Farbskala der HDR-Videokomponente unterscheidet.

3. Verfahren nach Anspruch 2, wobei die Farbneuabbildungsinformationen Informationen, um die Farbneuabbildungsinformationen, die auf die HDR-Videokomponente angewendet werden sollen, zu bestimmen, und Informationen, die anzeigen, ob die Farbneuabbildungsinformationen auf die HDR-Videokomponente angewendet werden sollen, umfassen.

4. Verfahren nach Anspruch 1, wobei die Segmente Segmenten mit einem Standarddynamikbereich, SDR, entsprechen, die eine SDR-Darstellung bilden, die eine kodierte Version einer SDR-Videokomponente anzeigt,
wobei die Informationen zum Zugreifen auf die SDR-Segmente umfassen und ein SDR-Anpassungssatzelement umfassen, das einen SDR-Anpassungssatz beschreibt, der einen Satz von austauschbaren kodierten Versionen der SDR-Videokomponente anzeigt,
wobei das Anpassungssatzelement ein Rollenelement umfasst, das anzeigt, dass der Anpassungssatz eine Erweiterungsschicht ist, um einen HDR-Dienst bereitzustellen, und
wobei das Darstellungselement Informationen umfasst, die anzeigen, dass die Darstellung eine Abhängigkeitsbeziehung mit der SDR-Darstellung hat.

5. Verfahren nach Anspruch 1, wobei die Segmente Segmenten mit Standarddynamikbereich, SDR, entsprechen, welche eine SDR-Darstellung bilden, die eine kodierte Version einer SDR-Videokomponente anzeigt,
wobei die MPD Informationen umfasst, um auf die SDR-Segmente zuzugreifen, und ein SDR-Anpassungssatzelement, das einen SDR-Anpassungssatz beschreibt, der einen Satz austauschbarer kodierter Versionen der SDR-Videokomponente anzeigt, und
wobei das Darstellungselement Informationen umfasst, die anzeigen, dass die Darstellung eine Referenzbeziehung zu der SDR-Darstellung hat und Informationen umfasst, die anzeigen, dass die Referenzbeziehung eine Beziehung ist, welche die Darstellung auf die SDR-Darstellung als eine Erweiterungsschicht zur Bereitstellung eines HDR-Dienstes bezieht.

6. Verfahren nach Anspruch 1,
wobei die Segmente Segmenten mit Standarddynamikbereich, SDR, entsprechen, die eine SDR-Darstellung bilden, die eine kodierte Version einer SDR-Videokomponente anzeigt,
wobei die MPD Informationen zum Zugreifen auf die SDR-Segmente umfassen und das Anpassungssatzelement ein SDR-Darstellungselement umfasst, das die SDR-Darstellung umfasst, und
wobei das Darstellungselement Informationen umfasst, die anzeigen, dass die Darstellung eine Abhängigkeitsbeziehung mit der SDR-Darstellung hat und ein anderes wesentliches Eigenschaftselement umfasst, das anzeigt, dass die Darstellung eine Erweiterungsschicht zur Bereitstellung eines HDR-Dienstes ist.

7. Verfahren zum Empfangen eines Medieninhalts, wobei das Verfahren aufweist:
Empfangen von Segmenten, die eine Videokomponente mit hohem Dynamikbereich, HDR und eine Mediendarstellungsbeschreibung, MPD, umfassen, die Informationen zum Zugreifen auf die Segmente umfasst, und
Parsen der MPD und der Segmente,
wobei die MPD ein Anpassungssatzelement umfasst, das einen Anpassungssatz beschreibt, der einen Satz austauschbarer kodierter Versionen der HDR-Videokomponente anzeigt,
wobei das Anpassungssatzelement ein Darstellungselement umfasst, das eine Darstellung beschreibt, welche die Segmente und ein wesentliches Eigenschaftselement umfasst, das wesentliche Informationen zur Verarbeitung des Anpassungssatzes beschreibt, und
wobei das wesentliche Eigenschaftselement Matrixkoeffizienteninformationen umfasst, die verwendet werden um ein Luma-Signal und ein Chroma-Signal aus einer RGB-Farbskala der einer XYZ-Farbskala der HDR-Videokomponente abzuleiten.

8. Verfahren nach Anspruch 7, wobei das Anpassungssatzelement ein anderes wesentliches Eigenschaftselement umfasst, das Farbneuabbildungsinformationen umfasst, die benötigt werden, um eine Farbprobe der HDR-Videokomponente auf eine Farbskala abzubilden, die sich von einer Farbskala der HDR-Videokomponente unterscheidet.

9. Verfahren nach Anspruch 8, wobei die Farbneuabbildungsinformationen Informationen, um die Farbneuabbildungsinformationen, die auf die HDR-Videokomponente angewendet werden sollen, zu bestimmen, und Informationen, die anzeigen, ob die Farbneuabbildungsinformationen auf die HDR-Videokomponente angewendet werden sollen, umfassen.

10. Verfahren nach Anspruch 7, wobei
die Segmente Segmenten mit einem Standarddynamikbereich, SDR, entsprechen, die eine SDR-Darstellung bilden, die eine kodierte Version einer SDR-Videokomponente anzeigt,
wobei die Informationen zum Zugreifen auf die SDR-Segmente umfassen und ein SDR-Anpassungssatzelement umfassent, das einen SDR-Anpassungssatz beschreibt, der einen Satz von austauschbaren kodierten Versionen der SDR-Videokomponente anzeigt,
wobei das Anpassungssatzelement ein Rollenelement umfasst, das anzeigt, dass der Anpassungssatz eine Erweiterungsschicht ist, um einen HDR-Dienst bereitzustellen, und
wobei das Darstellungselement Informationen umfasst, die anzeigen, dass die Darstellung eine Abhängigkeitsbeziehung mit der SDR-Darstellung hat.

11. Verfahren nach Anspruch 7, wobei
die Segmente Segmenten mit Standarddynamikbereich, SDR, entsprechen, welche eine SDR-Darstellung bilden, die eine kodierte Version einer SDR-Videokomponente anzeigt,
die MPD Informationen umfasst, um auf die SDR-Segmente zuzugreifen, und ein SDR-Anpassungssatzelement, das einen SDR-Anpassungssatz beschreibt, der einen Satz austauschbarer kodierter Versionen der SDR-Videokomponente anzeigt, und
wobei das Darstellungselement Informationen umfasst, die anzeigen, dass die Darstellung eine Referenzbeziehung zu der SDR-Darstellung hat und Informationen umfasst, die anzeigen, dass die Referenzbeziehung eine Beziehung ist, welche die Darstellung auf die SDR-Darstellung als eine Erweiterungsschicht zur Bereitstellung eines HDR-Dienstes bezieht.

12. Verfahren nach Anspruch 7, wobei
die Segmente Segmenten mit Standarddynamikbereich, SDR, entsprechen, die eine SDR-Darstellung bilden, die eine kodierte Version einer SDR-Videokomponente anzeigt,
die MPD Informationen zum Zugreifen auf die SDR-Segmente umfassen und das Anpassungssatzelement ein SDR-Darstellungselement umfasst, das die SDR-Darstellung umfasst, und
das Darstellungselement Informationen umfasst, die anzeigen, dass die Darstellung eine Abhängigkeitsbeziehung mit der SDR-Darstellung hat und ein anderes wesentliches Eigenschaftselement umfasst, das anzeigt, dass die Darstellung eine Erweiterungsschicht zur Bereitstellung eines HDR-Dienstes ist.

13. Vorrichtung zum Senden eines Medieninhalts, wobei die Vorrichtung aufweist:
einen Prozessor, der konfiguriert ist, um Segmente zu erzeugen, die eine Videokomponente mit hohem Dynamikbereich, HDR, und eine Mediendarstellungsbeschreibung, MPD, die Informationen zum Zugreifen auf die Segmente enthält, umfasst,
wobei die MPD ein Anpassungssatzelement umfasst, das einen Anpassungssatz beschreibt, der einen Satz von austauschbaren kodierten Versionen der HDR-Videokomponente anzeigt,
wobei das Anpassungssatzelement ein Darstellungselement umfasst, das eine Darstellung beschreibt, welche die Segmente und ein wesentliches Eigenschaftselement umfasst, das wesentliche Informationen zur Verarbeitung des Anpassungssatzes beschreibt, und
wobei das wesentliche Eigenschaftselement Matrixkoeffizienteninformationen umfasst, die verwendet werden um ein Luma-Signal und ein Chroma-Signal aus einer RGB-Farbskala der einer XYZ-Farbskala der HDR-Videokomponente abzuleiten; und
eine Netzwerkschnittstelle, die konfiguriert ist, um die Segmente und die MPD zu übertragen.

14. Vorrichtung zum Empfangen eines Medieninhalts, wobei die Vorrichtung aufweist:
eine Netzwerkschnittstelle, die konfiguriert ist, um Segmente zu empfangen, die eine Videokomponente mit hohem Dynamikbereich, HDR und eine Mediendarstellungsbeschreibung, MPD, umfassen, die Informationen zum Zugreifen auf die Segmente umfasst, und
einen Prozessor, der konfiguriert ist, um die MPD und die Segmente zu parsen,
wobei die MPD ein Anpassungssatzelement umfasst, das einen Anpassungssatz beschreibt, der einen Satz austauschbarer kodierter Versionen der HDR-Videokomponente anzeigt,
wobei das Anpassungssatzelement ein Darstellungselement umfasst, das eine Darstellung beschreibt, welche die Segmente und ein wesentliches Eigenschaftselement umfasst, das wesentliche Informationen zur Verarbeitung des Anpassungssatzes beschreibt, und
wobei das wesentliche Eigenschaftselement Matrixkoeffizienteninformationen umfasst, die verwendet werden um ein Luma-Signal und ein Chroma-Signal aus einer RGB-Farbskala der einer XYZ-Farbskala der HDR-Videokomponente abzuleiten.

## Revendications

1. Procédé d'émission d'un contenu multimédia, le procédé comprenant :
la génération de segments incluant une composante vidéo à grande gamme dynamique, HDR, et une description de présentation multimédia, MPD, incluant des informations pour accéder aux segments,
dans lequel la MPD inclut un élément d'ensemble d'adaptation décrivant un ensemble d'adaptation indiquant un ensemble de versions codées interchangeables de la composante vidéo HDR,
dans lequel l'élément d'ensemble d'adaptation inclut un élément de représentation décrivant une représentation incluant les segments et un élément de propriété essentielle décrivant des informations essentielles pour traiter l'ensemble d'adaptation, et
dans lequel l'élément de propriété essentielle inclut des informations de coefficient de matrice utilisées pour dériver un signal de luminance et un signal de chrominance d'une gamme de couleurs RGB ou d'une gamme de couleurs XYZ de la composante vidéo HDR ; et
l'émission des segments et de la MPD.

2. Procédé selon la revendication 1, dans lequel l'élément d'ensemble d'adaptation inclut un autre élément de propriété essentielle incluant des informations de remappage de couleurs nécessaires pour remapper un échantillon de couleur de la composante vidéo HDR dans une gamme de couleurs différente d'une gamme de couleurs de la composante vidéo HDR.

3. Procédé selon la revendication 2, dans lequel les informations de remappage de couleurs incluent des informations pour identifier les informations de remappage de couleurs à appliquer à la composante vidéo HDR et des informations indiquant s'il faut appliquer les informations de remappage de couleurs à la composante vidéo HDR.

4. Procédé selon la revendication 1, dans lequel les segments correspondent à des segments de gamme dynamique standard, SDR, constituant une représentation SDR indiquant une version codée d'une composante vidéo SDR,
dans lequel la MPD inclut des informations pour accéder aux segments SDR et inclut un élément d'ensemble d'adaptation SDR décrivant un ensemble d'adaptation SDR indiquant un ensemble de versions codées interchangeables de la composante vidéo SDR,
dans lequel l'élément d'ensemble d'adaptation inclut un élément de rôle indiquant que l'ensemble d'adaptation est une couche d'amélioration pour fournir un service HDR, et
dans lequel l'élément de représentation inclut des informations indiquant que la représentation a une relation de dépendance avec la représentation SDR.

5. Procédé selon la revendication 1, dans lequel les segments correspondent à des segments de gamme dynamique standard, SDR, constituant une représentation SDR indiquant une version codée d'une composante vidéo SDR,
dans lequel la MPD inclut des informations pour accéder aux segments SDR et inclut un élément d'ensemble d'adaptation SDR décrivant un ensemble d'adaptation SDR indiquant un ensemble de versions codées interchangeables de la composante vidéo SDR, et
dans lequel l'élément de représentation inclut des informations indiquant que la représentation a une relation de référence avec la représentation SDR et inclut des informations indiquant que la relation de référence est une relation selon laquelle la représentation fait référence à la représentation SDR en tant qu'une couche d'amélioration pour fournir un service HDR.

6. Procédé selon la revendication 1,
dans lequel les segments correspondent à des segments de gamme dynamique standard, SDR, constituant une représentation SDR indiquant une version codée d'une composante vidéo SDR,
dans lequel la MPD inclut des informations pour accéder aux segments SDR et l'élément d'ensemble d'adaptation inclut un élément de représentation SDR décrivant la représentation SDR, et
dans lequel l'élément de représentation inclut des informations indiquant que la représentation a une relation de dépendance avec la représentation SDR et inclut un autre élément de propriété essentielle indiquant que la représentation est une couche d'amélioration pour fournir un service HDR.

7. Procédé de réception d'un contenu multimédia, le procédé comprenant :
la réception de segments incluant une composante vidéo à grande gamme dynamique, HDR, et une description de présentation multimédia, MPD, incluant des informations pour accéder aux segments ; et
l'analyse syntaxique de la MPD et des segments,
dans lequel la MPD inclut un élément d'ensemble d'adaptation décrivant un ensemble d'adaptation indiquant un ensemble de versions codées interchangeables de la composante vidéo HDR,
dans lequel l'élément d'ensemble d'adaptation inclut un élément de représentation décrivant une représentation incluant les segments et un élément de propriété essentielle décrivant des informations essentielles pour traiter l'ensemble d'adaptation, et
dans lequel l'élément de propriété essentielle inclut des informations de coefficient de matrice utilisées pour dériver un signal de luminance et un signal de chrominance d'une gamme de couleurs RGB ou d'une gamme de couleurs XYZ de la composante vidéo HDR.

8. Procédé selon la revendication 7, dans lequel l'élément d'ensemble d'adaptation inclut un autre élément de propriété essentielle incluant des informations de remappage de couleurs nécessaires pour remapper un échantillon de couleur de la composante vidéo HDR dans une gamme de couleurs différente d'une gamme de couleurs de la composante vidéo HDR.

9. Procédé selon la revendication 8, dans lequel les informations de remappage de couleurs incluent des informations pour identifier les informations de remappage de couleurs à appliquer à la composante vidéo HDR et des informations indiquant s'il faut appliquer les informations de remappage de couleurs à la composante vidéo HDR.

10. Procédé selon la revendication 7, dans lequel
les segments correspondent à des segments de gamme dynamique standard, SDR, constituant une représentation SDR indiquant une version codée d'une composante vidéo SDR,
la MPD inclut des informations pour accéder aux segments SDR et inclut un élément d'ensemble d'adaptation SDR décrivant un ensemble d'adaptation SDR indiquant un ensemble de versions codées interchangeables de la composante vidéo SDR,
l'élément d'ensemble d'adaptation inclut un élément de rôle indiquant que l'ensemble d'adaptation est une couche d'amélioration pour fournir un service HDR, et
l'élément de représentation inclut des informations indiquant que la représentation a une relation de dépendance avec la représentation SDR.

11. Procédé selon la revendication 7, dans lequel
les segments correspondent à des segments de gamme dynamique standard, SDR, constituant une représentation SDR indiquant une version codée d'une composante vidéo SDR,
la MPD inclut des informations pour accéder aux segments SDR et inclut un élément d'ensemble d'adaptation SDR décrivant un ensemble d'adaptation SDR indiquant un ensemble de versions codées interchangeables de la composante vidéo SDR, et
l'élément de représentation inclut des informations indiquant que la représentation a une relation de référence avec la représentation SDR et inclut des informations indiquant que la relation de référence est une relation selon laquelle la représentation fait référence à la représentation SDR en tant qu'une couche d'amélioration pour fournir un service HDR.

12. Procédé selon la revendication 7, dans lequel
les segments correspondent à des segments de gamme dynamique standard, SDR, constituant une représentation SDR indiquant une version codée d'une composante vidéo SDR,
la MPD inclut des informations pour accéder aux segments SDR et l'élément d'ensemble d'adaptation inclut un élément de représentation SDR décrivant la représentation SDR, et
l'élément de représentation inclut des informations indiquant que la représentation a une relation de dépendance avec la représentation SDR et inclut un autre élément de propriété essentielle indiquant que la représentation est une couche d'amélioration pour fournir un service HDR.

13. Appareil d'émission d'un contenu multimédia, l'appareil comprenant :
un processeur configuré pour générer des segments incluant une composante vidéo à grande gamme dynamique, HDR, et une description de présentation multimédia, MPD, incluant des informations pour accéder aux segments,
dans lequel la MPD inclut un élément d'ensemble d'adaptation décrivant un ensemble d'adaptation indiquant un ensemble de versions codées interchangeables de la composante vidéo HDR,
dans lequel l'élément d'ensemble d'adaptation inclut un élément de représentation décrivant une représentation incluant les segments et un élément de propriété essentielle décrivant des informations essentielles pour traiter l'ensemble d'adaptation, et
dans lequel l'élément de propriété essentielle inclut des informations de coefficient de matrice utilisées pour dériver un signal de luminance et un signal de chrominance d'une gamme de couleurs RGB ou d'une gamme de couleurs XYZ de la composante vidéo HDR ; et
une interface de réseau configurée pour émettre les segments et la MPD.

14. Appareil de réception d'un contenu multimédia, l'appareil comprenant :
une interface de réseau configurée pour recevoir des segments incluant une composante vidéo à grande gamme dynamique, HDR, et une description de présentation multimédia, MPD, incluant des informations pour accéder aux segments ; et
un processeur configuré pour réaliser une analyse syntaxique de la MPD et des segments,
dans lequel la MPD inclut un élément d'ensemble d'adaptation décrivant un ensemble d'adaptation indiquant un ensemble de versions codées interchangeables de la composante vidéo HDR,
dans lequel l'élément d'ensemble d'adaptation inclut un élément de représentation décrivant une représentation incluant les segments et un élément de propriété essentielle décrivant des informations essentielles pour traiter l'ensemble d'adaptation, et
dans lequel l'élément de propriété essentielle inclut des informations de coefficient de matrice utilisées pour dériver un signal de luminance et un signal de chrominance d'une gamme de couleurs RGB ou d'une gamme de couleurs XYZ de la composante vidéo HDR.
